# EUROPÄISCHE PATENTSCHRIFT

(11) **EP 4 341 651 B1**
(45) Veröffentlichungstag und Bekanntmachung des Hinweises auf die Patenterteilung: **19.02.2025**
(21) Anmeldenummer: 22724439.9
(22) Anmeldetag: 20.04.2022
(51) Int. Cl.: G01F 1/84, G01N 9/00, G01N 11/16, G01F 25/10

(54) **VIBRONISCHES MESSSYSTEM**
VIBRONIC MEASUREMENT SYSTEM
SYSTÈME DE MESURE VIBRONIQUE

(30) Priorität: 21.05.2021 DE 102021113360
(43) Veröffentlichungstag der Anmeldung: 27.03.2024
(73) Patentinhaber: Endress+Hauser Flowtec AG, 4153 Reinach (CH)
(72) Erfinder: KIRST, Michael, 79540 Lörrach (DE)
(74) Vertreter: Hahn, Christian
(86) Internationale Anmeldenummer: PCT/EP2022/060399
(87) Internationale Veröffentlichungsnummer: WO 2022/242975

(56) Entgegenhaltungen:
- WO-A1-2010/103075
- WO-A1-2017/019024
- DE-A1- 102009 055 069

## Beschreibung

Die Erfindung betrifft ein mittels eines Meßwandler vom Vibrationstyp und einer daran elektrisch angeschlossenen Meßsystem-Elektronik gebildetes vibronisches Meßsystem, insb. ein Coriolis-Massedurchfluß-Meßgerät oder Coriolis-Massedurchfluß-/Dichte-Meßgerät, zum Messen und/oder Überwachen wenigstens einer Meßgröße eines strömenden Meßstoffs.

Ein gattungsgemäßes vibronisches Meßsystem ist beispielsweise in der DE-A 10 2009 055 069, der US-A 2006/0266129, der US-A 2007/0113678, der US-A 2010/0011882, der US-A 2012/0123705, der US-A 2017/0356777, der US-B 63 11 136, der US-A 56 02 345, der US-A 59 26 096, der US-B 64 57 372, der WO-A 2009/136943, der WO-A 2019/017891, der WO-A 2019/081169, der WO-A 2019/081170, der WO-A 2020/126285, der WO-A 87/06691, der WO-A 96/05484, der WO-A 96/08697, der WO-A 97/26508, der WO-A 99/39164 oder der eigenen nicht vorveröffentlichten internationalen Patentanmeldung PCT/EP2020/084119 beschrieben. Jedes der vorbezeichneten Meßsysteme weist jeweils einen Meßwandler mit einer Rohranordnung zum Führen des strömenden Fluids, mit einer Erregeranordnung zum Wandeln elektrischer Leistung in dem Anregen und Aufrechterhalten erzwungener mechanischer Schwingungen der Rohranordnung dienliche mechanische Leistung und mit einer Sensoranordnung zum Erfassen von mechanischen Schwingungen der Rohranordnung und zum Bereitstellen von jeweils Schwingungsbewegungen der Rohranordnung repräsentierenden Schwingungssignalen sowie eine mit dem Meßwandler, nämlich sowohl mit dessen Erregeranordnung als auch mit dessen Sensoranordnung elektrisch gekoppelte Meß- und Betriebselektronik zum Ansteuern des Meßwandlers und zum Auswerten von vom Meßwandler gelieferten Schwingungssignalen auf.

In der US-A 2012/0123705, der US-A 56 02 345, der US-A 59 26 096, der WO-A 2009/136943, der WO-A 87/06691, der WO-A 96/05484, der WO-A 96/08697, der WO-A 97/26508, der WO-A 99/39164 oder der WO-A 2019/017891 gezeigte Rohranordnungen weisen jeweils einen - hier als Leitungsverzweigung dienlichen bzw. einlaßseitigen - ersten Strömungsteiler mit genau zwei Strömungsöffnungen, einen dem ersten Strömungsteiler baugleichen - hier als Leitungsvereinigung dienlichen bzw. auslaßseitigen - zweiten Strömungsteiler mit genau zwei Strömungsöffnungen sowie zwei Rohre, nämlich ein erstes Rohr sowie ein zweites Rohr auf, während in der DE-A 10 2009 055 069, der WO-A 96/08697, der US-A 2017/0356777, der WO-A 2019/081169, der WO-A 2019/081170, der WO-A 2020/126285 oder der erwähnten Patentanmeldung PCT/EP2020/084119 gezeigte Rohranordnungen jeweils einen - hier als Leitungsverzweigung dienlichen bzw. einlaßseitigen - ersten Strömungsteiler mit genau vier Strömungsöffnungen, einen dem ersten Strömungsteiler baugleichen - hier als Leitungsvereinigung dienlichen bzw. auslaßseitigen - zweiten Strömungsteiler mit genau vier Strömungsöffnungen sowie vier Rohre, nämlich ein erstes Rohr, ein zweites Rohr, ein drittes Rohr sowie ein viertes Rohr aufweisen. Jedes der Rohre der Rohranordnungen erstreckt sich jeweils von einem jeweiligen ersten Ende des jeweiligen Rohrs bis zu einem jeweiligen zweiten Ende nämlichen Rohrs mit einer jeweiligen Rohrlänge und weist jeweils ein von einer metallischen Rohrwandung umschlossenes, sich jeweils vom jeweiligen ersten Ende des jeweiligen Rohrs bis zum jeweiligen zweiten Ende nämlichen Rohrs erstreckenden Lumen auf. Zudem ist jedes der Rohre jeweils an jeden der ersten und zweiten Strömungsteiler angeschlossen, derart, daß das erste Rohr mit dessen ersten Ende in eine erste Strömungsöffnung des ersten Strömungsteilers und mit dessen zweiten Ende in eine erste Strömungsöffnung des zweiten Strömungsteilers, das zweite Rohr mit dessen ersten Ende in eine zweite Strömungsöffnung des ersten Strömungsteilers und mit dessen zweiten Ende in eine zweite Strömungsöffnung des zweiten Strömungsteilers münden bzw. daß das erste Rohr mit dessen ersten Ende in eine erste Strömungsöffnung des ersten Strömungsteilers und mit dessen zweiten Ende in eine erste Strömungsöffnung des zweiten Strömungsteilers, das zweite Rohr mit dessen ersten Ende in eine zweite Strömungsöffnung des ersten Strömungsteilers und mit dessen zweiten Ende in eine zweite Strömungsöffnung des zweiten Strömungsteilers, das dritte Rohr mit dessen ersten Ende in eine dritte Strömungsöffnung des ersten Strömungsteilers und mit dessen zweiten Ende in eine dritte Strömungsöffnung des zweiten Strömungsteilers und das vierte Rohr mit dessen ersten Ende in eine vierte Strömungsöffnung des ersten Strömungsteilers und mit dessen zweiten Ende in eine vierte Strömungsöffnung des zweiten Strömungsteilers münden. Darüberhinaus ist jedes der Rohre jeder der Rohranordnungen jeweils auch eingerichtet, von Meßstoff durchströmt und währenddessen vibrieren gelassen zu werden.

Bei den in der DE-A 10 2009 055 069, der US-A 56 02 345, der WO-A 2009/136943, der WO-A 96/08697, der WO-A 97/26508, der WO-A 99/39164, der WO-A 2019/017891 oder der PCT/EP2020/084119 gezeigten Meßsystemen weist jede der Erregeranordnungen zudem jeweils zwei elektrodynamische Schwingungserreger auf, von denen ein erster Schwingungserreger mechanisch mit dem ersten Rohr sowie elektrisch mit der Meß- und Betriebselektronik verbunden ist und ein zweiter Schwingungserreger mechanisch mit dem zweiten Rohr sowie elektrisch mit der Meß_ und Betriebselektronik verbunden ist. Jeder der ersten und zweiten Schwingungserreger ist zudem jeweils eingerichtet, elektrische in dem Anregen von Schwingungen der jeweiligen Rohre dienliche mechanische Leistung zu wandeln bzw. an einem jeweiligen, mittels des jeweiligen Schwingungserregers am damit jeweils mechanisch verbundenen Rohr gebildeten Angriffspunkt eine zeitlich veränderliche Antriebskraft in das jeweilige Rohr einzuleiten.

Die Meßsystem-Elektronik wiederum ist dafür jeweils auch eingerichtet, die jewiligen Schwingunsgerreger zu bestromen, nämlich elektrische Treibersignale zu generieren und in die Schwingungserreger einzuspeisen, derart, daß die ersten und zweiten Rohre bzw. die ersten, zweiten, dritten und vierten Rohre zumindest anteilig Nutzschwingungen, nämlich erzwungene mechanische Schwingungen mit wenigstens einer oder mehreren Nutzfrequenzen, nämlich durch die Treibersignale vorgegebenen, beispielsweise auch einer bzw. mehreren Resonanzfrequenzen der Rohranordnung entsprechenden Schwingungsfrequenzen ausführen, wobei die Nutzschwingungen u.a. auch geeignet sind, im durch Rohre jeweils hindurchströmenden Meßstoff vom Massenstrom abhängige Corioliskräfte zu bewirken. Zum Erfassen von Schwingungen der Rohranordnung weist die Sensoranordnung vier voneinander beabstandete, beispielsweise elektrodynamische, Schwingungssensoren auf, von denen ein erster Schwingungssensor und ein zweiter Schwingungssensor mechanisch jeweils mit dem ersten Rohr bzw. mit dem ersten und dritten Rohr und ein dritter Schwingungssensor und ein vierter Schwingungssensor mechanisch jeweils mit dem zweiten Rohr bzw. mit dem zweiten und vierten Rohr verbunden sind. Jeder der Schwingungssensoren ist zudem jeweils eingerichtet, Schwingungsbewegungen der damit mechanische jeweils verbundenen ersten, zweiten, dritten bzw. vierten Rohre zu erfassen und ein nämliche Schwingungsbewegungen repräsentierendes erstes, zweites, drittes bzw. viertes Schwingungssignal bereitzustellen und an die Meßsystem-Elektronik zu übermitteln.

Ferner umfaßt jedes der vorbezeichneten Meßsystem auch ein als ein Wandler-Schutzgehäuse ausgebildetes Trägergerüst, das an den Strömungsteilern der Rohranordnung befestigt ist. Bei in der WO-A 96/08697, WO-A 2019/017891 oder der PCT/EP2020/084119 gezeigten Meßwandlern sind das Trägergerüst und die Rohranordnung im besonderen wieder lösbar miteinander verbunden, beispielsweise um einen Austausch einer defekten oder verschlissenen Rohranornung gegen eine intakte Rohranordnung vor Ort zu ermöglichen.

Wie u.a. in den eingangs erwähnten der US-A 2012/0123705, der US-A 2006/0266129 bzw. der WO-A 99/39164 oder auch der PCT/EP2020/084119 erörtert, können Meßwandler vom Vibrationstyp, mithin die damit gebildeten Meßsysteme während ihrer, ggf. auch mehrere Jahre umfassenden, Laufzeit einer Vielzahl von Belastungen ausgesetzt sein, die erhebliche Abweichungen des Meßsystems von einem dafür vorab, etwa bei einer Kalibrierung im Herstellerwerk und/oder bei einer Inbetriebnahme des Meßsystems, ermittelten Referenzzustand bewirken und damit einhergehend die Meßgenauigkeit des Meßsystems, mit der dieses die zu erfassenden Mediumsparameter in die entsprechenden Meßwerte schlußendlich abbildet, signifikant herabsetzen können. Als Beispiele für solche, im Ergebnis ein Schwingungsverhalten des wenigstens einen Meßrohrs insgesamt irreversible verändernde Belastungen, seien sie nun einmalig oder mehrfach wiederkehrend bzw. dauerhaft oder nur kurzzeitig auftretend, können exemplarisch Übertemperaturen, hohe Temperaturshocks oder andere thermisch bedingte Überbelastungen des wenigstens einen Meßrohrs, hohe Druckstöße im Medium, seitens der Prozeßleitung auf den Meßwandler ausgeübte zu hohe Einspannkräfte und/oder Rüttelkräfte und damit einhergehende Rißbildung und/oder plastische Deformation im wenigstens einen Meßrohr, seitens des im Meßwandler geführten Mediums, beispielsweise durch Korrosion und/oder Abrasion, bewirkte Erodierung des wenigstens einen Meßrohrs von innen heraus, mithin eine Reduzierung von dessen Wandstärke, die Bildung von Belag auf der mediumsberührenden Innenseite des wenigstens einen Meßrohrs, Materialermüdung oder andere Abnutzungserscheinungen am wenigstens einen Meßrohr zu nennen. Darüberhinaus können während der Laufzeit des Meßsystems auch der wenigstens einen Schwingungserreger wie auch jeder der Schwingungssensoren, etwa durch thermisch bedingte Überlastung bzw. Alterung, für die Meßgenauigkeit relevanten Veränderungen unterworfen sein, etwa derart, daß im Ergebnis auch eine elektrische Impedanz des Meßwandlers verändert ist. Im Ergebnis solcher Belastungen variiert schlußendlich stets eine dem Meßwandler immanente Meßwandler-Übertragungsfunktion, gemäß der der vom wenigstens einen Treibersignal angesteuerte Meßwandler letztlich den jeweils zu erfassenden Mediumsparameter in die jeweiligen Schwingungssignale konvertiert, in einer zunächst nicht ohne weiteres erkenn- oder vorhersehbaren, jedoch gelegentlich hinsichtlich der angestrebten hohen Meßgenauigkeit nicht mehr zu vernachlässigenden Weise, arbeitet also das Meßsystem insgesamt fehlerhaft. Zudem müssen infolge solcher, nicht zuletzt auch die strukturelle Integrität des Meßwandlers insgesamt beeinflussende Überlastungen, Beeinträchtigungen der Funktionstüchtigkeit des Meßsystems oder unter Umständen sogar auch zu Leckage oder Explosion führende Zerstörungen des Meßwandlers besorgt werden. Solche auch die Betriebssicherheit von Meßsystemen der in Rede stehenden Art betreffenden Veränderungen gegenüber dem Referenzzustand, können, nicht zuletzt im Falle toxischer und/oder leicht entflammbarer Medien bzw. im Falle von unter hohem Druck stehenden Gasen, durchaus auch katastrophale Folgen für die gesamte Prozeßanlage sowie sich darin aufhaltende Personen haben. Dem Rechnung tragend werden Meßsysteme der in Rede stehenden Art üblicherweise wiederkehrend entsprechenden Nachprüfungen unterzogen, etwa im Zuge von mit der vorausschauenden Instandhaltung verbundenen Maßnahmen, und bei Bedarf, etwa bei diagnostizierte erhöhter Meßungenauigkeit, gelegentlich entsprechend nachkalibriert oder ausgetauscht.

Zwecks möglichst frühzeitiger Erkennung einer ein vorgegebenes Toleranzmaß überschreitenden Abweichung des Meßsystems von einem dafür vorab ermittelten oder, etwa im Fall einer nachträglich bzw., wie u.a. in der WO-A 2019/017891 vorgeschlagen, vor Ort einzusetzenden Rohranordnung, einem dafür vorgebenen Referenzzustand, mithin einer Diagnose von seitens des Meßwandlers bedingten Fehlern des Meßsystems, und der damit einhergehend sich anbahnenden signifikanten Verringerung der Meßgenauigkeit bzw. der Betriebssicherheit von Meßsystemen der in Rede stehenden Art ist beispielsweise in der US-A 2012/0123705, der US-A 2010/0011882, der US-A 2007/0113678, WO-A 96/05484, WO-A 99/39164 oder der US-A 59 26 096 vorgeschlagen, vorgenannte Veränderungen von solchen Meßsystemen anhand von Vergleichen aktueller, nämlich im Betrieb ermittelter, Schwingungsantworten ausgewählter Komponenten des Meßwandlers bzw. nämliche Schwingungsantworten repräsentierender Systemparameter, beispielsweise eine Meßrohrsteifigkeit, eine Vielzahl von, ggf. auch frequenzselektiv erfaßten, Dämpfungsfaktoren, Verhältnisse von mechanischen Eigen- bzw. Resonanzfrequenzen des wenigstens Meßrohrs oder andere, vorbestimmte Meßwandler-Übertragungsfunktionen beschreibende, mithin das Meßsystem charakterisierende Systemparameter etc., auf ausgewählte - breitbandige bzw. frequenzselektive - Schwingungsanregungen, wie etwa eine Schlag oder eine kontinuierliche, ggf. auch multi-modale, Schwingungsanregung einer bzw. mehrerer der Eigenfrequenzen der Rohre, mit dafür zuvor im Referenzzustand des Meßsystems passend ermittelten

Meßwandler-Übertragungsfunktionen (Systemfunktionen des Meßwandlers) bzw. diese repräsentierende Referenz-Systemparameter zu vergleichen, um beispielsweise bei Überschreiten eines entsprechend vorgegebenen, ein noch akzeptables Toleranzmaß repräsentierenden, Schwellenwerts, mithin bei Diagnostizieren eines Fehlers, eine dies entsprechend signalisierende Systemstatus- bzw. Störungsmeldung, beispielsweise einen Alarm, zu generieren.

Ein Aufgabe der Erfindung besteht daher darin, vibronische Meßsysteme der vorgenannten Art dahingehend zu verbessern, daß damit - nicht zuletzt aber auch mit den bereits konventionellen, mithin etablierten Meßsystemen der in Rede stehenden Art "bordeigenen" Schwingungserregern und -sensoren - das Auftreten von allfälligen Störungen des Meßsystem, wie etwa die Meßgenauigkeit und/oder die Betriebssicherheit des Meßsystems herabsetzenden Verschleiß- bzw. Alterungserscheinungen des jeweiligen Meßwandlers und/oder einen fehlerhaften Zusammen- bzw. Einbau des Meßwandlers, möglichst frühzeitig und zuverlässig detektiert, ggf. auch signalisiert werden können; dies im besonderen auch weitgehend unabhängig vom im Meßwandler strömenden Medium sowie unter weitgehender, ggf. auch ausschließlicher Verwendung der für solche Meßsystemen, nicht zuletzt auch für die darin bis anhin verbauten Meßwandler, bewährten Designs wie auch unter gleichermaßen weitgehender Beibehaltung bewährten Technologien und Architekturen bereits etablierter Meß- und Betriebselektroniken.

Zur Lösung der Aufgabe besteht die Erfindung in einem vibronisches Meßsystem, insb. Coriolis-Massedurchfluß-Meßgerät oder Coriolis-Massedurchfluß-/Dichte-Meßgerät, zum Messen und/oder Überwachen wenigstens eines, insb. zeitlich veränderlichen, Strömungsparameters, insb. eines Massenstrome, eines Volumenstroms und/oder einer Strömungsgeschwindigkeit, und/oder zum Messen und/oder Überwachen wenigstens eines, insb. zeitlich veränderlichen, Stoffparameters, insb. einer Dichte und/oder einer Viskosität, eines strömenden Meßstoffs, insb. eines Gases, einer Flüssigkeit oder einer Dispersion, gemäß Anspruch 1.

Das, beispielsweise als In-Line-Meßgerät und/oder Meßgerät in Kompaktbauweise ausgebildete, Meßsystem umfaßt:
- einen Meßwandler mit einer Rohranordnung zum Führen des strömenden Meßstoffs, mit einer Erregeranordnung zum Wandeln elektrischer Leistung in dem Anregen und Aufrechterhalten erzwungener mechanischer Schwingungen der Rohranordnung dienliche mechanische Leistung und mit einer Sensoranordnung zum Erfassen von mechanischen Schwingungen der Rohranordnung und zum Bereitstellen von jeweils Schwingungsbewegungen der Rohranordnung repräsentierenden Schwingungssignalen, sowie eine mit dem Meßwandler, nämlich sowohl mit dessen Erregeranordnung als auch mit dessen Sensoranordnung, beispielsweise mittels elektrischer Verbindungsleitungen, elektrisch gekoppelte, beispielsweise mittels wenigstens eines Mikroprozessors gebildete und/oder in Elektronik-Schutzgehäuse angeordnete, Meßsystem-Elektronik zum Ansteuern des Meßwandlers und zum Auswerten von vom Meßwandler gelieferten Schwingungssignalen.

Die Rohranordnung weist einen, beispielsweise als Leitungsverzweigung dienlichen und/oder einlaßseitigen, ersten Strömungsteiler mit wenigstens zwei Strömungsöffnungen, einen, beispielsweise dem ersten Strömungsteiler baugleichen und/oder als Leitungsvereinigung dienlichen und/oder auslaßseitigen, zweiten Strömungsteiler mit wenigstens zwei Strömungsöffnungen sowie ein, beispielsweise zumindest abschnittsweise gekrümmtes und/oder zumindest abschnittsweise gerades, erstes Rohr und ein, beispielsweise zumindest abschnittsweise gekrümmtes und/oder zumindest abschnittsweise gerades und/oder zum ersten Rohr baugleiches und/oder zum ersten Rohr zumindest abschnittsweise paralleles, zweites Rohr auf. Jedes der ersten und zweiten Rohre der Rohranordnung erstreckt sich jeweils von einem jeweiligen ersten Ende des jeweiligen Rohrs bis zu einem jeweiligen zweiten Ende nämlichen Rohrs mit einer jeweiligen Rohrlänge und weist jeweils ein von einer, beispielsweise metallischen, Rohrwandung umschlossenes, sich jeweils vom jeweiligen ersten Ende des jeweiligen Rohrs bis zum jeweiligen zweiten Ende nämlichen Rohrs erstreckenden Lumen auf, wobei jedes der ersten und zweiten Rohre der Rohranordnung jeweils an jeden der ersten und zweiten Strömungsteiler angeschlossen ist, derart, daß das erste Rohr mit dessen ersten Ende in eine erste Strömungsöffnung des ersten Strömungsteilers und mit dessen zweiten Ende in eine erste Strömungsöffnung des zweiten Strömungsteilers und das zweite Rohr mit dessen ersten Ende in eine zweite Strömungsöffnung des ersten Strömungsteilers und mit dessen zweiten Ende in eine zweite Strömungsöffnung des zweiten Strömungsteilers mündet, und wobei jedes der ersten und zweiten Rohre der Rohranordnung jeweils eingerichtet ist, von Meßstoff durchströmt und währenddessen vibrieren gelassen zu werden. Die ersten und zweiten Rohre der Rohranordnung sind so zumindest über die ersten und zweiten Strömungsteiler miteinander mechanisch gekoppelt, derart, daß erzwungene mechanische Schwingungen des ersten Rohrs damit gekoppelte mechanische Schwingungen des zweiten Rohrs und erzwungene mechanische Schwingungen des zweiten Rohrs damit gekoppelte mechanische Schwingungen des ersten Rohrs bewirken. Die Erregeranordnung weist zwei, beispielsweise elektrodynamische und/oder baugleiche, Schwingungserreger auf, von denen ein erster Schwingungserreger mechanisch mit dem ersten Rohr verbunden, beispielsweise mittig am ersten Rohr positioniert, und ein zweiter Schwingungserreger mechanisch mit dem zweiten Rohr verbunden, beispielsweise mittig am zweiten Rohr positioniert, ist, und von denen jeder jeweils eingerichtet ist, elektrische Leistung mit einem zeitlich veränderlichen elektrischen Strom in mechanische Leistung zu wandeln, insb. derart, daß an einem jeweiligen, mittels des jeweiligen Schwingungserregers am damit jeweils mechanisch verbundenen Rohr gebildeten Angriffspunkt eine zeitlich veränderliche Antriebskraft auf das erste bzw. zweite Rohr wirkt. Die Sensoranordnung weist wenigstens vier, beispielsweise elektrodynamische und/oder baugleiche und/oder voneinander beabstandete, Schwingungssensoren auf, von denen ein erster Schwingungssensor und ein zweiter Schwingungssensor voneinander beabstandet, beispielsweise symmetrisch zum ersten Schwingungserreger, am ersten Rohr positioniert, beispielsweise nämlich zumindest anteilig mit dem ersten Rohr mechanisch verbunden, und ein dritter Schwingungssensor und ein vierter Schwingungssensor voneinander beabstandet, beispielsweise symmetrisch zum zweiten Schwingungserreger, am zweiten Rohr positioniert, beispielsweise nämlich zumindest anteilig mit dem zweiten Rohr mechanisch verbunden, sind. Jeder der ersten und zweiten Schwingungssensoren ist jeweils eingerichtet, Schwingungsbewegungen des ersten Rohrs zu erfassen und in ein nämliche Schwingungsbewegungen repräsentierendes, beispielsweise elektrisches oder optisches, erstes bzw. zweites Schwingungssignal zu wandeln, beispielsweise derart, daß jedes der ersten und zweiten Schwingungssignale jeweils eine oder mehrere sinusförmige Signalkomponenten mit jeweils einer einer Schwingungsfrequenz von Schwingungsbewegungen des ersten Rohrs entsprechenden Frequenz enthält, und jeder der dritten und vierten Schwingungssensoren ist jeweils eingerichtet, Schwingungsbewegungen des zweiten Rohrs zu erfassen und in ein nämliche Schwingungsbewegungen repräsentierendes, beispielsweise elektrisches oder optisches, drittes bzw. viertes Schwingungssignal zu wandeln, beispielsweise derart, daß jedes der dritten und vierten Schwingungssignale jeweils eine oder mehrere sinusförmige Signalkomponenten mit jeweils einer einer Schwingungsfrequenz von Schwingungsbewegungen des zweiten Rohrs entsprechenden Frequenz enthält.

Die Meßsystem-Elektronik wiederum ist eingerichtet, den ersten Schwingungserreger zu bestromen, nämlich ein elektrisches erstes Treibersignal in den ersten Schwingungserreger einzuspeisen, wodurch das erste Rohr erzwungene mechanische Schwingungen, beispielsweise Biegeschwingungen, mit einer oder mehreren durch das erste Treibersignal vorgegebenen Schwingungsfrequenzen und das zweite Rohr mit wenigstens einer der Schwingungen des ersten Rohrs gekoppelte mechanische Schwingungen ausführt, sowie den zweiten Schwingungserreger zu bestromen, nämlich simultan zum ersten Treibersignal ein elektrisches zweites Treibersignal in den zweiten Schwingungserreger einzuspeisen, wodurch das zweite Rohr erzwungene mechanische Schwingungen, beispielsweise Biegeschwingungen, mit einer oder mehreren durch das zweite Treibersignals vorgegebenen Schwingungsfrequenzen und das erste Rohr mit Schwingungen des zweiten Rohrs gekoppelte mechanische Schwingungen ausführt.

Beim erfindungsgemäßen Meßsystem ist die Meßsystem-Elektronik ferner eingerichtet in einem ersten Betriebsmodus:
▪ sowohl das erste Treibersignal mit wenigstens einer ersten Nutz-Stromkomponente, nämlich einer hinsichtlich einer Stromstärke dominierenden oder einzigen sinusförmigen Stromkomponente mit einer (Wechselstrom-)Frequenz und einem Phasenwinkel zu erzeugen und in den ersten Schwingungserreger einzuspeisen, als auch das zweite Treibersignal mit wenigstens einer ersten Nutz-Stromkomponente, nämlich einer hinsichtlich einer Stromstärke dominierenden oder einzigen sinusförmigen Stromkomponente mit einer der (Wechselstrom-)Frequenz der ersten Nutz-Stromkomponenten des ersten Treibersignals entsprechenden (Wechselstrom-)Frequenz und einem vom Phasenwinkel der ersten Nutz-Stromkomponenten des ersten Treibersignals, beispielsweise um 180°, abweichenden Phasenwinkel zu erzeugen und in den zweiten Schwingungserreger einzuspeisen, derart,
   - daß die ersten und zweiten Treibersignale eine erste Antriebs-Phasendifferenz, nämlich eine, beispielsweise 180° betragende, Differenz zwischen den Phasenwinkeln von deren ersten Nutz-Stromkomponenten aufweisen,
   - daß das erste Rohr zumindest anteilig, beispielsweise überwiegend, erste Nutzschwingungen, nämlich durch den (bestromten) ersten Schwingungserreger erzwungene mechanische Schwingungen mit wenigstens einer ersten Nutzfrequenz, nämlich einer der (Wechselstrom-)Frequenz der ersten Nutz-Stromkomponente des ersten Treibersignals entsprechenden Schwingungsfrequenz und mit einer ersten Nutzphase, nämlich einer, beispielsweise zumindest am Ort des ersten Schwingungserregers, dem Phasenwinkel der ersten Nutz-Stromkomponente des ersten Treibersignals entsprechenden Schwingungsphase, und das zweite Rohr zumindest anteilig, beispielsweise überwiegend, zweite Nutzschwingungen, nämlich durch den (bestromten) zweiten Schwingungserreger erzwungene mechanische Schwingungen mit der ersten Nutzfrequenz und mit einer zweiten Nutzphase, nämlich einer, beispielsweise zumindest am Ort des zweiten Schwingungserregers, dem Phasenwinkel der ersten Nutz-Stromkomponenten des zweiten Treibersignals entsprechenden Schwingungsphase ausführt, beispielsweise derart, daß die zweiten Nutzschwingungen gegenphasig bzw. gegengleich zu den ersten Nutzschwingungen sind und/oder daß die ersten und zweiten Nutzschwingungen geeignet sind, im strömenden Meßstoff vom Massestrom abhängige Corioliskräfte zu bewirken,
   - und daß jedes der ersten, zweiten, dritten und vierten Schwingungssignale, jeweils eine erste Nutz-Signalkomponente, nämlich eine jeweilige sinusförmige Signalkomponente mit einer der ersten Nutzfrequenz entsprechenden Frequenz aufweist,
▪ sowie die ersten, zweiten, dritten und vierten Schwingungssignale zu empfangen und auszuwerten, nämlich anhand der Schwingungssignale, beispielsweise nämlich zumindest anhand jeweils einer der Nutz-Signalkomponenten, die wenigstens ein physikalische

Meßgröße (zeitlich aufeinanderfolgend) quantifizierende Meßwerte zu ermitteln. Darüberhinaus ist die Meßsystem-Elektronik im besonderen auch eingerichtet, in einem, beispielsweise dem ersten Betriebsmodus zeitlich vorausgehend und/oder zeitlich nachfolgend aktivierten und/oder mehr als 10 ms andauernden und/oder zeitlich begrenzten und/oder wiederkehrend aufgestarteten, zweiten Betriebsmodus:
▪ sowohl das erste Treibersignal mit einer zweiten Nutz-Stromkomponente, nämlich einer hinsichtlich einer Stromstärke dominierenden oder einzigen sinusförmigen Stromkomponente mit einer (Wechselstrom-)Frequenz und einem Phasenwinkel zu erzeugen und in den ersten Schwingungserreger einzuspeisen,
   - als auch das zweite Treibersignal mit wenigstens einer zweiten Nutz-Stromkomponente, nämlich einer hinsichtlich einer Stromstärke dominierenden oder einzigen sinusförmigen Stromkomponente mit einer der (Wechselstrom-)Frequenz der zweiten Nutz-Stromkomponenten des ersten Treibersignals entsprechenden (Wechselstrom-)Frequenz und einem vom Phasenwinkel der zweiten Nutz-Stromkomponenten des ersten Treibersignals um weniger als 180° abweichenden, beispielsweise dem Phasenwinkel der zweiten Nutz-Stromkomponenten des ersten Treibersignals entsprechenden, Phasenwinkel zu erzeugen und in den zweiten Schwingungserreger einzuspeisen, derart,
   - daß die ersten und zweiten Treibersignale eine von der ersten Antriebs-Phasendifferenz, beispielsweise um 180°, abweichende, beispielsweise 0° betragende, zweite Antriebs-Phasendifferenz, nämlich eine Differenz zwischen den Phasenwinkeln von deren zweiten Nutz-Stromkomponenten aufweisen,
   - daß das erste Rohr zumindest anteilig, beispielsweise überwiegend, dritte Nutzschwingungen, nämlich durch den (bestromten) ersten Schwingungserreger erzwungene mechanische Schwingungen mit wenigstens einer zweiten Nutzfrequenz, nämlich einer der (Wechselstrom-)Frequenz der zweiten Nutz-Stromkomponente des ersten Treibersignals entsprechenden Schwingungsfrequenz und mit einer dritten Nutzphase, nämlich einer, beispielsweise zumindest am Ort des ersten Schwingungserregers, dem Phasenwinkel der zweiten Nutz-Stromkomponente des ersten Treibersignals entsprechenden Schwingungsphase, und das zweite Rohr zumindest anteilig, beispielsweise überwiegend, vierte Nutzschwingungen, nämlich durch den (bestromten) zweiten Schwingungserreger erzwungene mechanische Schwingungen mit der zweiten Nutzfrequenz und mit einer vierten Nutzphase, nämlich einer, beispielsweise zumindest am Ort des zweiten Schwingungserregers, dem Phasenwinkel der zweiten Nutz-Stromkomponenten des zweiten Treibersignals entsprechenden Schwingungsphase ausführt, beispielsweise derart, daß die vierten Nutzschwingungen phasengleich zu den dritten Nutzschwingungen sind,
   - und daß jedes der ersten, zweiten, dritten und vierten Schwingungssignale, jeweils eine zweite Nutz-Signalkomponente, nämlich eine jeweilige sinusförmige Signalkomponente mit einer der zweiten Nutzfrequenz entsprechenden Frequenz aufweist,
▪ sowie die ersten, zweiten, dritten und vierten Schwingungssignale zu empfangen und auszuwerten, nämlich anhand der im zweiten Betriebsmodus empfangenen ersten und dritten und/oder zweiten und vierten Schwingungssignale, beispielsweise nämlich anhand einer jeweiligen Amplitude der zweiten Nutz-Signalkomponente der ersten und dritten Schwingungssignale und/oder einer jeweiligen Amplitude der zweiten Nutz-Signalkomponente der zweiten und vierten Schwingungssignale und/oder anhand eines jeweiligen Phasenwinkels der zweiten Nutz-Signalkomponenten der ersten und dritten Schwingungssignale und/oder eines jeweiligen Phasenwinkels der zweiten Nutz-Signalkomponenten der zweiten und vierten Schwingungssignale, das Meßsystem zu kalibrieren und/oder das Meßsystem zu überprüfen bzw. zu detektieren, ob eine, beispielsweise eine Funktionstüchtigkeit des Meßsystems vermindernde und/oder eine Fehlfunktion des Meßsystems bewirkende und/oder eine Integrität zumindest eines der ersten, zweiten, dritten und vierten Schwingungssignale bzw. daraus gewonnener Meßwerte herabsetzende und/oder einen Meßfehler von aus wenigstens einem der ersten, zweiten, dritten und vierten Schwingungssignale gewonnenen Meßwerten provozierende, Störung des Meßsystems, beispielsweise aufgrund eines Belags auf einer Innenseite der Rohrwandung eines oder mehrerer der Rohre und/oder aufgrund einer Reduzierung einer Wandstärke der Rohrwandung eines oder mehrerer der Rohre und/oder aufgrund einer Alterung eines oder mehrerer der Schwingungssensoren und/oder Schwingungserreger und/oder eines fehlerhaften Zusammen- und/oder Einbau des Meßwandlers, vorliegt.

Darüberhinaus besteht die Erfindung auch darin das vorbezeichnete Meßsystems zum Messen wenigstens eines Strömungsparameters, beispielsweise eines Massestroms und/oder eines Volumenstroms, und/oder wenigstens eines Stoffparameters, beispielsweise einer Dichte und/oder einer Viskosität, eines, insb. in einer Rohrleitung strömenden, fluiden Meßstoffs, insb. eines Gases, einer Flüssigkeit oder einer Dispersion, zu verwenden.

Nach einer ersten Ausgestaltung der Erfindung ist ferner vorgesehen, daß die Meßsystem-Elektronik eingerichtet ist, im zweiten Betriebsmodus auch das erste Schwingungssignal und/oder das zweite Schwingungssignal zu empfangen und auszuwerten.

Nach einer zweiten Ausgestaltung der Erfindung ist ferner vorgesehen, daß die Meßsystem-Elektronik eingerichtet ist, anhand zumindest eines der im zweiten Betriebsmodus empfangenen dritten und vierten Schwingungssignale, beispielsweise nämlich jedem der dritten und vierten Schwingungssignale, die wenigstens ein physikalische Meßgröße (zeitlich aufeinanderfolgend) quantifizierende Meßwerte zu ermitteln, beispielsweise auch mit anhand von im ersten Betriebsmodus empfangenen Schwingungssignalen ermittelten Meßwerten für nämliche Meßgröße zu vergleichen.

Nach einer dritten Ausgestaltung der Erfindung ist ferner vorgesehen, daß die Meßsystem-Elektronik eingerichtet ist, sowohl von wenigstens einem der im ersten Betriebsmodus, beispielsweise nämlich sowohl im ersten Betriebsmodus als auch im zweiten Betriebsmodus, empfangenen ersten und zweiten Schwingungssignale, beispielsweise von jedem der ersten und zweiten Schwingungssignale, die jeweilige Nutz-Signalkomponente zu gewinnen bzw. zu ermitteln als auch von wenigstens einem der im ersten Betriebsmodus empfangenen dritten und vierten Schwingungssignale, beispielsweise von jedem der dritten und vierten Schwingungssignale, die jeweilige Nutz-Signalkomponente zu gewinnen bzw. zu ermitteln.

Nach einer vierten Ausgestaltung der Erfindung ist ferner vorgesehen, daß jede der Nutz-Signalkomponenten der ersten, zweiten, dritten und vierten Schwingungssignale jeweils einen von einem Massestrom des Meßstoffs abhängigen Phasenwinkel aufweist. Diese Ausgestaltung der Erfindung weiterbildend ist ferner vorgesehen, daß die Meßsystem-Elektronik eingerichtet ist, zumindest im ersten Betriebsmodus anhand einer ersten (Meß-)Phasendifferenz, nämlich einer Differenz zwischen dem Phasenwinkel der Nutz-Signalkomponente des ersten Schwingungssignals und dem Phasenwinkel der Nutzkomponente des zweiten Schwingungssignals sowie anhand einer zweiten (Meß-)Phasendifferenz, nämlich einer Differenz zwischen dem Phasenwinkel der Nutz-Signalkomponente des dritten Schwingungssignals und dem Phasenwinkel der Nutz-Signalkomponente des vierten Schwingungssignals Massestrom-Meßwerte, nämlich den Massestrom des strömenden Meßstoffs repräsentierende Meßwerte zu ermitteln, beispielsweise nämlich zu berechnen.

Nach einer fünften Ausgestaltung der Erfindung ist ferner vorgesehen, daß die Meßsystem-Elektronik eingerichtet ist, anhand eines oder mehrerer der im zweiten Betriebsmodus empfangenen Schwingungssignale einen oder mehrere Kennzahlenwerte für wenigstens eine Meßsystem-Kennzahl zu berechnen, die einen, beispielsweise eine dem Meßsystem innewohnende, eine oder mehrere funktionelle Abhängigkeiten eines oder mehrerer der Schwingungssignale von einem oder mehreren der Treibersignale bestimmende Systemfunktion (Übertragungsfunktion) bzw. eine Funktionstüchtigkeit des Meßsystems bestimmenden, Betriebszustand charakterisiert, beispielsweise derart, daß nämliche Meßsystem-Kennzahl von einem oder mehreren Parametern einer zwischen wenigstens der zweiten Nutz-Stromkomponenten der ersten und zweiten Treibersignale und wenigstens einer der zweiten Nutz-Signalkomponenten der ersten, zweiten, dritten und vierten Schwingungssignale vermittelnden Systemfunktion des Meßsystems abhängig ist. Diese Ausgestaltung der Erfindung weiterbildend ist ferner vorgesehen, daß die Meßsystem-Kennzahl von einem (System-)Amplitudenverhältnis zwischen einer, beispielsweise absoluten oder relativen, Abweichung einer Amplitude der zweiten Nutz-Stromkomponente des zweiten Treibersignals von einer Amplitude der zweiten Nutz-Stromkomponenten des ersten Treibersignals und einer, beispielsweise absoluten bzw. relativen, Abweichung einer Amplitude der zweiten Nutz-Signalkomponente des dritten Schwingungssignals von einer Amplitude der zweiten Nutz-Signalkomponente des ersten Schwingungssignals und/oder einer, beispielsweise absoluten bzw. relativen, Abweichung einer Amplitude der zweiten Nutz-Signalkomponente des vierten Schwingungssignals von einer Amplitude der zweiten Nutz-Signalkomponente des zweiten Schwingungssignals, beispielsweise einer Summe der Abweichungen der zweiten Nutz-Signalkomponenten, abhängig ist, beispielsweise nämliches (System-)Amplitudenverhältnis quantifiziert. Nach einer anderen Weiterbildung der Erfindung ist die Meßsystem-Kennzahl von einem (System-)Amplitudenverhältnis zwischen einer, beispielsweise absoluten oder relativen, Abweichung einer Amplitude der zweiten Nutz-Stromkomponente des zweiten Treibersignals von einer Amplitude der zweiten Nutz-Stromkomponenten des ersten Treibersignals (e1) und einer, beispielsweise absoluten bzw. relativen, Abweichung (Δs13) einer Amplitude der zweiten Nutz-Signalkomponente des dritten Schwingungssignals von einer Amplitude der zweiten Nutz-Signalkomponente des ersten Schwingungssignals und/oder einer, beispielsweise absoluten bzw. relativen, Abweichung einer Amplitude der zweiten Nutz-Signalkomponente des vierten Schwingungssignals von einer Amplitude der zweiten Nutz-Signalkomponente des zweiten Schwingungssignals, beispielsweise einer Summe der Abweichungen der zweiten Nutz-Signalkomponenten, abhängig bzw. quantifiziert die Meßsystem-Kennzahl nämliches (System-)Amplitudenverhältnis. Darüberhinaus kann Meßsystem-Kennzahl auch so gebildet sein, daß sie von einer (System-)Phasendifferenz zwischen der zweiten Nutz-Signalkomponente wenigstens eines der ersten und zweiten Schwingungsmeßsignale, insb. einer Summe der zweiten Nutz-Signalkomponente der ersten und zweiten Schwingungssignale, und der zweiten Nutz-Signalkomponente wenigstens eines der dritten und vierten Schwingungmeßsignale, insb. einer Summe der zweiten Nutz-Signalkomponente der dritten und vierten Schwingungssignale, abhängig ist bzw. nämliche (System-)Phasendifferenz quantifiziert. Alternativ oder in Ergänzung kann die Meßsystem-Elektronik zudem eingerichtet sein, einen oder mehrere Kennzahlenwerte für die vorbezeichnete Meßsystem-Kennzahl jeweils mit einem oder mehreren für die Meßsystem-Kennzahl, beispielsweise vom Hersteller des Meßsystems und/oder bei der Herstellung und/oder einer Inbetriebnahme des Meßsystems, ermittelten Bezugswerten, beispielsweise einem oder mehreren eine verminderte Funktionstüchtigkeit des Meßwandlers repräsentierenden Bezugswerten und/oder einem oder mehreren eine Fehlfunktion des Meßwandlers repräsentierenden Bezugswerten und/oder einem oder mehreren einen defekten Meßwandler repräsentierenden Bezugswerten, zu vergleichen, beispielsweise eine Abweichung eines oder mehrere der Kennzahlenwerte von einem oder mehreren der Bezugswerte zu bewerten und/oder zu quantifizieren, und/oder kann die Meßsystem-Elektronik ferner eingerichtet sein, zu ermitteln, ob eine oder mehrere Kennzahlenwerte für die Meßsystem-Kennzahl größer als ein oder mehrere eine verminderte Funktionstüchtigkeit des Meßwandlers repräsentierende Bezugswerte und/oder größer als ein oder mehrere eine Fehlfunktion des Meßwandlers repräsentierende Bezugswerte und/oder größer als ein oder mehrere ein nicht mehr intakten Meßwandler repräsentierenden Bezugswerten sind, beispielsweise um ggf. eine dies signalisierende bzw. als (Störungs-)Alarm deklarierte Meldung auszugeben.

Nach einer sechsten Ausgestaltung der Erfindung ist ferner vorgesehen, daß die Meßsystem-Elektronik einen nicht-flüchtigen elektronischen Datenspeicher (EEPROM) aufweist, der dafür eingerichtet ist, digitale Daten, beispielsweise auch ohne eine angelegte Betriebsspannung, vorzuhalten, beispielsweise nämlich einen oder mehrere vorab ermittelte Bezugswerte für die Meßsystem-Kennzahl zu speichern.

Nach einer siebenten Ausgestaltung der Erfindung ist ferner vorgesehen, daß die Meßsystem-Elektronik eingerichtet ist, die ersten und/oder zweiten Nutz-Stromkomponente der ersten und zweiten Treibersignale mit einer (Wechselstrom-)Frequenz bereitzustellen, die von einer Resonanzfrequenz des ersten Rohrs und/oder einer Resonanzfrequenz des zweiten Rohrs um weniger als 1% nämlicher Resonanzfrequenz, fr1, und/oder um weniger als 1 Hz abweicht.

Nach einer achten Ausgestaltung der Erfindung weisen die ersten und zweiten Rohre wenigstens eine gemeinsame Resonanzfrequenz, fr12, auf und ist ferner vorgesehen, daß die Meßsystem-Elektronik eingerichtet ist, im ersten Betriebsmodus die ersten Nutz-Stromkomponente des ersten bzw. zweiten Treibersignals jeweils mit einer (Wechselstrom-)Frequenz bereitzustellen, die von nämlicher gemeinsamen Resonanzfrequenz, fr12, der ersten und zweiten Rohr um weniger als 1% nämlicher Resonanzfrequenz, fr12, und/oder um weniger als 1 Hz abweicht.

Nach einer neunten Ausgestaltung der Erfindung wohnen dem Meßwandler eine erste natürlicher Biegeschwingungsmode, in dem die ersten und zweiten Rohre gegenphasige bzw. gegengleiche mechanische Schwingungen, beispielsweise Biegeschwingungen, ausführen können bzw. ausführen (Anti-Parallel-Mode) sowie eine zweite natürliche Biegeschwingungsmode, in dem die ersten und zweiten Rohre gleichphasige mechanische Schwingungen, beispielsweise Biegeschwingungen, ausführen können bzw. ausführen (Parallel-Mode) inne. Diese Ausgestaltung der Erfindung weiterbilden ist die Meßsystem-Elektronik ferner eingerichtet, im ersten Betriebsmodus die gegenphasigen mechanischen Schwingungen erzwingende erste und zweite Treibersignale in die ersten bzw. zweiten Schwingungserreger einzuspeisen, beispielsweise nämlich die ersten Nutz-Stromkomponenten der ersten und zweiten Treibersignale mit einer (Wechselstrom-)Frequenz, die von einer Resonanzfrequenz, fr12, des ersten natürlichen Biegeschwingungsmodes um weniger als 1% nämlicher Resonanzfrequenz und/oder um weniger als 1 Hz abweicht, und/oder mit eine erste Antriebs-Phasendifferenz von 180° bewirkenden Phasenwinkeln, bereitzustellen sowie im zweiten Betriebsmodus die gleichphasigen mechanischen Schwingungen erzwingende erste und zweite Treibersignale in die ersten bzw. zweiten Schwingungserreger einzuspeisen, beispielsweise nämlich die ersten Nutz-Stromkomponenten der ersten und zweiten Treibersignale mit einer (Wechselstrom-)Frequenz, die von einer Resonanzfrequenz, fr22, des zweiten natürlichen Biegeschwingungsmodes um weniger als 1% nämlicher Resonanzfrequenz und/oder um weniger als 1 Hz abweicht, und/oder mit eine zweite Antriebs-Phasendifferenz von 0° bewirkenden Phasenwinkeln, bereitzustellen. Alternativ oder in Ergänzung ist die Erregeranordnung bzw. sind die ersten und zweiten Schwingungserreger ferner dafür eingerichtet, insb. angesteuert von den ersten und zweiten Treibersignalen, der vorbezeichneten natürlichen Parallelschwingungsmode entsprechende mechanische (Resonanz-)Schwingungen der ersten und zweiten Rohre anzuregen.

Nach einer zehnten Ausgestaltung der Erfindung ist ferner vorgesehen, daß die Meßsystem-Elektronik eingerichtet ist, im ersten Betriebsmodus die ersten und zweiten Treibersignale mit einer, beispielsweise vorgebbaren und/oder veränderlichen, ersten Antriebs-Amplitudendifferenz, nämlich einer, beispielsweise Null betragenden, Differenz zwischen einer Amplitude der ersten Nutz-Stromkomponenten des ersten Treibersignals und einer Amplitude der ersten Nutz-Stromkomponenten des zweiten Treibersignals zu erzeugen und in den ersten bzw. zweiten Schwingungserreger einzuspeisen.

Nach einer elften Ausgestaltung der Erfindung ist ferner vorgesehen, daß die Meßsystem-Elektronik eingerichtet ist, im zweiten Betriebsmodus die ersten und zweiten Treibersignale mit einer, beispielsweise der ersten Antriebs-Amplitudendifferenz entsprechenden und/oder vorgebbaren und/oder veränderlichen, zweiten Antriebs-Amplitudendifferenz, nämlich einer, beispielsweise Null betragenden, Differenz zwischen einer Amplitude der zweiten Nutz-Stromkomponenten des ersten Treibersignals und einer Amplitude der zweiten Nutz-Stromkomponenten des zweiten Treibersignals zu erzeugen und in den in den ersten bzw. zweiten Schwingungserreger einzuspeisen.

Nach einer zwölften Ausgestaltung der Erfindung ist ferner vorgesehen, daß die Meßsystem-Elektronik eingerichtet ist, anhand der im zweiten Betriebsmodus eingespeisten ersten und zweiten Treibersignale, beispielsweise nämlich anhand der zweiten Nutz-Stromkomponenten der ersten und zweiten Treibersignale, sowie anhand der ersten und dritten Schwingungssignale, beispielsweise nämlich anhand, der zweiten Nutz-Signalkomponenten der ersten und dritten Schwingungssignale, und/oder der zweiten und vierten Schwingungssignale, beispielsweise nämlich anhand, der zweiten Nutz-Signalkomponenten der zweiten und vierten Schwingungssignale, eine (modale) Dämpfung der ersten und zweiten Rohre für zweiten Nutzschwingungen zu ermitteln. Diese Ausgestaltung der Erfindung weiterbildend ist ferner vorgesehen, die ermittelte (modale) Dämpfung der ersten und zweiten Rohre für zweiten Nutzschwingungen mit wenigstens einem eine verminderte Funktionstüchtigkeit bzw. einen Defekt des Meßwandlers repräsentierenden Bezugswert zu vergleichen bzw. bei einer zu großen, nämlich einen dafür vorgegebenen (Störungs-)Bezugswert überschreitenden Abweichung eine, beispielsweise als (Störungs-)Alarm deklarierte, Meldung auszugeben. Alternativ oder in Ergänzung kann die Meßsystem-Elektronik ferner eingerichtet sein, anhand der im ersten Betriebsmodus eingespeisten ersten und zweiten Treibersignale, beispielsweise nämlich anhand der ersten Nutz-Stromkomponenten der ersten und zweiten Treibersignale, sowie anhand der ersten und dritten Schwingungssignale, beispielsweise nämlich anhand, der ersten Nutz-Signalkomponenten der ersten und dritten Schwingungssignale, und/oder der zweiten und vierten Schwingungssignale, beispielsweise nämlich anhand, der ersten Nutz-Signalkomponenten der zweiten und vierten Schwingungssignale, eine (modale) Dämpfung der ersten und zweiten Rohre für ersten Nutzschwingungen zu ermitteln, beispielsweise um die (modale) Dämpfung der ersten und zweiten Rohre für zweiten Nutzschwingungen mit der (modale) Dämpfung der ersten und zweiten Rohre für ersten Nutzschwingungen ins Verhältnis zu setzen bzw. zu normieren und mit einem entsprechend vorgegebenen (Störungs-)Bezugswert zu vergleichen.

Nach einer dreizehnten Ausgestaltung der Erfindung ist ferner vorgesehen, daß die Meßsystem-Elektronik eingerichtet ist, anhand zumindest eines der im zweiten Betriebsmodus empfangenen, ersten, zweiten, dritten und vierten Schwingungssignale, insb. nämlich deren jeweiliger zweiter Nutz-Signalkomponente, zu detektieren, ob eine, beispielsweise eine Funktionstüchtigkeit des Meßsystems vermindernde und/oder eine Fehlfunktion des Meßsystems bewirkende und/oder eine Integrität zumindest eines der ersten, zweiten, dritten und vierten Schwingungssignale bzw. daraus gewonner Meßwerte herabsetzende und/oder einen Meßfehler daraus gewonnener Meßwerte provozierende, Störung des Meßsystems, beispielsweise aufgrund eines Belags auf einer Innenseite der Rohrwandung eines oder mehrerer der Rohre und/oder aufgrund einer Reduzierung einer Wandstärke der Rohrwandung eines oder mehrerer der Rohre und/oder aufgrund einer Alterung eines oder mehrerer der Schwingungssensoren und/oder Schwingungserreger, vorliegt.

Nach einer vierzehnten Ausgestaltung der Erfindung ist ferner vorgesehen, daß die Meßsystem-Elektronik eingerichtet ist, anhand der im zweiten Betriebsmodus empfangenen ersten und dritten Schwingungssignale eine erste (Prüf-)Amplitudendifferenz, nämlich ein Differenz zwischen einer Amplitude der zweiten Nutz-Signalkomponenten der ersten und dritten Schwingungssignale zu ermitteln, insb. nämlich mit wenigstens einem eine verminderte Funktionstüchtigkeit bzw. einen Defekt des Meßwandlers repräsentierenden Bezugswert zu vergleichen bzw. bei einer zu großen, nämlich einen dafür vorgegebenen Bezugswert überschreitenden Abweichung eine, insb. als (Störungs-)Alarm deklarierte, Meldung auszugeben.

Nach einer fünfzehnten Ausgestaltung der Erfindung ist ferner vorgesehen, daß die Meßsystem-Elektronik eingerichtet ist, anhand der im zweiten Betriebsmodus empfangenen ersten und dritten Schwingungssignale eine erste (Prüf-)Phasendifferenz, nämlich eine Differenz zwischen einem Phasenwinkel der zweiten Nutz-Signalkomponenten der ersten und dritten Schwingungssignale zu ermitteln, insb. nämlich mit wenigstens einem eine verminderte Funktionstüchtigkeit bzw. einen Defekt des Meßwandlers repräsentierenden Bezugswert zu vergleichen bzw. bei einer zu großen, nämlich einen dafür vorgegebenen Bezugswert überschreitenden Abweichung eine, beispielsweise als (Störungs-)Alarm deklarierte, Meldung auszugeben.

Nach einer sechzehnten Ausgestaltung der Erfindung ist ferner vorgesehen, daß die Meßsystem-Elektronik eingerichtet ist, anhand der im zweiten Betriebsmodus empfangenen zweiten und vierten Schwingungssignale eine zweite (Prüf-)Amplitudendifferenz, nämlich ein Differenz zwischen einer Amplitude der zweiten Nutz-Signalkomponenten der zweiten und vierten Schwingungssignale zu ermitteln, beispielsweise nämlich mit wenigstens einem eine verminderte Funktionstüchtigkeit bzw. einen Defekt des Meßwandlers repräsentierenden Bezugswert zu vergleichen bzw. bei einer zu großen, nämlich einen dafür vorgegebenen Bezugswert überschreitenden Abweichung eine, beispielsweise als (Störungs-)Alarm deklarierte, Meldung auszugeben.

Nach einer siebzehnten Ausgestaltung der Erfindung ist ferner vorgesehen, daß die Meßsystem-Elektronik eingerichtet ist, anhand der im zweiten Betriebsmodus empfangenen zweiten und vierten Schwingungssignale eine zweite (Prüf-)Phasendifferenz, nämlich eine Differenz zwischen einem Phasenwinkel der zweiten Nutz-Signalkomponenten der zweiten und vierten Schwingungssignale zu ermitteln, beispielsweise nämlich mit wenigstens einem eine verminderte Funktionstüchtigkeit bzw. einen Defekt des Meßwandlers repräsentierenden Bezugswert zu vergleichen bzw. bei einer zu großen, nämlich einen dafür vorgegebenen Bezugswert überschreitenden Abweichung eine, beispielsweise als (Störungs-)Alarm deklarierte, Meldung auszugeben.

Nach einer achtzehnten Ausgestaltung der Erfindung ist ferner vorgesehen, daß die Störung des Meßsystems eine, beispielsweise irreversible, Veränderung einer oder mehrerer Schwingungseigenschaften der Rohranordnung, beispielsweise aufgrund einer Reduzierung einer Wandstärke der Rohrwandung eines oder mehrerer der Rohre und/oder aufgrund einer plastischen Verformung eines oder mehrerer der Rohre und/oder aufgrund eines Belags auf einer Innenseite der Rohrwandung eines oder mehrerer der Rohre und/oder aufgrund eines Risses in der Rohrwandung eines oder mehrerer der Rohre, umfaßt.

Nach einer neunzehnten Ausgestaltung der Erfindung ist ferner vorgesehen, daß die Störung des Meßsystems eine, beispielsweise irreversible, Veränderung einer oder mehrerer Strömungseigenschaften der Rohranordnung, beispielsweise aufgrund einer Reduzierung eines Strömungsquerschnitts der Rohranordnung, beispielsweise infolge einer Verstopfung eines oder mehrerer der Rohre und/oder infolge eines Belags auf einer Innenseite der Rohrwandung eines oder mehrerer der Rohre, umfaßt.

Nach einer zwanzigsten Ausgestaltung der Erfindung ist ferner vorgesehen, daß die Störung des Meßsystems eine, beispielsweise irreversible, Veränderung einer oder mehrerer elektro-mechanischer Wandlereigenschaften, beispielsweise aufgrund einer Alterung eines oder mehrerer der Schwingungssensoren und/oder Schwingungserreger und/oder aufgrund einer Änderung einer jeweiligen mechanischer Verbindung zwischen einem oder mehreren Schwingungssensoren bzw. einem oder mehreren Schwingungserregern und dem jeweiligen Rohr, umfaßt.

Nach einer einundzwanzigsten Ausgestaltung der Erfindung ist ferner vorgesehen, daß die Störung des Meßsystems einen fehlerhaften Ein- und/oder Zusammenbau des Meßwandlers bzw. des damit gebildeten Meßsystems umfaßt.

Nach einer zweiundzwanzigsten Ausgestaltung der Erfindung ist ferner vorgesehen, daß die Rohranordnung ein, beispielsweise vom zweiten Strömungsteiler weiter entfernt als vom ersten Strömungsteiler positioniertes, mit jedem der Rohre mechanisch verbundenes, beispielsweise plattenförmiges, erstes Kopplerelement sowie ein, beispielsweise vom ersten Strömungsteiler weiter entfernt als vom zweiten Strömungsteiler positioniertes, mit jedem der Rohre mechanisch verbundenes, beispielsweise plattenförmiges und/oder zum ersten Kopplerelement baugleiches, zweites Kopplerelement aufweist.

Nach einer dreiundzwanzigsten Ausgestaltung der Erfindung ist ferner vorgesehen, daß dem Meßwandler ein natürlicher Biegeschwingungsmode, beispielsweise ein Biegeschwingungsgrundmode, innewohnt, in dem die ersten und zweiten Rohre gegenphasige mechanische Schwingungen ausführen können bzw. ausführen, und wobei die Meßsystem-Elektronik eingerichtet ist, im ersten Betriebsmodus nämliche gegenphasigen mechanischen Schwingungen erzwingende erste und zweite Treibersignale in die ersten bzw. zweiten Schwingungserreger einzuspeisen, beispielsweise nämlich die ersten und zweiten Nutz-Stromkomponenten mit einer (Wechselstrom-)Frequenz bereitzustellen, die von einer Resonanzfrequenz, fr12, des Biegeschwingungsmodes um weniger als 1% nämlicher Resonanzfrequenz und/oder um weniger als 1 Hz abweicht.

Nach einer vierundzwanzigsten Ausgestaltung der Erfindung ist ferner vorgesehen, daß der erste Schwingungserreger eingerichtet ist, elektrische Leistung mit einem zeitlich veränderlichen elektrischen Strom derart in mechanische Leistung zu wandeln, daß an einem mittels des ersten Schwingungserregers am damit mechanisch verbundenen ersten Rohr gebildeten Angriffspunkt eine zeitlich veränderliche Antriebskraft auf das erste Rohr wirkt.

Nach einer fünfundzwanzigsten Ausgestaltung der Erfindung ist ferner vorgesehen, daß der zweite Schwingungserreger eingerichtet ist, elektrische Leistung mit einem zeitlich veränderlichen elektrischen Strom derart in mechanische Leistung zu wandeln, daß an einem mittels des zweiten Schwingungserregers am damit mechanisch verbundenen zweiten Rohr gebildeten Angriffspunkt eine zeitlich veränderliche Antriebskraft auf das zweite Rohr wirkt.

Nach einer sechsundzwanzigsten Ausgestaltung der Erfindung ist ferner vorgesehen, daß der erste Schwingungserreger nicht mit dem zweiten Rohr mechanisch verbunden ist.

Nach einer siebenundzwanzigsten Ausgestaltung der Erfindung ist ferner vorgesehen, daß der erste Schwingungserreger keine mit dem zweiten Rohr mechanisch verbundene Komponente aufweist.

Nach einer achtundzwanzigsten Ausgestaltung der Erfindung ist ferner vorgesehen, daß der zweite Schwingungserreger nicht mit dem ersten Rohr mechanisch verbunden ist.

Nach einer neunundzwanzigsten Ausgestaltung der Erfindung ist ferner vorgesehen, daß der zweite Schwingungserreger keine mit dem ersten Rohr mechanisch verbundene Komponente aufweist.

Nach einer dreißigsten Ausgestaltung der Erfindung ist ferner vorgesehen, daß die Erregeranordnung außer dem ersten Schwingungserreger keinen weiteren mechanisch mit dem ersten Rohr verbundenen Schwingungserreger aufweist.

Nach einer einunddreißigsten Ausgestaltung der Erfindung ist ferner vorgesehen, daß die Erregeranordnung außer dem zweiten Schwingungserreger keinen weiteren mechanisch mit dem zweiten Rohr verbundenen Schwingungserreger aufweist.

Nach einer ersten Weiterbildung der Erfindung weist sowohl der erste Strömungsteiler als auch der zweite Strömungsteiler jeweils, beispielsweise genau, vier Strömungsöffnungen auf, und weist die Rohranordnung ein, beispielsweise zumindest abschnittsweise gekrümmtes und/oder zumindest abschnittsweise gerades und/oder zum ersten Rohr zumindest abschnittsweise paralleles, drittes Rohr und ein, beispielsweise zumindest abschnittsweise gekrümmtes und/oder zumindest abschnittsweise gerades und/oder zum dritten Rohr baugleiches und/oder zum dritten Rohr zumindest abschnittsweise paralleles, viertes Rohr auf, wobei jedes der dritten und vierten Rohre der Rohranordnung sich jeweils von einem jeweiligen ersten Ende des jeweiligen Rohrs bis zu einem jeweiligen zweiten Ende nämlichen Rohrs mit einer jeweiligen Rohrlänge erstreckt und jeweils ein von einer, beispielsweise metallischen, Rohrwandung umschlossenes, sich jeweils vom jeweiligen ersten Ende des jeweiligen Rohrs bis zum jeweiligen zweiten Ende nämlichen Rohrs erstreckenden Lumen aufweist, und wobei jedes der dritten und vierten Rohre der Rohranordnung jeweils an jeden der ersten und zweiten Strömungsteiler angeschlossen ist, derart, daß das dritte Rohr mit dessen ersten Ende in eine dritte Strömungsöffnung des ersten Strömungsteilers und mit dessen zweiten Ende in eine dritte Strömungsöffnung des zweiten Strömungsteilers und das vierte Rohr mit dessen ersten Ende in eine vierte Strömungsöffnung des ersten Strömungsteilers und mit dessen zweiten Ende in eine vierte Strömungsöffnung des zweiten Strömungsteilers mündet, und daß jedes der dritten und vierten Rohre der Rohranordnung jeweils eingerichtet ist, von Meßstoff durchströmt und währenddessen vibrieren gelassen zu werden.

Nach einer ersten Ausgestaltung der ersten Weiterbildung der Erfindung ist ferner vorgesehen, daß die dritten und vierten Rohre der Rohranordnung zumindest über die ersten und zweiten Strömungsteiler miteinander mechanisch gekoppelt sind, derart, daß erzwungene mechanische Schwingungen des dritten Rohrs damit gekoppelte mechanische Schwingungen des vierten Rohrs und erzwungene mechanische Schwingungen des vierten Rohrs damit gekoppelte mechanische Schwingungen des dritten Rohrs bewirken, und/oder daß erzwungene mechanische Schwingungen der ersten und dritten Rohre, beispielsweise gegengleiche Biegeschwingungen der ersten und dritten Rohre, damit gekoppelte mechanische Schwingungen jedes der zweiten und vierten Rohre, beispielsweise gegengleiche Biegeschwingungen der zweiten und vierten Rohre, und erzwungene mechanische Schwingungen der zweiten und vierten Rohre, beispielsweise gegengleiche Biegeschwingungen der zweiten und vierten Rohre, damit gekoppelte mechanische Schwingungen jedes der ersten und dritten Rohre, beispielsweise gegengleiche Biegeschwingungen der ersten und dritten Rohre, bewirken, und/oder daß erzwungene mechanische Schwingungen jedes der ersten, zweiten, dritten und vierten Rohr damit jeweils gekoppelte mechanische Schwingungen jedes der anderen ersten, zweiten, dritten bzw. vierten Rohr bewirken. Der erste Schwingungserreger kann ferner eingerichtet sein, mechanische Schwingungen der ersten und dritten Rohre, beispielsweise differenziell, anzuregen, und der zweite Schwingungserreger kann eingerichtet sein, mechanische Schwingungen der zweiten und vierten Rohre, beispielsweise differenziell, anzuregen.

Nach einer zweiten Ausgestaltung der ersten Weiterbildung der Erfindung ist ferner vorgesehen, daß der erste Schwingungserreger mechanisch sowohl mit dem ersten Rohr als mit dem dritten Rohr verbunden ist und daß der zweite Schwingungserreger mechanisch sowohl mit dem zweiten Rohr als auch mit dem vierten Rohr verbunden ist.

Nach einer dritten Ausgestaltung der ersten Weiterbildung der Erfindung ist ferner vorgesehen, daß jeder der ersten und zweiten Schwingungssensoren jeweils eingerichtet ist, Schwingungsbewegungen der ersten und dritten Rohre, beispielsweise differenziell, zu erfassen, derart, daß jedes der ersten und zweiten Schwingungssignale, beispielsweise gegenphasige, Schwingungsbewegungen der ersten und dritten Rohre repräsentiert;
- und wobei jeder der dritten und vierten Schwingungssensoren jeweils eingerichtet ist, Schwingungsbewegungen der zweiten und vierten Rohre, beispielsweise differenziell, zu erfassen, derart, daß jedes der dritten und vierten Schwingungssignale, beispielsweise gegenphasige, Schwingungsbewegungen der zweiten und vierten Rohre repräsentiert.

Nach einer vierten Ausgestaltung der ersten Weiterbildung der Erfindung ist ferner vorgesehen, daß die ersten und zweiten Schwingungssensoren mechanisch jeweils sowohl mit dem ersten Rohr als auch dem dritten Rohr verbunden sind, und daß die dritten und vierten Schwingungssensoren mechanisch jeweils sowohl mit dem zweiten Rohr als auch dem vierten Rohr verbunden sind.

Nach einer fünften Ausgestaltung der ersten Weiterbildung der Erfindung ist ferner vorgesehen, daß die ersten, zweiten, dritten und vierten Rohre lediglich paarweise baugleich sind, beispielsweise derart, daß das erste Rohr lediglich zum dritten Rohr baugleich ist und daß das zweite Rohr lediglich zum vierten Rohr baugleich ist.

Nach einer sechsten Ausgestaltung der ersten Weiterbildung der Erfindung ist ferner vorgesehen, daß jedes der vier Rohre ein Kaliber aufweist, das gleich einem Kaliber jedes der anderen Rohre ist.

Nach einer siebenten Ausgestaltung der ersten Weiterbildung der Erfindung ist ferner vorgesehen, daß die Rohrwandung jedes der vier Rohre eine Wandstärke aufweist, die gleich einer Wandstärke jedes der anderen Rohre ist.

Nach einer zweiten Weiterbildung der Erfindung umfaßt das Meßsystem weiters ein, beispielsweise als ein Wandler-Schutzgehäuse ausgebildetes, Trägergerüst, wobei Trägergerüst und Rohranordnung mittels deren ersten und zweiten Strömungsteiler aneinander, beispielsweise wieder lösbar, befestigt ist.

Nach einer ersten Ausgestaltung der zweiten Weiterbildung der Erfindung ist ferner vorgesehen, daß die ersten und zweiten Schwingungserreger mechanisch mit dem Trägergerüst verbunden sind.

Nach einer zweiten Ausgestaltung der zweiten Weiterbildung der Erfindung ist ferner vorgesehen, daß die ersten, zweiten, dritten und vierten Schwingungssensoren mechanisch mit dem Trägergerüst verbunden sind.

Nach einer dritten Weiterbildung der Erfindung umfaßt das Meßsystem weiters ein, beispielsweise an einem Trägergerüst des Meßwandlers befestigtes, Elektronik-Schutzgehäuse für die Meßsystem-Elektronik.

Ein Grundgedanke der Erfindung besteht darin, die Empfindlichkeit von Meßwandlern vom Vibrationstyp naturgemäß innewohnenden Parallel-Schwingungsmoden auf Veränderungen des Meßwandlers dafür zu nutzen, um die Funktionstüchtigkeit des damit gebildeten vibronischen Meßsystems zu überwachen bzw. anhand von Änderungen der Schwingungseigenschaften wenigstens eines der Parallel-Schwingungsmoden eine allfällige Störung des Meßsystems, beispielsweise auch lediglich mit "bordeigenen" Mitteln, frühzeitig detektieren zu können.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1: schematisch ein Ausführungsbeispiel für ein erfindungsgemäßes Meßsystem;
- Fig. 2, 3: schematisch eine weitere Variante für ein erfindungsgemäßes Meßsystem; und
- Fig. 4, 5: Zeigerdiagramme für im Betrieb eines Meßsystem gemäß Fig. 1 oder gemäß den Fig. 2 und 3 generierte Treiber- und Schwingungssignale.

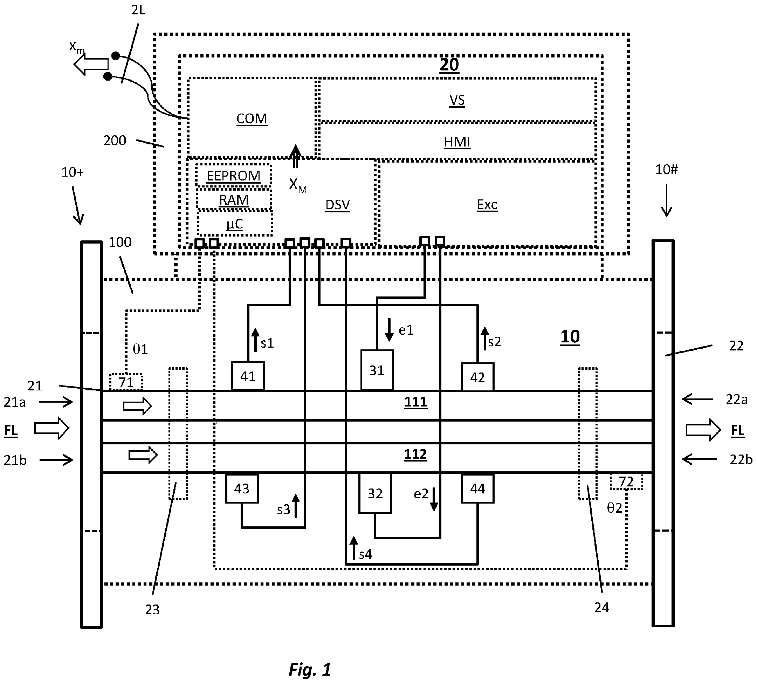

In Fig. 1 bzw. 2 und 3, sind Ausführungsbeispiele bzw. Ausgestaltungvarianten für ein dem Messen und/oder Überwachen wenigstens einer, insb. zeitlich veränderlichen, Meßgröße eines zumindest zeitweise strömenden, beispielsweise nämlich auch eines zumindest zeitweise zwei- oder mehrphasigen bzw. inhomogenen, (fluiden) Meßstoffs FL dienliches vibronisches Meßsystems schematisch dargestellt, wobei es sich bei der Meßgröße beispielsweise um einen Strömungsparameter, wie z.B. einem Massenstrom ṁ, einem Volumenstrom und/oder einer Strömungsgeschwindigkeit, oder beispielsweise einen Stoffparameter, wie z.B. einer Dichte ρ und/oder einer Viskosität η, des Meßstoffs FL handeln kann. Das Meßsystem ist im besonderen dafür vorgesehen bzw. eingerichtet, in den Verlauf eines ein als Meßstoff dienliches Fluid FL - beispielsweise nämlich ein Gas, eine Flüssigkeit oder eine Dispersion - führenden Prozeßleitungssystem eingegliedert und im Betrieb von dem, beispielsweise über eine Prozeßleitung zu- bzw. wieder abgeführten, Meßstoff FL zumindest zeitweise durchströmt zu werden. Zudem ist das Meßsystem dafür vorgesehen, die wenigstens ein physikalische Meßgröße (zeitlich aufeinanderfolgend) quantifizierende, ggf. auch digitale Meßwerte X_{M} ermitteln, insb. nämlich zu berechnen und/oder auszugeben. Die Prozeßleitung kann beispielsweise Rohrleitung, beispielsweise nämlich eine Rohrleitung einer Abfüllanlage, einer Betankungsvorrichtung oder einer anderen industriellen Anlage sein.

Wie in Fig. 1, 2 bzw. 3 jeweils dargestellt bzw. aus deren Zusammenschau ohne weiters ersichtlich, umfaßt das Meßsystem einen Meßwandler 10 vom Vibrationstyp, nämlich einen Meßwandler mit einer mittels wenigstens zwei, beispielsweise nämlich mittels genau zwei oder genau vier- beispielsweise zumindest paarweise baugleichen - Rohren (111, 121, 112, 122) gebildete Rohranordnung, eine Erregeranordnung (31, 32) zum Wandeln elektrischer Leistung in dem Anregen und Aufrechterhalten erzwungener mechanischer Schwingungen der Rohre sowie eine Sensoranordnung (41, 42, 43, 44) zum Erfassen von mechanischen Schwingungen der Rohranordnung und zum Bereitstellen von jeweils Schwingungsbewegungen der Rohranordnung, insb. nämlich von deren Rohren, repräsentierenden, beispielsweise elektrischen oder optischen, Schwingungssignalen (s1, s2, s3, s4). Wie bei derartigen Meßwandlern durchaus üblich kann die Rohranordnung ferner zwei an die wenigstens zwei Rohre jeweils (fluidisch) angeschlossene Strömungsteiler (21, 22) aufweisen.

Der Meßwandler MW ist zudem auch dafür vorgesehen, über ein, beispielsweise durch einen der vorbezeichneten Strömungsteiler gebildetes und/oder auch von einem Anschlußflansch eingefaßtes, Einlaßende 10+ sowie ein, beispielsweise durch den anderen der vorbezeichneten Strömungsteiler gebildetesund/oder von einem Anschlußflansch eingefaßtes, Auslaßende 10# an das vorbezeichnete Prozeßleitungssystem angeschlossenen und im Betrieb vom Meßstoff FL durchströmt zu werden. Zudem ist jedes der Rohre von dessen Rohranordnung ferner jeweils dafür eingerichtet, in dessen jeweiligen Lumen jeweils ein Teilvolumen des Meßstoffs FL zu führen und währenddessen vibrieren gelassen zu werden, beispielsweise nämlich jeweils - insb. einen mit der wenigstens einen Meßgröße korrespondierenden Meßeffekt bewirkende und/oder mittels der Erregeranordnung angeregte - erzwungene mechanische Schwingungen um eine jeweils zughörige statische Ruhelage auszuführen; dies im besonderen in der Weise, daß jedes der Rohre der Rohranordnung vibrieren gelassenen und währenddessen ausgehend von dessen jeweiligen ersten Ende in Richtung von dessen jeweiligen zweiten Ende von Fluid durchströmt wird. Die vorbezeichneten erzwungenen mechanischen Schwingungen können, wie bei Meßwandlern der in Rede stehenden Art durchaus üblich, zumindest anteilig erzwungene Biegeschwingungen der Rohre um eine jeweilige gedachte, nämlich das jeweiligen Rohr imaginär schneidende Schwingungsachse der Rohranordnung sein; dies im besonderen auch in der Weise, daß die vorbezeichneten (zwei bzw. vier) gedachten Schwingungsachsen - beispielsweise bei in statischer Ruhelage befindlichen Rohren - zueinander im wesentlichen parallel sind. Neben dem Meßwandler 10 umfaßt das Meßsystem ferner eine damit, nämlich sowohl mit der vorbezeichneten Erregeranordnung des Meßwandlers als auch mit der vorbezeichneten Sensoranordnung des Meßwandlers, beispielsweise nämlich mittels entsprechender elektrischer Verbindungsleitungen, elektrisch gekoppelte, insb. mittels wenigstens eines Mikroprozessors (µC) gebildete und/oder in einem Elektronik-Schutzgehäuse (200) angeordnete und/oder als Transmitter dienliche, Meßsystem-Elektronik 20 zum Ansteuern des Meßwandlers, insb. nämlich zum Bewirken der vorbezeichneten mechanischen Schwingungen der Rohre, und zum Auswerten von vom Meßwandler gelieferten Schwingungssignalen, beispielsweise nämlich zum Ermitteln der vorbezeichneten Meßwerte.

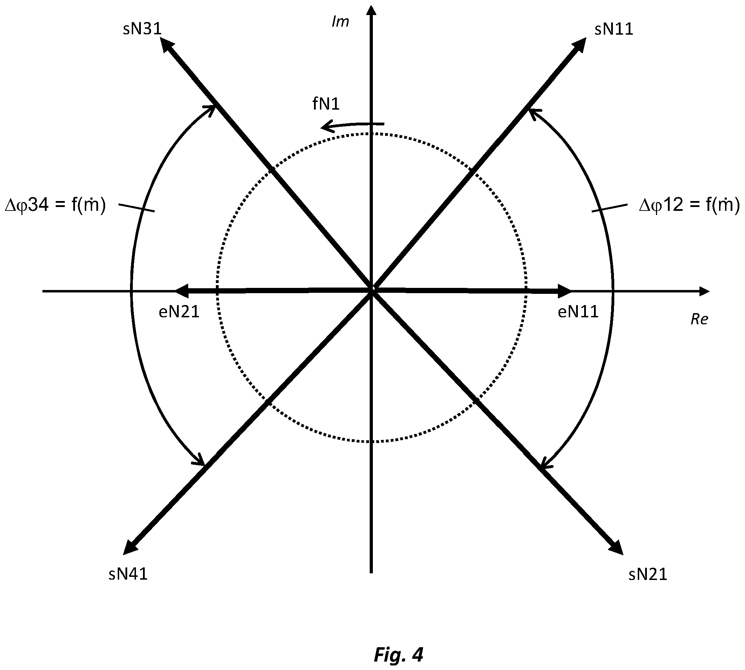

Die vorbezeichnete Erregeranordnung des Meßwandlers 10 ist im besonderen dafür vorgesehen bzw. eingerichtet, dorthin (von der Meßsystem-Elektronik 20) eingespeiste elektrische Leistung in mechanische Leistung zu wandeln, derart, daß die Rohranordnung, insb. nämlich jedes von deren Rohren zumindest zeitweise, erzwungene mechanische Schwingungen um eine statische Ruhelage ausführt, während die Sensoranordnung dafür vorgesehen bzw. eingerichtet ist, mechanische Schwingungen der Rohranordnung, nicht zuletzt mittels der Erregeranordnung erzwungene mechanische Schwingungen und/oder Biegeschwingungen der Rohre, zu erfassen und ein erstes Schwingungssignal s1, ein zweites Schwingungssignal s2, ein drittes Schwingungssignal s3 sowie ein viertes Schwingungssignal s4 bereitzustellen, von welchen - beispielsweise elektrischen - Schwingungssignalen s1, s2, s3, s4 jedes zumindest anteilig Schwingungsbewegungen eines oder mehrerer der Rohre der Rohranordnung repräsentiert, beispielsweise jeweils mittels einer jeweiligen, mit Schwingungsbewegungen der Rohre korrespondierenden veränderlichen elektrischen Spannung; dies im besonderen in der Weise, daß - wie in Fig. 4 angedeutet - die Schwingungssignale s1, s2, (bzw. jeweils eine spektrale Signalkomponente sN1 bzw. sN2 davon) einer Änderung einer Massenstrom des in der Rohranordnung geführten Meßstoffs mit einer Änderung einer ersten Phasendifferenz Δcp12, nämlich einer Änderung einer Differenz zwischen einem Phasenwinkel des Schwingungssignals s1 und einem Phasenwinkel des Schwingungssignals s2 folgen und daß die Schwingungssignale s3, s4 (bzw. jeweils eine spektrale Signalkomponente sN3 bzw. sN4 davon) einer Änderung eines Massenstroms des in der Rohranordnung geführten Meßstoffs mit einer Änderung einer zweiten Phasendifferenz Δcp34, nämlich einer Änderung einer Differenz zwischen einem Phasenwinkel des Schwingungssignals s3 und einem Phasenwinkel des Schwingungssignals s4 folgen, und/oder in der Weise, daß jedes der vorbezeichneten Schwingungssignale s1, s2, s3, s4 einer Änderung einer Dichte des in der Rohranordnung geführten Meßstoffs jeweilis mit einer Änderung einer jeweiligen Signalfrequenz wenigstens einer spektrale Signalkomponente folgt.

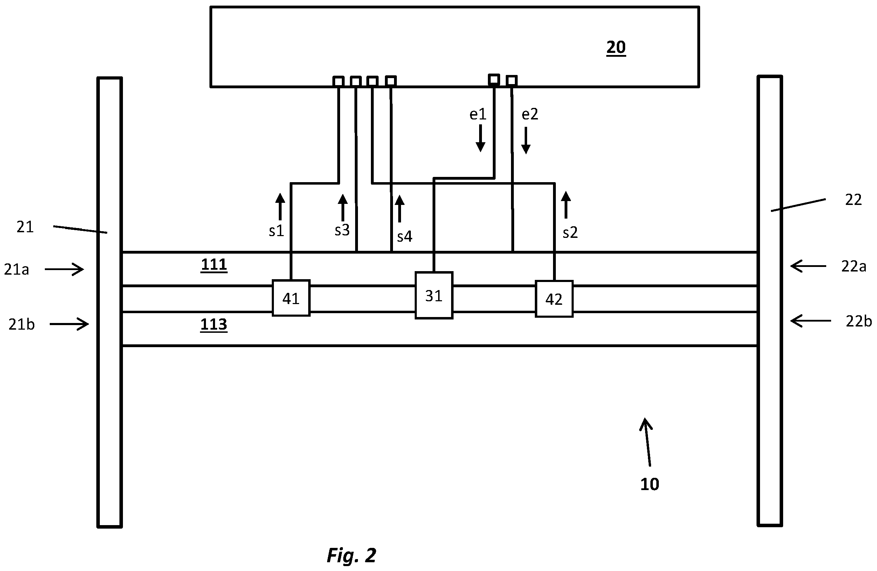

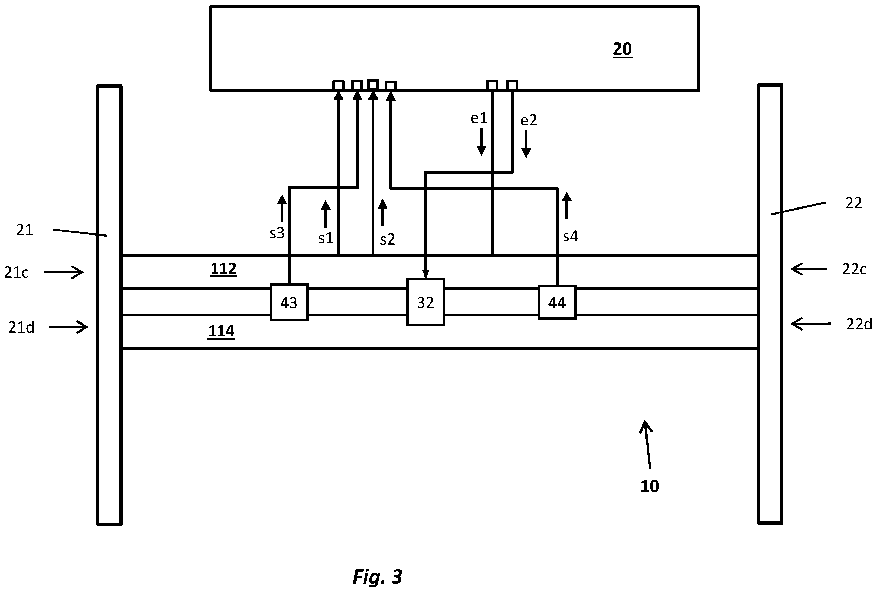

Nach einer weiteren Ausgestaltung der Erfindung weist die Rohranordnung, wie bereits angedeutet, einen, beispielsweise als Leitungsverzweigung dienlichen und/oder einlaßseitigen, ersten Strömungsteiler 21 mit wenigstens zwei Strömungsöffnungen (21a, 21b), einen, beispielsweise dem ersten Strömungsteiler 21 baugleichen und/oder als Leitungsvereinigung dienlichen und/oder auslaßseitigen, zweiten Strömungsteiler 22 mit wenigstens zwei Strömungsöffnungen (22a, 22b) sowie ein, insb. zumindest abschnittsweise gekrümmtes und/oder zumindest abschnittsweise gerades, erstes Rohr 111 und ein, beispielsweise zumindest abschnittsweise gekrümmtes und/oder zumindest abschnittsweise gerades und/oder zum ersten Rohr baugleiches und/oder zum ersten Rohr zumindest abschnittsweise paralleles, zweites Rohr 112 auf. Jedes der Rohre 111, 112 erstreckt sich jeweils von einem jeweiligen ersten Ende des jeweiligen Rohrs bis zu einem jeweiligen zweiten Ende nämlichen Rohrs mit einer jeweiligen Rohrlänge und weist jeweils ein von einer, beispielsweise metallischen, Rohrwandung umschlossenes, sich jeweils vom jeweiligen ersten Ende des jeweiligen Rohrs bis zum jeweiligen zweiten Ende nämlichen Rohrs erstreckenden Lumen auf. Jedes der Rohre 111, 112 der Rohranordnung ist jeweils an jeden der Strömungsteiler 21, 22 angeschlossen, derart, daß das Rohr 111 mit dessen ersten Ende in eine erste Strömungsöffnung 21a des Strömungsteilers 21 und mit dessen zweiten Ende in eine erste Strömungsöffnung 22a des Strömungsteilers 22 und das Rohr 112 mit dessen ersten Ende in eine zweite Strömungsöffnung 21b des Strömungsteilers 21 und mit dessen zweiten Ende in eine zweite Strömungsöffnung 22b des Strömungsteilers 22 mündet. Zusätzlich zu den Rohren 111, 112 kann die Rohranordnung noch weitere Rohre beispielsweise nämlich - wie auch in Fig. 3 angedeutet bzw. aus einer Zusammenschau der Fig. 2 und 3 ersichtlich - weitere zwei Rohre, mithin, wie u.a. auch in den eingangs erwähnten US-A 56 02 345, WO-A 96/08697, US-A 2017/0356777, WO-A 2019/081169, WO-A 2019/081170 oder auch der internationalen Patentanmeldung PCT/EP2020/084119 gezeigt, insgesamt vier Rohre aufweisen. Dementsprechend weist nach einer weiteren Ausgestaltung der Erfindung sowohl der Strömungsteiler 21 als auch der Strömungsteiler 22 jeweils, insb. genau, vier Strömungsöffnungen auf und weist die Rohranordnung ein, insb. zumindest abschnittsweise gekrümmtes und/oder zumindest abschnittsweise gerades und/oder zum Rohr 111 zumindest abschnittsweise paralleles, drittes Rohr 113 und ein, insb. zumindest abschnittsweise gekrümmtes und/oder zumindest abschnittsweise gerades und/oder zum Rohr 113 baugleiches und/oder zum Rohr 113 zumindest abschnittsweise paralleles, viertes Rohr 114 auf. Jedes der vorbezeichneten Rohre 113, 114 der Rohranordnung erstreckt sich zudem jeweils von einem jeweiligen ersten Ende des jeweiligen Rohrs bis zu einem jeweiligen zweiten Ende nämlichen Rohrs mit einer jeweiligen Rohrlänge und weist jeweils ein von einer, beispielsweise metallischen, Rohrwandung umschlossenes, sich jeweils vom jeweiligen ersten Ende des jeweiligen Rohrs bis zum jeweiligen zweiten Ende nämlichen Rohrs erstreckenden Lumen auf. Auch jedes der Rohre 113, 114 ist zudem jeweils an jeden der Strömungsteiler 21, 22 angeschlossen, derart, daß das Rohr 113 mit dessen ersten Ende in eine dritte Strömungsöffnung 21c des Strömungsteilers 21 und mit dessen zweiten Ende in eine dritte Strömungsöffnung des Strömungsteilers 22 und das Rohr 114 mit dessen ersten Ende in eine vierte Strömungsöffnung 21d des Strömungsteilers 21 und mit dessen zweiten Ende in eine vierte Strömungsöffnung 22d des Strömungsteilers 22 mündet; dies im besonderen in der Weise, daß die Rohranordnung genau vier Rohre, mithin außer den vorbezeichneten Rohren 111, 112, 121, 122 kein weiteres an den Strömungsteiler 21 und den Strömungsteiler 22 angeschlossenes Rohr aufweist.

Für den erwähnten Fall, daß die Rohre der Rohranordnung gekrümmt sind, entspricht die vorbezeichnete Rohrlänge einer gestreckten Länge bzw. einer Länge einer gedachten Mittellinie des jeweiligen Rohrs. Die Rohrlänge des Rohrs 111 ist vorzugsweise gleich der Rohrlänge des Rohrs 112. Im Fall von einer Rohranordnung mit vier Rohren ist die Rohrlänge des Rohrs 113 vorzugsweise gleich der Rohrlänge des Rohrs 1114; dies beispielsweise auch derart, daß die Rohrlänge des Rohrs 111 lediglich gleich der Rohrlänge des Rohrs 112, gleichwohl größer als die Rohrlänge sowohl des Rohrs 113 als auch des Rohrs 114, bzw. ist die Rohrlänge des Rohrs 113 lediglich gleich der Rohrlänge des Rohrs 114, gleichwohl kleiner als die Rohrlänge sowohl des Rohrs 111 als auch des Rohrs 112. Die Rohrwandung jedes der Rohre der Rohranordnung weist nach einer weiteren Ausgestaltung der Erfindung jeweils eine vorgegebene - beispielsweise auch im wesentlichen einheitliche - Wandstärke auf und kann - wie bei Rohranordnungen der in Rede stehenden Art bzw. damit gebildeten Meßwandlern bzw. Meßsystemen durchaus üblich - beispielsweise aus gleichem Material und/oder einem Metall, insb. nämlich jeweils einem Edelstahl oder jeweils einer Nickelbasislegierung, bestehen; dies beispielsweise auch derart, daß die Rohrwandung jedes der Rohre der Rohranordnung eine Wandstärke aufweist, die gleich einer Wandstärke des anderen Rohrs bzw. jedes der anderen Rohre ist und/oder daß jedes der Rohre der Rohranordnung ein Kaliber, nämlich einen Innendurchmesser aufweist, das gleich einem Kaliber des anderen Rohrs bzw. jedes der anderen Rohre ist. Nach einer weiteren Ausgestaltung der Erfindung weist jedes der Rohre jeweils ein Kaliber, das nicht weniger als 1 mm, beispielsweise auch jeweils mehr als 10 mm beträgt und/oder weist die Rohrwandung jedes der Rohre jeweils eine kleinste Wandstärke auf, die nicht weniger als 0,5 mm, beispielsweise auch mehr als 1,5 mm beträgt und/oder die gleich ist der kleinsten Wandstärke der Rohrwandung jedes der anderen der Rohre. Die Rohre der Rohranordnung können zudem beispielsweise jeweils einstückig ausgebildet, beispielsweise nämlich nahtlos oder zumindest im Falle einer Rohrwandung aus Metall mit einer geschweißten Naht hergestellt sein, und/oder jeweils durch Biegen eines rohrförmigen Halbzeugs geformt sein, beispielsweise derart, daß jedes der Rohre im wesentlichen V-förmig ausgebildet ist bzw. eine V-förmige Silhouette aufweist und/oder daß jedes der Rohre im Ergebnis eine in einer einzigen (Biege-)Ebene liegende Rohrform aufweist. Für den vorbezeichneten Fall, daß die Rohranordnung vier Rohre aufweist, können die Rohre beispielsweise auch so ausgebildet sein, daß sie lediglich paarweise baugleich sind, beispielsweise derart, daß das Rohr 111 lediglich zum Rohr 112 baugleich ist und daß das Rohr 113 lediglich zum Rohr 114 baugleich ist.

Zum Einstellen mechanischer Schwingungseigenschaften der Rohranordnung, nicht zuletzt zum Abstimmen einer oder mehrerer Resonanzfrequenzen von deren Rohren, kann die Rohranordnung, wie auch in Fig. 1 angedeutet, ferner ein, insb. vom Strömungsteiler 22 weiter entfernt als vom Strömungsteiler 21 positioniertes, mit jedem von deren Rohren mechanisch verbundenes, beispielsweise plattenförmiges, erstes Kopplerelement 23 sowie wenigstens ein, insb. vom Strömungsteiler 21 weiter entfernt als vom Strömungsteiler 22 positioniertes, mit jedem von deren Rohren mechanisch verbundenes, beispielsweise plattenförmiges und/oder zum Kopplerelement 23 baugleiches, zweites Kopplerelement 24 aufweisen. Zum Verbinden der Rohranordnung bzw. des damit gebildeten Meßwandlers oder Meßsystems mit der vorbezeichneten, den Meßstoff FL führenden Prozeßleitung können zudem der Strömungsteiler 21 einen - beispielsweise dem Anschluß der Rohranordnung an ein im Betrieb das Fluid FL zuführendes Leitungssegment nämlicher Prozeßleitung dienlichen - ersten Anschlußflansch und der Strömungsteiler 22 einen - beispielsweise dem Anschluß der Rohranordnung an ein das Fluid FL wieder abführendes Leitungssegment der Prozeßleitung dienlichen - zweiten Anschlußflansch aufweisen. An jedem der vorbezeichneten Anschlußflansche kann beispielsweise jeweils eine Dichtfläche zum fluiddichten bzw. leckagefreien Verbinden der Rohranordnung mit dem jeweils korrespondierenden Leitungssegment der Prozeßleitung ausgebildet sein.

Nach einer weiteren Ausgestaltung der Erfindung weist das Meßsystem ferner ein, insb. bieg- und/oder verwindungssteifes, Trägergerüst 100 auf, wobei - wie auch in Fig. 1 schematisch dargestellt - nämliches Trägergerüst 100 und die Rohranordnung mittels deren Strömungsteiler 21, 21 aneinander, beispielsweise wieder lösbar, befestigt sind. Zum Schutz des Meßwandlers bzw. dessen Komponenten vor schädlichen Umwelteinflüssen, zur Vermeidung von unerwünschten Schallemissionen durch die vibrierenden Rohre oder auch zum Auffangen von aus einer leckgeschlagenen Rohranordnung ausgetretenem Meßstoff kann, wie bei vibronischen Meßsystemen der in Rede stehenden Art durchaus üblich, das vorbezeichnete Trägergerüst 100 auch als ein die Rohre 111, 112 der Rohranordnung umhüllendes Wandler-Schutzgehäuse ausgebildet sein, beispielsweise auch derart, daß nämliches Wandler-Schutzgehäuse eine Druckfestigkeit aufweist, die größer als eine größte Druckfestigkeit der Rohre der Rohranordnung ist und/oder die mehr als 50 bar beträgt.

Beim erfindungsgemäßen Meßsystem ist, wie bereits erwähnte, jedes der Rohre der Rohranordnung, mithin ist jedes der Rohre 111, 112 und ggf. auch der Rohre 113, 114 im besonderen jeweils eingerichtet, von Meßstoff FL (bzw. einem Teilvolumen davon) durchströmt und währenddessen vibrieren gelassen zu werden. Dafür weist die Erregeranordnung beim erfindungsgemäßen Meßsystem zwei, beispielsweise elektrodynamische und/oder einander baugleiche, Schwingungserreger 31, 32 auf, von denen ein, beispielsweise elektrodynamischer oder piezoelektrischer, erster Schwingungserreger 31 mechanisch mit dem Rohr 112 (gleichwohl nicht mit dem Rohr 112) verbunden, beispielsweise nämlich mittig am Rohr 111 positioniert, ist, insb. nämlich keine mit dem Rohr 112 mechanisch verbundene (Erreger-)Komponente aufweist, und von denen ein, beispielsweise elektrodynamischer oder piezoelektrischer, zweiter Schwingungserreger 32 mechanisch mit dem Rohr 112 (gleichwohl nicht mit dem Rohr 111) verbunden, beispielsweise nämlich mittig am Rohr 112 positioniert, ist, insb. nämlich keine mit dem Rohr 111 mechanisch verbundene (Erreger-)Komponente aufweist. Jeder der Schwingungserreger 31, 32 ist zudem jeweils eingerichtet, elektrische Leistung mit einem zeitlich veränderlichen elektrischen Strom in mechanische Leistung zu wandeln, insb. derart, daß an einem jeweiligen, nämlich mittels des jeweiligen Schwingungserregers am damit jeweils mechanisch verbundenen Rohr gebildeten Angriffspunkt eine zeitlich veränderliche Antriebskraft auf das jeweilige Rohr wirkt. Nach einer weiteren Ausgestaltung der Erfindung ist ferner vorgesehen, daß die Erregeranordnung außer dem Schwingungserreger 31 keinen weiteren mechanisch mit dem Rohr 111 verbundenen Schwingungserreger aufweist und/oder daß die Erregeranordnung außer dem Schwingungserreger 32 keinen weiteren mechanisch mit dem Rohr 112 verbundenen Schwingungserreger aufweist.

Für den vorbezeichneten Fall, daß die Rohranordnung vier Rohre aufweist, ist nach einer weiteren Ausgestaltung der Erfindung der Schwingungserreger 31 eingerichtet, mechanische Schwingungen der beiden Rohre 111, 113 anzuregen und ist der Schwingungserreger 32 eingerichtet, mechanische Schwingungen der beiden anderen Rohre 112, 114 anzuregen; dies im besonderen in der Weise, daß der Schwingungserreger 31 differenziell auf die die beiden Rohre 111, 113 wirkt, nämlich lediglich gegengleiche Anregungskräfte in die beiden Rohre 111, 113 einleiten kann bzw. einleitet, und daß der Schwingungserreger 32 differenziell auf die beiden Rohre 112, 114 wirkt, nämlich lediglich gegengleiche Anregungskräfte in die beiden Rohre 112, 114 einleiten kann bzw. einleitet. Der Schwingungserreger 31 kann dafür beispielsweise sowohl mit dem Rohr 111 als auch mit dem Rohr 113 mechanisch verbunden sein und der Schwingungserreger 32 kann entsprechend sowohl mit dem Rohr 112 als auch mit dem Rohr 114 mechanisch verbunden sein, beispielsweise nämlich derart, daß die vorbezeichnete jeweilige Antriebskraft auf sowohl das Rohr 111 als auch das Rohr 113 bzw. auf sowohl das Rohr 112 als auch das Rohr 114 wirkt. Nicht zuletzt für den anderen Fall, daß das Meßsystem das vorbezeichnete Trägergerüst und die Rohranordnung genau zwei Rohre aufweist, können die Schwingungserreger 31, 32, beispielsweise anteilig mit dem Trägergerüst 100 mechanisch verbunden sein, beispielsweise derart, daß die vorbezeichnete jeweilige Antriebskraft auf sowohl das Rohr 111 bzw. das Rohr 112 als auch jeweils auf das Trägergerüst wirkt.

Zum Erzeugen der vorbezeichneten Schwingungssignale s1, s2, s3, s4 weist die Sensoranordnung wenigstens vier, beispielsweise baugleiche und/oder voneinander beabstandete, Schwingungssensoren auf, von denen ein, beispielsweise elektrodynamischer oder optischer, erster Schwingungssensor 41 und ein zweiter Schwingungssensor 42 voneinander beabstandet, beispielsweise auch symmetrisch zum Schwingungserreger 31, am Rohr 111 positioniert sind und von denen ein, beispielsweise elektrodynamischer oder optischer, dritter Schwingungssensor 43 und ein, beispielsweise elektrodynamischer oder optischer, vierter Schwingungssensor 44 voneinander beabstandet, insb. symmetrisch zum Schwingungserreger 32, am Rohr 112 positioniert sind. Jeder der Schwingungssensoren 41, 42 ist jeweils eingerichtet, Schwingungsbewegungen des Rohrs 111 zu erfassen und entsprechend in das vorbezeichnete Schwingungssignal s1 bzw. das vorbezeichnete Schwingungssignal s2 zu wandeln und jeder der Schwingungssensoren 41, 42 ist jeweils eingerichtet, Schwingungsbewegungen des Rohrs 112 zu erfassen und entsprechend in das vorbezeichnete Schwingungssignal s3 bzw. das vorbezeichnete Schwingungssignal s4 zu wandeln; dies im besonderen in der Weise, daß jedes Schwingungssignale s1, s2, s3, s4 die entsprechenden Schwingungsbewegungen repräsentiert bzw. daß jedes der Schwingungssignale s1, s2, s3, s4 jeweils eine oder mehrere sinusförmige Signalkomponenten mit jeweils einer einer Schwingungsfrequenz von Schwingungsbewegungen des jeweiligen Rohrs 111 bzw. 112 entsprechenden Frequenz enthält. Wie auch in Fig. 1 angedeutet bzw. aus einer Zusammenschau der Fig. 1, 2 und 3 ohne weiteres ersichtlich, können die Schwingungsensoren 41, 42, 43, 44 zudem beispielsweise auch so positioniert sein, daß der Schwingungssensor 41 und der der Schwingungssensor 43 jeweils einlaßseitige Schwingungsbewegungen des Rohrs 111 erfassen und daß der Schwingungssensor 42 und der Schwingungssensor 44 jeweils ausaßseitige Schwingungsbewegungen des Rohrs 112 erfassen.

Zudem können die Schwingungssensoren beispielsweise auch in der Weise positioniert sein, daß der Schwingungssensor 41 gleichweit vom vorbezeichneten Strömungsteiler 21 beabstandet ist wie der Schwingungssensor 42 vom vorbezeichneten Strömungsteiler 22 und/oder daß der Schwingungssensor 43 gleichweit vom vorbezeichneten Strömungsteiler 21 beabstandet ist wie der Schwingungssensor 44 vom vorbezeichneten Strömungsteiler 22, und/oder in der Weise, daß die beiden Schwingungssensoren 41, 42 jeweils gleichweit vom vorbezeichneten Schwingungserreger 31 und/oder die beiden Schwingungssensoren 43, 44 jeweils gleichweit vom vorbezeichneten Schwingungserreger 32 positioniert sind.

Nicht zuletzt für den vorbezeichneten Fall, daß es sich bei den Schwingungssensoren um elektrodynamische, mithin nach Art einer Schwing- bzw. Tauchspule aufgebaute Schwingungssensoren handelt, ist nach einer weiteren Ausgestaltung der Erfindung vorgesehen, daß sowohl der Schwingungssensor 41 als auch der Schwingungssensor 42 zumindest anteilig wenigstens mit dem Rohre 111, insb. aber nicht mit dem Rohr 112, mechanischen verbunden ist und daß sowohl der Schwingungssensor 43 als auch der Schwingungssensor 44 zumindest anteilig wenigstens mit dem Rohr 112, insb. aber nicht mit dem Rohr 111, mechanischen verbunden ist. Für den anderen Fall, daß das Meßsystem ein Trägergerüst und die Rohranordnung genau zwei Rohre aufweist, können die Schwingungssensoren entsprechend auch anteilige mit dem Trägergerüst mechanischen verbunden sein; beispielsweise derart, daß die Schwingungssensoren 41, 42, 43, und 44 jeweils Schwingungsbewegungen der Rohre 111 bzw.112 relativ zum Trägergerüst erfassen. Dafür können die Schwingungssensoren 51, 52 mechanisch jeweils sowohl mit dem Rohr 111 als auch dem Trägergerüst verbunden sein und können die Schwingungssensoren 53, 54 mechanisch jeweils sowohl mit dem Rohr 112 als auch dem Trägergerüst verbunden sein. Für den anderen vorbezeichneten Fall, daß die Rohranordnung vier Rohre aufweist, kann, wie auch in Fig. 2 und 3 angedeutet bzw. aus deren Zusammenschau ohne weiteres ersichtlich, sowohl der Schwingungssensor 41 als auch der Schwingungssensor 42 mit jedem der beiden Rohre 111, 113 mechanischen verbunden sein und kann sowohl der Schwingungssensor 43 als auch der Schwingungssensor 44 mit jedem der beiden Rohre 112, 114 mechanischen verbunden sein, beispielsweise derart, daß der Schwingungssensor 41 und der Schwingungssensor 43 jeweils einlaßseitige Schwingungsbewegungen der Rohre 111, 112, 113 bzw. 114 erfassen und daß der Schwingungssensor 42 und der Schwingungssensor 44 jeweils auslaßseitige Schwingungsbewegungen der Rohre 111, 112, 113 bzw. 114 erfassen. Zudem können die Schwingungssensoren 41, 42 für diesen Fall dafür eingerichtet sein, entgegengesetzte, mithin gegenphasige, ggf. auch gegengleiche Schwingungsbewegungen der Rohre 111, 1113 zu erfasssen und in das (nämliche Schwingungsbewegungen jeweils repräsentierende) jeweilige Schwingungssignal s41, s42 zu wandeln und kann dementsprechend auch jeder der vorbezeichneten Schwingungssensoren 43, 44 dafür eingerichtet sein, entgegengesetzte, mithin gegenphasige, ggf. auch gegengleiche Schwingungsbewegungen der Rohre 112, 114 zu erfasssen und in das (nämliche Schwingungsbewegungen jeweils repräsentierende) jeweilige Schwingungssignal zu wandeln; dies beispielsweise auch derart, daß die Schwingungssensoren 41, 42 eingerichtet sind, die Schwingungsbewegungen der beiden Rohr 111, 113 differenziell zu erfassen, nämlich lediglich entgegengesetzte Schwingungsbewegungen nämlicher Rohre 111, 113 in das jeweilige Schwingungssignal s1, s2 zu wandeln, und daß die Schwingungssensoren 43, 44 eingerichtet sind, die Schwingungsbewegungen der beiden Rohr 112, 114 differenziell zu erfassen, nämlich lediglich entgegengesetzte Schwingungsbewegungen nämlicher Rohre 112, 114 in das jeweilige Schwingungssignal s3, s4 zu wandeln. Dafür können die Schwingungssensoren 51, 52 mechanisch jeweils sowohl mit dem Rohr 111 als auch dem Rohr 113 verbunden sein und können die Schwingungssensoren 53, 54 mechanisch jeweils sowohl mit dem Rohr 112 als auch dem Rohr 114 verbunden sein.

Zur weiteren Verbesserung der Genauigkeit mit der die Meßwerte X_{M} ermittelt werden, kann der Meßwandler - wie auch in Fig. 1 schematisch dargestellt - ferner auch dem Erfassen von Temperaturen innerhalb der Rohranordnung und dem Bereitstellen von dementsprechenden Temperaturmeßsignalen θ1, θ2 dienliche, beispielsweise jeweils direkt an einem der Rohre der Rohranordnung angebrachte, Temperatursensoren 71, 72 und/oder eine dem Erfassen von mechanischen Spannungen innerhalb der Rohranordnung und dem Bereitstellen von dementsprechenden Dehnungsmeßsignalen dienliche, beispielsweise jeweils direkt an einem der Rohre der Rohranordnung angebrachte, Dehnungssensoren aufweisen.

Wie bereits erwähnt umfaßt das Meßsystem zusätzlich zum Meßwandler 10 ein damit, mit der Erregeranordnung des Meßwandlers 10 als auch mit dessen Sensoranordnung elektrisch gekoppelte Meßsystem-Elektronik 20. Die Meßsystem-Elektronik 20 kann beispielsweise programmierbar und/oder fernparametrierbar ausgebildet, beispielsweise nämlich entsprechend mittels wenigstens einem Mikroprozessor und/oder wenigstens einem digitalen Signalprozessor (DSP) und/oder mittels eines programmierbaren Logikbausteins (FPGA) und/oder mittels eines kundenspezifisch programmierten Logikbausteins (ASIC) gebildet sein. Desweiteren kann die Meßsystem-Elektronik 20 mittels interner Energiespeicher und/oder von extern der Meßsystem-Elektronik 20 via Anschlußkabel mit der im Betrieb benötigten elektrischen Energie versorgt sein. Das elektrische Koppeln bzw. Anschließen des Meßwandlers 10 an die Meßsystem-Elektronik 20 kann mittels entsprechender elektrischer Anschlußleitungen und entsprechender Kabeldurchführungen erfolgen. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein. Die Meßsystem-Elektronik 20 kann zudem - wie auch in Fig. 1 schematisch dargestellt - beispielsweise in einem entsprechenden, insb. schlag- und/oder auch explosionsfest und/oder zumindest gegen Spritzwasser schützenden, eigenen Elektronik-Gehäuse 200 untergebracht und zudem so ausgelegt sein, daß sie im Betrieb des Meßsystems mit einem diesem übergeordneten (hier nicht dargestellten) elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten, beispielsweise auch Statusmeldungen, austauschen kann, wie etwa jeweils aktuelle Meßwerte oder der Steuerung des Meßsystems dienende Einstell- und/oder Diagnosewerte. Dementsprechend kann die Meßsystem-Elektronik 20 beispielsweise eine solche Sende- und Empfangsschaltung COM aufweisen, die im Betrieb von einer im vorbezeichneten Datenverarbeitungssystem vorgesehen, vom Meßsystem entfernten (zentrale) Auswerte- und Versorgungseinheit gespeist wird. Beispielsweise kann die Meßsystem-Elektronik 20 (bzw. deren vorbezeichnete Sende- und Empfangsschaltung COM zudem so ausgebildet sein, daß sie über eine, ggf. auch als 4-20 mA-Stromschleife konfigurierte Zweileiter-Verbindung 2L mit dem vorbezeichneten externen elektronischen Datenverarbeitungssystem elektrisch verbindbar ist und darüber sowohl die für den Betrieb des Meßsystems erforderliche elektrische Leistung von der vorbezeichneten Auswerte- und Versorgungseinheit des Datenverarbeitungssystems beziehen als auch, ggf. digitalisierte Meßwerte zum Datenverarbeitungssystem übermitteln kann, beispielsweise durch (Last-)Modulation eines von der Auswerte- und Versorgungseinheit gespeisten Versorgungsgleichstroms Versorgungsgleichstromes. Zudem kann die Meßsystem-Elektronik 20 auch so ausgebildet sein, daß sie nominell mit einer maximalen Leistung von 1 W oder weniger betrieben werden kann und/oder eigensicher ist. Die Meßsystem-Elektronik 20 kann zudem beispielsweise auch modular aufgebaut sein, derart, daß diverse Elektronik-Komponenten der Meßsystem-Elektronik 20, wie etwa eine, beispielsweise mittels eines oder mehrerer Mikroprozessoren und/oder mittels eines oder mehrerer digitaler Signalprozessoren gebildete, Meß- und Auswerteschaltung DSV zum Verarbeiten und Auswerten der vom Meßwandler 10 bereitgestellten (Schwingungs-)Meßsignalen, eine Treiberschaltung Exc zum Ansteuern des Meßwandlers bzw. dessen Erregeranordnung, eine interne Energieversorgungsschaltung VS zum Bereitstellen einer oder mehrerer interner Betriebsspannungen und/oder die vorbezeichnete, der Kommunikation mit einem übergeordneten Meßdatenverarbeitungssystem bzw. einem externen Feldbus dienliche Sende- und Empfangsschaltung COM, jeweils auf einer oder mehreren eigenen Leiterplatten angeordnet und/oder jeweils mittels eines oder mehreren eigenen Mikroprozessoren gebildet sind. Wie aus der Fig. 1 ersichtlich, kann die vorbezeichnete Sende- und Empfangsschaltung COM beispielsweise auch für eine der Ausgabe (xₘ) von, beispielsweise von der vorbezeichneten Meß- und Steuerschaltung DSV, Meßsystem intern ermittelten Meßwerten (X_{M}) vorgesehen sein. Dementsprechend kann die Sende- und Empfangsschaltung COM zudem eingerichtet sein, empfangene Meßwerte X_{M} in ein nämliche Meßwerte X_{M} bereitstellendes, beispielsweise zu einem Industriestandard, beispielsweise nämlich der DIN IEC 60381-1:1985-11, der IEC 61784-1 CPF1 (Foundation Fieldbus), der IEC 61784-1 CPF3 (Profibus), IEC 61158 oder der IEC 61784-1 CPF9 (HART), konformes, Ausgabesignal xₘ zu wandeln. Zum Visualisieren von Meßsystem intern erzeugten Meßwerten (X_{M}) und/oder Meßsystem intern generierten Statusmeldungen, wie etwa eine Fehlermeldung oder einen Alarm, vor Ort kann das Meßsystem desweiteren ein, zumindest zeitweise auch mit der Meßsystem-Elektronik 20 kommunizierendes Anzeige- und Bedienelement HMI aufweisen, wie etwa ein in vorbezeichnetem Elektronik-Gehäuse 200 hinter einem darin entsprechend vorgesehenen Fenster plaziertes LCD-, OLED- oder TFT-Display sowie eine entsprechende Eingabetastatur und/oder ein Touchscreen. Für den Fall, daß der Meßsystem das vorbezeichnete, zumal als Wandler-Schutzgehäuse ausgebildtes Trägergerüst 100 aufweist, kann das Elektronik-Schutzgehäuse 200, wie auch in Fig. 1 schematsich dargestell, beispielsweise an nämlichen Trägergerüst befestigt sein.

Die Meßsystem-Elektronik 20 ist im besonderen dafür eingerichtet, den Schwingungserreger 31 zu bestromen, nämlich ein elektrisches erstes Treibersignal e1 in den ersten Schwingungserreger 31 einzuspeisen, sowie den zweiten Schwingungserreger 32 zu bestromen, nämlich simultan zum ersten Treibersignal e1 ein elektrisches zweites Treibersignal e2 in den zweiten Schwingungserreger 32 einzuspeisen, wodurch das Rohr 111 bzw. die Rohre 111, 113 erzwungene mechanische Schwingungen, beispielsweise nämlich Biegeschwingungen, mit einer oder mehreren durch das Treibersignal e1 vorgegebenen Schwingungsfrequenzen und das Rohr 112 bzw. die Rohre 112, 114 erzwungene mechanische Schwingungen, beispielsweise nämlich Biegeschwingungen, mit einer oder mehreren durch das Treibersignal e2 vorgegebenen Schwingungsfrequenzen ausführen. Zum Generieren der Treibersignale e1, e2 kann die Meßsystem-Elektronik 20 - wie auch in Fig. 1 schematisch dargestellt und wie bei derartigen Meßsystemen durchaus üblich - beispielsweise ein oder mehrere separate, beispielsweise jeweils mittels einer oder mehreren Phasenregelschleifen (PLL - *phase locked loop*) gebildete, Treiberschaltungen Exc aufweisen.

Darüberhinaus ist die Meßsystem-Elektronik des erfindungsgemäßen Meßsystems eingerichtet, in einem ersten Betriebsmodus sowohl das Treibersignal e1 mit wenigstens einer ersten Nutz-Stromkomponente eN11, nämlich einer hinsichtlich einer Stromstärke dominierenden oder einzigen sinusförmigen Stromkomponente mit einer (Wechselstrom-)Frequenz und einem Phasenwinkel zu erzeugen und in den Schwingungserreger 31 einzuspeisen, als auch das Treibersignal e2 mit wenigstens einer ersten Nutz-Stromkomponente eN21, nämlich einer hinsichtlich einer Stromstärke dominierenden oder einzigen sinusförmigen Stromkomponente mit einer der (Wechselstrom-)Frequenz der Nutz-Stromkomponenten eN11 des Treibersignals e1 entsprechenden (Wechselstrom-)Frequenz und einem vom Phasenwinkel nämlicher Nutz-Stromkomponenten eN11 des Treibersignals e1, beispielsweise nämlich um 180°, abweichenden Phasenwinkel zu erzeugen und in den Schwingungserreger 32 einzuspeisen, derart, daß die Treibersignale e1, e2 eine erste Antriebs-Phasendifferenz Δe1, nämlich eine, insb. 180° betragende, Differenz zwischen den Phasenwinkeln von deren (ersten) Nutz-Stromkomponenten eN11, eN21 aufweisen und daß das Rohr 111 zumindest anteilig, insb. überwiegend, erste Nutzschwingungen, nämlich durch den (bestromten) Schwingungserreger 31 erzwungene mechanische Schwingungen mit wenigstens einer ersten Nutzfrequenz fN1, nämlich einer der (Wechselstrom-)Frequenz der Nutz-Stromkomponente eN11 entsprechenden Schwingungsfrequenz und mit einer ersten Nutzphase, nämlich einer, insb. zumindest am Ort des Schwingungserregers 31, dem Phasenwinkel der Nutz-Stromkomponente eN11 entsprechenden Schwingungsphase, und das Rohr 12 zumindest anteilig, insb. überwiegend, zweite Nutzschwingungen, nämlich durch den (bestromten) Schwingungserreger 32 erzwungene mechanische Schwingungen mit der ersten Nutzfrequenz fN1 und mit einer zweiten Nutzphase, nämlich einer, insb. zumindest am Ort des zweiten Schwingungserregers, dem Phasenwinkel der Nutz-Stromkomponenten eN21 des Treibersignals e2 entsprechenden Schwingungsphase ausführt; dies im besonderen in der Weise, daß die zweiten Nutzschwingungen (des Rohrs 112) gegenphasig bzw. gegengleich zu den ersten Nutzschwingungen (des Rohrs 111) sind bzw. daß die ersten und zweiten Nutzschwingungen geeignet sind, im strömenden Meßstoff vom Massestrom abhängige Corioliskräfte zu bewirken. Infolge der vorbezeichneten ersten und zweiten Nutzschwingungen weist zudem jedes Schwingungssignale s1, s2, s3, s4 - wie auch in Fig. 4 angedeutet - jeweils eine erste (spektrale) Nutz-Signalkomponente sN11, sN21, sN31 bzw. sN41, nämlich eine jeweilige sinusförmige Signalkomponente mit einer der ersten Nutzfrequenz fN1 entsprechenden Frequenz auf. Nach einer weiteren Ausgestaltung der Erfindung ist die Meßsystem-Elektronik ferner eingerichtet, im ersten Betriebsmodus die Treibersignale e1, e2 mit einer, insb. vorgebbaren und/oder veränderlichen, ersten Antriebs-Amplitudendifferenz, nämlich einer, beispielsweise auch Null betragenden, Differenz zwischen einer Amplitude der Nutz-Stromkomponenten eN11 des Treibersignals e1 und einer Amplitude der Nutz-Stromkomponenten eN21 des Treibersignals e2 zu erzeugen und in den Schwingungserreger 31 bzw. 32 einzuspeisen.

Die im Betrieb des Meßsystems in der Meßsystem-Elektronik 20, beispielsweise nämlich in einem oder mehreren der vorbezeichneten Mikroprozessoren bzw. digitalen Signalprozessoren der Meßsystem-Elektronik 20, ausgeführten Programm-Codes können jeweils z.B. in einem oder mehreren nicht flüchtigen, nämliche digitale Daten auch ohne eine angelegte Betriebsspannung, vorzuhaltenden Datenspeichern (EEPROM) der Meßsystem-Elektronik 20 persistent gespeichert sein und beim Starten derselben in einen in der Meßsystem-Elektronik 20 bzw. der vorbezeichneten Meß- und Auswerteschaltung DSV vorgesehenen, z.B. im Mikroprozessor integrierten, flüchtigen Datenspeicher (RAM) geladen werden. Die Schwingungssignale s1, s2, s3, s4 sind für eine Verarbeitung im Mikroprozessor bzw. im digitalen Signalprozessor mittels entsprechender Analog-zu-digital-Wandler (A/D) selbstverständlich zunächst in entsprechende Digitalsignale umzuwandeln, beispielsweise nämlich indem die jeweilige Signalspannung jedes der - hier elektrischen- Schwingungssignale s1, s2, s3, s4 jeweilis geeignete digitalisiert wird, vgl. hierzu beispielsweise die eingangs erwähnten US-B 63 11 136. Dementsprechend können in der Meßsystem-Elektronik 20, beispielsweise nämlich in der vorbezeichneten Meß- und Auswerteschaltung DSV, entsprechende Analog-zu-Digital-Wandler für die Schwingungssignale s1, s2, s3, s4 und/oder wenigstens ein nicht flüchtiger elektronischer Datenspeicher EEPROM vorgesehen sein, der dafür eingerichtet ist, digitale Daten, beispielsweise nämlich auch ohne eine angelegte Betriebsspannung, vorzuhalten.

Die vorbezeichnete (Wechselstrom-)Frequenz der Nutz-Stromkomponenten eN11 bzw. eN21, mithin die erste bzw. zweite Nutzfrequenz kann beispielsweise einer von der Dichte des in der Rohranordnung geführten Meßstoffs FL abhängigen Resonanzfrequenz der Rohranordnung - beispielsweise nämlich einer niedrigsten Resonanzfrequenz des Rohrs 111 und/oder des Rohrs 112- entsprechen. Dementsprechend ist Meßsystem-Elektronik 20 nach einer weiteren Ausgestaltung der Erfindung ferner eingerichtet ist, die Nutz-Stromkomponente eN1 des Treibersignals e1 und die Nutz-Stromkomponente eN2 des Treibersignals e2 jeweils mit einer (Wechselstrom-)Frequenz bereitzustellen, die von einer Resonanzfrequenz fr1 des Rohrs 111 um weniger als 1% nämlicher Resonanzfrequenz fr1 und/oder um weniger als 1 Hz abweicht bzw. die von einer Resonanzfrequenz fr2 des Rohrs 112 um weniger als 1% nämlicher Resonanzfrequenz fr2 und/oder um weniger als 1 Hz abweicht. Für den typischen Fall, daß die vorbezeichneten Resonanzfrequenzen fr1, fr2 gleich groß sind (fr1 = fr2), mithin die Rohre 111, 112 wenigstens eine gemeinsame Resonanzfrequenz fr12 aufweisen, kann die Meßsystem-Elektronik ferner insbesondere eingerichtet sein, die Nutz-Stromkomponente eN1, eN2 jeweils mit einer (Wechselstrom-)Frequenz bereitzustellen, die von der vorbezeichneten gemeinsamen Resonanzfrequenz fr12 um weniger als 1% nämlicher Resonanzfrequenz fr12 und/oder um weniger als 1 Hz abweicht. Bei der vorbezeichneten gemeinsame Resonanzfrequenz fr12 kann es sich beispielsweise um eine Resonanzfrequenz fr12 einer dem Meßwandler innewohnenden (ersten) natürlichen (Biege-)Schwingungsmode, beispielsweise nämlich einer Biegeschwingungsgrundmode, handeln, in der die beiden Rohre 111, 112 gegengleich bzw. gegenphasige mechanische (Biege-)Schwingungen ausführen können bzw. ausführen, mithin kann die Meßsystem-Elektronik auch eingerichtet sein, im ersten Betriebsmodus nämliche gegenphasigen mechanischen Schwingungen erzwingende Treibersignale e1, e2 in die Schwingungserreger 31, 32 einzuspeisen.

Neben der Generierung der beiden Treibersignale e1, e2 ist die Meßsystem-Elektronik 20 zudem eingerichtet, im ersten Betriebsmodus die Schwingungssignale s1, s2, s3, s4 zu empfangen und auszuwerten, nämlich anhand der Schwingungssignale s1, s2, s3, s4, nicht zuletzt zumindest anhand jeweils einer der vorbezeichneten Nutz-Signalkomponenten sN11, sN21, sN31, sN41, die vorbezeichneten Meßwerte für die wenigstens eine physikalische Meßgröße zu ermitteln, beispielsweise nämlich anhand von der vorbezeichneten ersten Phasendifferenz Δcp12 und/oder anhand von der vorbezeichneten zweiten Phasendifferenz Δϕ34, Massenstrom-Meßwerte, nämlich die Massenstrom des Meßstoffs FL repräsentierende Meßwerte X_{M} zu generieren und/oder anhand wenigstens einer Signalfrequenz wenigstens eines der Schwingungssignale s1, s2, s3, s4, beispielsweise nämlich anhand der vorbezeichneten Nutzfrequenz fN 1 wenigstens eines der Schwingungssignale s1, s2, s3, s4, Dichte-Meßwerte, nämlich die Dichte ρ des Meßstoffs FL repräsentierende Meßwerte zu generieren; dies beispielsweise auch in einer bei Meßsystemen der in Rede stehenden Art, nicht zuletzt auch in für die aus den eingangs erwähnten US-A 2006/0266129, der US-A 2007/0113678, der US-A 2010/0011882, der US-A 2012/0123705, der US-A 2017/0356777, der US-A 56 02 345, der US-A 59 26 096, der US-B 64 57 372, der WO-A 2009/136943, der WO-A 2019/017891, der WO-A 2019/081169, der WO-A 2019/081170, der WO-A 87/06691, der WO-A 96/05484, der WO-A 96/08697, der WO-A 97/26508, der WO-A 99/39164 oder der WO-A 2020/126285 bekannten Meßsystemen typischen Weise.

Nach einer weiteren Ausgestaltung der Erfindung ist die Meßsystem-Elektronik 20 dementsprechend ferner eingerichtet, im ersten Betriebsmodus anhand der vorbezeichneten Phasendifferenzen Δϕ12, Δcp34 den Massenstrom repräsentierende Massenstrom-Meßwerte zu generieren, beispielsweise mittels einer in die Meßsystem-Elektronik einprogrammierten Phasendifferenz-zu-Massenstrom-Meßwert-Kennlinienfunktion, nämlich einer, ggf. auch als (lineare) Parameterfunktion ausgebildete Kennlinienfunktion des Meßsystem-Elektronik, gemäß der damit eine ermittelte Phasendifferenz in Massenstrom-Meßwerte Xₘ umgerechnet werden. Nach einer weiteren Ausgestaltung der Erfindung ist die Meßsystem-Elektronik 20 zudem eingerichtet, die Resonanzfrequenz fR1 bzw. die Resonanzfrequenz fr12 zu ermitteln, beispielsweise nämlich anhand der Nutz-Stromkomponente eN1, eN2 wenigstens eines der Treibersignale e1, e2 und/oder der Nutz-Signalkomponente sN11, sN21, sN31 bzw. sN41 wenigstens eines der Schwingungsmeßsignale s1, s2, s3, s4 nämliche Resonanzfrequenz fR1 bzw. fR12 repräsentierende Frequenzwerte X_{f} zu ermitteln; dies beispielsweise auch, um anhand von solchen Frequenzwerten X_{f} die Dichte repräsentierende Dichte-Meßwerte X_{ρ} zu berechnen, etwa gemäß einer entsprechenden Resonanzfrequenz-zu-Dichte-Meßwert-Kennlinienfunktion der Meßsystem-Elektronik. Alternativ oder in Ergänzung kann die Meßsystem-Elektronik 20 auch dafür vorgesehen bzw. eingerichtet sein, im ersten Betriebsmodus anhand wenigstens eines der Schwingungsmeßsignale s1, s2, s3, s4, und/oder wenigstens eines der Treibersignale e1, e2 Viskositäts-Meßwerte, nämlich die Viskosität des Meßstoffs FL repräsentierende Meßwerte zu generieren, beispielsweise gemäß einer Dämpfung-zu-Viskosität-Meßwert-Kennlinienfunktion der Meßsystem-Elektronik. Die Verarbeitung der Schwingungsmeßsignale s1, s2, s3, s4 ggf. auch ein bei derartigen Meßsystemen durchaus übliches Ansteuern der vorbezeichneten Treiberschaltung(en) Exc kann - wie auch in Fig. 2 bzw. 3 jewiels schematisch dargestellt - beispielsweise auch mittels der vorbezeichneten Meß- und Auswerteschaltung DSV erfolgen.

Die im Betrieb des Meßsystems in der Meßsystem-Elektronik 20, beispielsweise nämlich in einem oder mehreren der vorbezeichneten Mikroprozessoren bzw. digitalen Signalprozessoren der Meßsystem-Elektronik 20, ausgeführten Programm-Codes können jeweils z.B. in einem oder mehreren nicht flüchtigen, nämliche digitale Daten auch ohne eine angelegte Betriebsspannung, vorzuhaltenden Datenspeichern (EEPROM) der Meßsystem-Elektronik 20 persistent gespeichert sein und beim Starten derselben in einen in der Meßsystem-Elektronik 20 bzw. der vorbezeichneten Meß- und Auswerteschaltung DSV vorgesehenen, z.B. im Mikroprozessor integrierten, flüchtigen Datenspeicher (RAM) geladen werden. Die Schwingungsmeßsignale s1, s2, s3, s4 sind für eine Verarbeitung im Mikroprozessor bzw. im digitalen Signalprozessor mittels entsprechender Analog-zu-digital-Wandler (A/D) selbstverständlich zunächst in entsprechende Digitalsignale umzuwandeln, beispielsweise nämlich indem die jeweilige Signalspannung jedes der - hier elektrischen- Schwingungsmeßsignale s1, s2, s3, s4 jeweils geeignete digitalisiert wird, vgl. hierzu beispielsweise die eingangs erwähnten US-B 63 11 136. Dementsprechend können in der Meßsystem-Elektronik 20, beispielsweise nämlich in der vorbezeichneten Meß- und Auswerteschaltung DSV, entsprechende Analog-zu-Digital-Wandler für die Schwingungsmeßsignale s1, s2, s3, s4 und/oder wenigstens ein nicht flüchtiger elektronischer Datenspeicher EEPROM vorgesehen sein, der dafür eingerichtet ist, digitale Daten, beispielsweise nämlich auch ohne eine angelegte Betriebsspannung, vorzuhalten. Zur weiteren Verbesserung der Genauigkeit mit der die Meßwerte X_{M} schlußendlich ermittelt werden, kann der Meßwandler - wie auch in Fig. 2 bzw. 3 jeweils schematisch dargestellt und wie bei solchen Meßsystemen durchaus üblich - ferner auch dem Erfassen von Temperaturen innerhalb der Rohranordnung und dem Bereitstellen eines oder mehrerer dementsprechender Temperaturmeßsignale θ1 (θ1, θ2) dienliche, beispielsweise jeweils direkt am wenigstens einen Rohre der Rohranordnung angebrachte, Temperatursensoren 71 (71, 72) und/oder eine dem Erfassen von mechanischen Spannungen innerhalb der Rohranordnung und dem Bereitstellen von eines oder mehrerer dementsprechender Dehnungsmeßsignalen dienliche, beispielsweise jeweils direkt an einem der Rohre der Rohranordnung angebrachte, Dehnungssensoren aufweisen und kann die Meßsystem-Elektronik ferner eingerichtet sein, die Temperatur- bzw. Dehnungsmeßsignale zu empfangen und zu verarbeiten, insb. nämlich bei der Ermittlung der Meßwerte mit zu verwenden.

Wie bereits erwähnt, können Meßwandler vom Vibrationstyp, mithin die damit gebildeten vibronischen Meßsysteme während ihrer Laufzeit einer Vielzahl von Belastungen ausgesetzt sein, die erhebliche Abweichungen des Meßwandlers bzw. des Meßsystems von einem dafür vorab ermittelten Referenzzustand, beispielsweise einem jeweiligen anfänglichen Auslieferungszustand und/oder einem Zustand bei der Inbetriebnahme des Meßsystems vor Ort, bewirken können; dies im besonderen auch in der Weise, daß die Rohranordnung, etwa aufgrund von Überbelastungen, derartige Beschädigungen erfährt, daß sich die Schwingungseigenschaften des wenigstens einen Rohrs ändern, bzw. daß der Meßwandler insgesamt beschädigt ist, weil dadurch u.a. auch eine oder mehrere von dem Meßwandler immanenten Systemfunktionen (Übertragungsfunktionen) bzw. im Meßsystem entsprechend gebildete Meßfunktionen im Vergleich zu einer jeweiligen (Referenz-)Systemfunktion des ursprünglichen Meßwandlers bzw. (Referenz-)Meßfunktion des Meßsystems dementsprechend verändert sind. Änderungen der Schwingungseigenschaften des wenigstens einen Rohrs können beispielsweise auf Änderungen einer oder mehrerer modaler, nämlich jeweils eine der vorbezeichneten Schwingungsmoden bestimmende Biegesteifigkeit, Masse und/oder Dämpfung zurückzuführen sein und darin resultieren, daß eine oder mehrere (Eigen-)Schwingungsformen von deren jeweiligen Pendant bei im Referenzzustand befindlichem Meßwandler abweichen; dies regelmäßig auch derart, daß eine ursprüngliche - typischerweise im wesentlichen homogene bzw. gleichmäßige - Verteilung der vorbezeichneten (System-)Parameter (modale) Biegesteifigkeit, (modale) Masse und (modale) Dämpfung verändert wird, nämlich zunehmend ungleichmäßiger verteilt wird. Darüberhinaus können während der Laufzeit des Meßsystems auch der wenigstens eine Schwingungserreger wie auch jeder der Schwingungssensoren, etwa durch thermisch bedingte (Über-)Belastung bzw. Alterung, für die Meßgenauigkeit relevanten Veränderungen unterworfen sein, etwa derart, daß im Ergebnis auch eine elektrische Impedanz des Meßwandlers verändert ist. (Über-)Belastungen die zu einer Beschädigung der Rohranordnung bzw. des Meßwandlers insgesamt führen können, können beispielsweise hohe (Über-)Temperaturen oder Temperaturshocks, zu hohe Drücke oder Druckstöße im Meßstoff, seitens der Prozeßleitung auf den Meßwandler ausgeübte zu hohe Einspannkräfte und/oder zu starke Rüttelkräfte, schädliche Eigenschaften des im Meßwandler geführten Meßstoffs oder auch Materialermüdungen sein und u.a. in einer signifikanten Reduzierung der Wandstärke der Rohrwandung, etwa aufgrund von vom Meßstoff bewirkter Korrosion und/oder Abrasion der Rohrwandung des wenigstens einen Rohrs, oder in einer signifikanten Reduzierung eines Strömungsquerschnitts der Rohranordnung, etwa infolge einer zumindest teilweisen Verstopfung der Rohranordnung und/oder infolge eines festen Belags auf der Meßstoff berührenden Innenseite der Rohrwandung, in einer plastische Deformation des wenigstens einen Rohrs oder auch in einer Rißbildung innerhalb der Rohranordnung, beispielsweise nämlich der Rohrwandung, resultieren, mithin sogar dazu führen, daß der Meßwandler u.U. auch nicht mehr sicher ist.

Die vorbezeichneten Beschädigungen des Meßwandlers bzw. dessen Rohranordnung können insbesondere dazu führen, daß ein oder mehrere Systemfunktionen bzw. eine entsprechende Meßfunktion charakterisierende (System-)Parameter, beispielsweise ein (Skalen-)Nullpunkt und/oder eine auf eine Änderung des Massenstroms bezogene Änderung der Phasendifferenz der ersten Nutz-Signalkomponenten entsprechen (Meß-)Empfindlichkeit (Steigung der Kennlinienfunktion) der vorbezeichneten Phasendifferenz-zu-Massenstrom-Meßwert-Kennlinienfunktion, entsprechenden zeitlichen Änderungen unterliegen, insb. nämlich eine Drift aufweisen. In Folge solcher, ggf. auch mehrfach und/oder für einen längeren Zeitraum wiederkehrend auftretenden (Über-)Belastungen des Meßwandlers kann dieser im Laufe der Betriebszeit so weit geschädigt werden, daß dessen Funktionstüchtigkeit bzw. eine Funktionstüchtigkeit des Meßsystems insgesamt in erheblichem Maße bzw. völlig eingeschränkt ist; dies beispielsweise auch derart, daß im Ergebnis eine Störung bzw. eine, ggf. auch zu Meßfehlern bei der Ermittlung der Meßwerte führenden Fehlfunktion des Meßsystems vorliegt, etwa weil eine Integrität zumindest eines der Schwingungsmeßsignale bzw. daraus gewonnener Meßwerte signifikant herabgesetzt, mithin eine Meßgenauigkeit des Meßsystems, mit der dieses die zu erfassenden Meßgröße in die entsprechenden Meßwerte schlußendlich abbildet, gegenüber einer anfänglichen bzw. nominellen Meßgenauigkeit des ursprünglichem bzw. intaktem Meßsystems signifikant verringert ist.

Zum Überprüfen des Meßsystems, etwa auch um allfällige Veränderungen des Meßwandlers, beispielsweise von dessen mechanischen Eigenschaften und/oder von dessen elektrischen Eigenschaften, bzw. einen darauf zurückzuführenden Defekt nämlichen Meßwandlers bzw. des damit gebildeten Meßsystems möglichst frühzeitig und möglichst verläßlich erkennen und ggf. vermelden zu können, ist die Meßsystem-Elektronik 20 des erfindungsgemäßen Meßsystems ferner eingerichtet, in einem, beispielsweise dem ersten Betriebsmodus zeitlich vorausgehend und/oder zeitlich nachfolgend, insb. auch im Zuge einer durch das Meßsystem selbst ausgeführten Diagnose des Meßsystems (Selbstdiagnose), aktivierten, zweiten Betriebsmodus sowohl das Treibersignal e1 mit einer zweiten Nutz-Stromkomponente eN12, nämlich einer hinsichtlich einer Stromstärke dominierenden oder einzigen sinusförmigen Stromkomponente mit einer (Wechselstrom-)Frequenz und einem Phasenwinkel zu erzeugen und in den Schwingungserreger 31 einzuspeisen, als auch das Treibersignal e2 mit wenigstens einer zweiten Nutz-Stromkomponente eN22, nämlich einer hinsichtlich einer Stromstärke dominierenden oder einzigen sinusförmigen Stromkomponente mit einer der (Wechselstrom-)Frequenz der Nutz-Stromkomponenten eN12 des Treibersignals e1 entsprechenden (Wechselstrom-)Frequenz und einem vom Phasenwinkel der Nutz-Stromkomponenten eN12 des Treibersignals e1 um weniger als 180° abweichenden, beispielsweise nämlich dem Phasenwinkel der Nutz-Stromkomponenten eN12 des Treibersignals e1 entsprechenden, Phasenwinkel zu erzeugen und in den Schwingungserreger 32 einzuspeisen, derart, daß die Treibersignale e1, e2 eine von der vorbezeichneten Antriebs-Phasendifferenz Δe1, beispielsweise um 180°, abweichende zweite Antriebs-Phasendifferenz, nämlich eine, beispielsweise 0° betragende, Differenz zwischen den Phasenwinkeln von deren (zweiten) Nutz-Stromkomponenten eN12, eN22 aufweisen, und daß das Rohr 111 zumindest anteilig, insb. überwiegend, dritte Nutzschwingungen, nämlich durch den (bestromten) Schwingungserreger 31 erzwungene mechanische Schwingungen mit wenigstens einer zweiten Nutzfrequenz fN2, nämlich einer der (Wechselstrom-)Frequenz der (zweiten) Nutz-Stromkomponente eN12 des Treibersignals e1 entsprechenden Schwingungsfrequenz und mit einer dritten Nutzphase, nämlich einer, insb. zumindest am Ort des Schwingungserregers 31, dem Phasenwinkel der Nutz-Stromkomponente eN12 des Treibersignals e1 entsprechenden Schwingungsphase, und das Rohr 112 zumindest anteilig, insb. überwiegend, vierte Nutzschwingungen, nämlich durch den (bestromten) Schwingungserreger 32 erzwungene mechanische Schwingungen mit der vorbezeichneten Nutzfrequenz fN2 und mit einer vierten Nutzphase, nämlich einer, insb. zumindest am Ort des Schwingungserregers 32, dem Phasenwinkel der Nutz-Stromkomponenten eN22 des Treibersignals e2 entsprechenden Schwingungsphase ausführt; dies im besonderen in der Weise, daß die vierten Nutzschwingungen (des Rohrs 12) phasengleich zu den dritten Nutzschwingungen (des Rohrs 11) sind. Nach einer weiteren Ausgestaltung der Erfindung ist die Meßsystem-Elektronik ferner eingerichtet, im zweiten Betriebsmodus die Treibersignale e1, e2 mit einer, beispielsweise der vorbezeichneten ersten Antriebs-Amplitudendifferenz entsprechenden und/oder vorgebbaren und/oder veränderlichen, zweiten Antriebs-Amplitudendifferenz, nämlich einer, beispielsweise auch Null betragenden, Differenz zwischen einer Amplitude der Nutz-Stromkomponenten eN12 des Treibersignals e1 und einer Amplitude der Nutz-Stromkomponenten eN22 des Treibersignals e2 zu erzeugen und in den in den ersten bzw. zweiten Schwingungserreger einzuspeisen. Die Meßsystem-Elektronik 20 kann beispielsweise einegerichtet sein, den zweiten Betriebsmodus wiederkehrend zeitlich begrenzt für jeweils mehr als 10 ms, insb. auch mehr als 100 ms, aufzustarten.

Die vorbezeichnete (Wechselstrom-)Frequenz der Nutz-Stromkomponenten eN12 bzw. eN22, mithin die dritte bzw. vierte Nutzfrequenz können beispielsweise einer Resonanzfrequenz wenigstens eines der Rohre 111, 112, beispielsweise auch einer Resonanzfrequenz fr34 einer dem Meßwandler innewohnenden natürlichen (Parallel-)Schwingungsmode handeln, in der die beiden Rohre 111, 112 gleichphasige mechanische (Resonanz-)Schwingungen, beispielsweise nämlich gleichphasige Biegeschwingungen, ausführen können bzw. ausführen. Dementsprechend ist Meßsystem-Elektronik 20 nach einer weiteren Ausgestaltung der Erfindung ferner eingerichtet ist, die Nutz-Stromkomponente eN12 des Treibersignals e1 und die Nutz-Stromkomponente eN22 des Treibersignals e2 jeweils mit einer (Wechselstrom-)Frequenz, die von einer Resonanzfrequenz wenigstens eines der Rohrs 111, 112, beispielsweise nämlich der vorbezeichneten Resonanzfrequenz fr34, um weniger als 1% nämlicher Resonanzfrequenz und/oder um weniger als 1 Hz abweicht, bereitzustellen; dies beispielsweise auch mit einer 0° betragenden zweiten Antriebs-Phasendifferenz bzw. derart, daß die dritten und vierten Nutzschwingungen der vorbezeichneten natürlichen Parallelschwingungsmode entsprechende (Resonanz-)Schwingungen der Rohre 111, 112 sind. Zudem sind dementsprechend auch die Erregeranordnung (31, 32) bzw. die ersten und zweiten Schwingungserreger dafür eingerichtet, angesteuert von den Treibersignalen (e1, e2), der vorbezeichneten natürlichen Parallelschwingungsmode entsprechende mechanische (Resonanz-)Schwingungen der Rohre 111, 112 anzuregen.

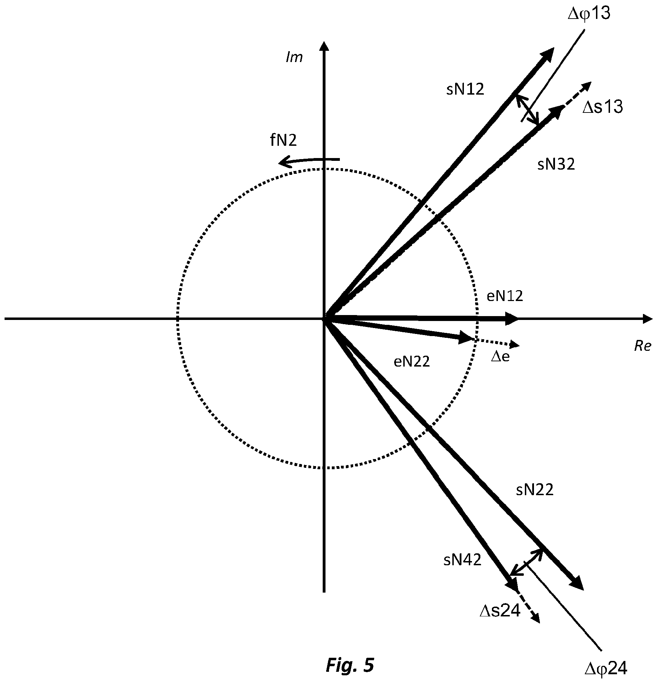

Infolge der dritten und vierten Nutzschwingungen weist jedes Schwingungssignale s1, s2, s3, s4 - wie auch in Fig. 5 angedeutet - jeweils eine zweite (spektrale) Nutz-Signalkomponente sN12, sN22, sN32 bzw. sN42, nämlich eine jeweilige sinusförmige Signalkomponente mit einer der zweiten Nutzfrequenz fN2 entsprechenden Frequenz auf. Die erfindungsgemäße Meßsystem-Elektronik 20 ist zudem eingerichtet, im zweiten Betriebsmodus ebenfalls die Schwingungssignale s1, s2, s3, s4 zu empfangen und auszuwerten, nämlich anhand der im zweiten Betriebsmodus empfangenen ersten und dritten Schwingungssignale s1, s3 und/oder zweiten und vierten Schwingungssignale s2, s4, beispielsweise nämlich anhand einer jeweiligen Amplitude der Nutz-Signalkomponente sN12, sN32 der Schwingungssignale s1, s3 und/oder einer jeweiligen Amplitude der Nutz-Signalkomponente sN22, sN42 der Schwingungssignale s2, s4 und/oder anhand eines jeweiligen Phasenwinkels der Nutz-Signalkomponenten sN12, sN32 der Schwingungssignale s1, s3 und/oder eines jeweiligen Phasenwinkels der Nutz-Signalkomponenten sN22, sN42 der Schwingungssignale s2, s4, das Meßsystem zu kalibrieren und/oder das Meßsystem zu überprüfen bzw. zu detektieren, ob eine Störung des Meßsystems vorliegt. Eine solche Störung des Meßsystems kann, wie bereits erwähnt, beispielsweise aufgrund eines Belags auf einer Innenseite der Rohrwandung eines oder mehrerer der Rohre und/oder aufgrund einer Reduzierung einer Wandstärke der Rohrwandung eines oder mehrerer der Rohre und/oder aufgrund einer Alterung eines oder mehrerer der Schwingungssensoren und/oder Schwingungserreger und/oder eines fehlerhaften Zusammen- und/oder Einbau des Meßwandlers vorliegen. Zudem kann eine solche Störung des Meßsystems u.a. auch dazu führen, daß eine Funktionstüchtigkeit des Meßsystems insgesamt vermindert ist bzw. daß eine Fehlfunktion des Meßsystems vorliegt, beispielsweise auch derart, daß eine Integrität zumindest eines der Schwingungssignale s1, s2, s3, s4 bzw. daraus im ersten Betriebsmodus gewonnener Meßwerte herabgesetzt ist, ggf. soweit, daß aus wenigstens einem der Schwingungssignale s1, s2, s3, s4 im ersten Betriebsmodus gewonnene Meßwerte ein unzulässigen Meßfehler aufweisen.

Nach einer weiteren Ausgestaltung der Erfindung ist die Meßsystem-Elektronik 20 im besonderen auch dafür eingerichtet, anhand zumindest eines der im zweiten Betriebsmodus empfangenen Schwingungssignale s2, s1, s3, s4, insb. nämlich deren jeweiliger Nutz-Signalkomponente sN11, sN21, sN31, sN41, zu detektieren, ob eine Störung ε des Meßsystems vorliegt, beispielsweise nämlich eine Störung, die eine Funktionstüchtigkeit des Meßsystems vermindert bzw. eine Fehlfunktion des Meßsystems bewirkt und/oder die eine Integrität zumindest eines der Schwingungssignale s1, s2, s3, s4 herabsetz, mithin auch eine Integrität aus den Schwingungssignalen s1, s2, s3, s4 gewonnener Meßwerte herabsetzen und/oder einen Meßfehler nämlicher Meßwerte provozieren kann. Nämliche Störung ε kann beispielsweise auch einen Phasenwinkel und/oder eine Amplitude einer oder mehrerer der Nutz-Signalkomponenten sN11, sN21, sN31, sN41 signifikant beeinflussen, beispielsweise derart, daß die vorbezeichnete Phasendifferenz Δcp12 von der Phasendifferenz Δcp34 und/oder einem entsprechenden Referenzwert um mehr als ein dafür zuvor ermitteltes Toleranzmaß abweicht. Zudem kann die Meßsystem-Elektronik 20 ferner eingerichtet sein, eine, beispielsweise auch als ein (Störungs-)Alarm deklarierte, (Störungs-)Meldung auszugeben, falls eine Störung ε des Meßsystems entsprechend festgestellt ist. Nämliche Störung ε des Meßsystems kann, wie bereits erwähnt, beispielsweise aufgrund eines Belags auf einer Innenseite der Rohrwandung eines oder mehrerer der Rohre, einer Reduzierung einer Wandstärke der Rohrwandung eines oder mehrerer der Rohre, einer Alterung eines oder mehrerer der Schwingungssensoren und/oder einer Alterung eines oder mehrerer der Schwingungserreger auftreten. Die vorbezeichnete Störung ε des Meßsystems kann im besonderen auch eine, ggf. auch irreversible Veränderung einer oder mehrerer Schwingungseigenschaften der Rohranordnung, etwa aufgrund einer Reduzierung einer Wandstärke der Rohrwandung eines oder mehrerer der Rohre und/oder aufgrund einer plastischen Verformung eines oder mehrerer der Rohre und/oder aufgrund eines Belags auf einer Innenseite der Rohrwandung eines oder mehrerer der Rohre und/oder aufgrund eines Risses in der Rohrwandung eines oder mehrerer der Rohre, umfassen. Nicht zuletzt für den Fall, daß das vorbezeichnete Trägergerüst und die Rohranordnung, wie auch in der eingangs erwähnten WO-A 96/08697 oder WO-A 2019/017891 vorgeschlagen, wieder lösbar aneinander befestigt sind, beispielsweise um ein Zusammenführen bzw. Montieren von Trägergerüst und Rohranordnung vor Ort an der jeweiligen Meßstelle bzw. in deren Nähe zu ermöglichen, kann die Störung ε des Meßsystems beispielsweise aber auch eine fehlerhafte Montage Trägergerüst und Rohranordnung umfassen. Zudem kann die Störung des Meßsystems auch eine, ggf. irreversible Veränderung einer oder mehrerer Strömungseigenschaften der Rohranordnung, etwa aufgrund einer Reduzierung eines Strömungsquerschnitts der Rohranordnung, beispielsweise nämlich infolge einer Verstopfung eines oder mehrerer der Rohre und/oder infolge eines Belags auf einer Innenseite der Rohrwandung eines oder mehrerer der Rohre und/oder eine, ggf. auch irreversible Veränderung einer oder mehrerer elektro-mechanischer Wandlereigenschaften, etwa aufgrund einer Alterung eines oder mehrerer der Schwingungssensoren und/oder Schwingungserreger und/oder aufgrund einer Änderung einer jeweiligen mechanischer Verbindung zwischen einem oder mehreren Schwingungssensoren bzw. einem oder mehreren Schwingungserregern und dem jeweiligen Rohr, umfassen. Störung des Meßsystems kann aber auch eine, ggf. auch irreversible, Veränderung eines (Skalen-)Nullpunkts des Meßsystems, der beispielsweise einer vorbezeichneten, gleichwohl bei ruhendem Meßstoff gemessenen Phasendifferenz Δϕ12, Δcp34 entsprechen kann, und/oder eine, ggf. auch irreversible, Veränderung einer (Meß-)Empfindlichkeit des Meßsystems, die eine auf eine Änderung des Massenstroms bezogene Änderung der Phasendifferenz Δcp12, Δcp34 entsprechen kann, sein.

Zum Überprüfen des Meßsystems ist die Meßsystem-Elektronik nach einer weiteren Ausgestaltung der Erfindung ferner dafür eingerichtet, anhand der im zweiten Betriebsmodus empfangenen Schwingungssignale s1, s3 eine erste (Prüf-)Amplitudendifferenz, nämlich ein Differenz zwischen einer Amplitude der Nutz-Signalkomponente sN12 des Schwingungssignals s1 und einer Amplitude der Nutz-Signalkomponente sN32 des Schwingungssignals s3 und/oder eine erste (Prüf-)Phasendifferenz, nämlich eine Differenz zwischen einem Phasenwinkel der Nutz-Signalkomponenten sN12 des Schwingungssignals s1 und der Nutz-Signalkomponenten sN32 des Schwingungssignals s3 zu ermitteln. Alternativ oder in Ergänzung ist die Meßsystem-Elektronik ferner dafür eingerichtet, anhand der im zweiten Betriebsmodus empfangenen Schwingungssignale s2, s4 eine zweite (Prüf-)Amplitudendifferenz, nämlich ein Differenz zwischen einer Amplitude der Nutz-Signalkomponente sN22 des Schwingungssignals s2 und einer Amplitude der Nutz-Signalkomponente sN42 des Schwingungssignals s4 und/oder eine zweite (Prüf-)Phasendifferenz, nämlich eine Differenz zwischen einem Phasenwinkel der Nutz-Signalkomponenten sN22 des Schwingungssignals s2 und der Nutz-Signalkomponenten sN42 des Schwingungssignals s4 zu ermitteln. Nach einer weiteren Ausgestaltung der Erfindung ist die Meßsystem-Elektronik ferner eingerichtet, anhand wenigstens eines der im zweiten Betriebsmodus eingespeisten Treibersignale e1, e2 sowie anhand wenigstens eines der im zweiten Betriebsmodus empfangenen Schwingungssignale s1, s2, s3, s4 wenigstens eine (modale) Dämpfung der Rohre 11, 12 für die dritten bzw. vierten Nutzschwingungen zu ermitteln, beispielsweise nämlich anhand der zweiten Nutz-Stromkomponenten eN12, eN2 wenigstens eines der Treibersignale e1, e2, sowie anhand der Nutz-Signalkomponenten sN12, sN32 der Schwingungssignale s1, s3 und/oder der Nutz-Signalkomponenten sN22, sN42 der Schwingungssignale s2, s4. Darüberhinaus kann die Meßsystem-Elektronik ferner eingerichtet sein, einen oder mehreren der vorbezeichneten gemessenen Parameter, nämlich wenigstens eine der ersten bzw. zweiten (Prüf-)Amplitudendifferenzen, wenigstens eine der ersten bzw. zweiten (Prüf-)Phasendifferenzen und/oder wenigstens eine der modalen Dämpfungen jeweils mit wenigstens einem zugehörigen eine verminderte Funktionstüchtigkeit bzw. einen Defekt des Meßwandlers repräsentierenden Bezugswert zu vergleichen, beispielsweise um bei einer zu großen, nämlich ein dafür vorgegebenes Maß überschreitenden Abweichung des jeweiligen Parameters eine, ggf. auch als (Störungs-)Alarm deklarierte Meldung auszugeben. Nach einer weiteren Ausgestaltung der Erfindung ist ferner vorgesehen, den zweiten Betriebsmodus zu starten bzw. das Überprüfen des Meßsystems durchzuführen, falls der Meßwandler nicht von Fluid durchströmt ist bzw. falls der Meßstoff darin ruht, mithin bei einem Null betragenden Massestrom. Alternativ oder in Ergänzung kann das Überprüfen des Meßsystems, wie auch in Fig. 5 angedeutet, aber auch bei einem von einem Fluid bzw. vom Meßstoff durchströmten Meßwandler, mithin bei einem von Null verschiedenen Massestrom, beispielsweise nämlich auch bei einem vorgegebenen (bekannten) und/oder konstant gehaltenen Referenz-Massestrom, durchgeführt werden.

Zum Detektieren des Vorliegens einer die Funktionstüchtigkeit des Meßaufnehmers, mithin die Meßgenauigkeit des Meßsystems beeinträchtigenden Störung ist die Meßsystem-Elektronik 20 gemäß einer weiteren Ausgestaltung der Erfindung ferner eingerichtet, einen oder mehrere Kennzahlenwerte für die wenigstens eine Meßsystem-Kennzahl MK1 auszuwerten, beispielsweise nämlich jeweils mit einem oder mehreren für die nämliche Meßsystem-Kennzahl MK1 vorab ermittelten, beispielsweise nämlich in vorbezeichnetem nicht flüchtigen elektronischen Datenspeicher EEPROM gespeicherten, Bezugswerten BK1₁ (BK1₁, BK1₂,...BK1ᵢ...) zu vergleichen. Die Meßsystem-Kennzahl MK1 bzw. ein jeweiliger Kennzahlenwert kann beispielsweise einen Betriebszustand des Meßsystems charakterisieren, beispielsweise nämlich quantifizieren, der eine dem Meßsystem innewohnende, eine oder mehrere funktionelle Abhängigkeiten eines oder mehrerer der Schwingungssignale s1, s2, s3, s4 von einem oder mehreren der Treibersignale e1, e2 bestimmende Systemfunktion (Übertragungsfunktion) bzw. eine Funktionstüchtigkeit des Meßsystems bestimmt. Darüberhinaus kann die Meßsystem-Elektronik 20 ferner auch dafür eingerichtet sein, zu ermitteln, ob ein oder mehrere Kennzahlenwerte für die Meßsystem-Kennzahl MK1 größer als einer oder mehrere solcher, beispielsweise nämlich ein nicht mehr intaktes Meßsystems repräsentierende, Bezugswerte für die Meßsystem-Kennzahl MK1 ist und ggf. beispielsweise auch die dies signalisierende (Störungs-)Meldung auszugeben, beispielsweise nämlich vor Ort anzuzeigen und/oder als Statusmeldung an das vorbezeichnete elektronischen Datenverarbeitungssystem zu übermitteln. Dementsprechend ist die Meßsystem-Elektronik nach einer weiteren Ausgestaltung der Erfindung eingerichtet, anhand eines oder mehrerer der im zweiten Betriebsmodus empfangenen Schwingungssignale s1, s2, s3, s4 einen oder mehrere Kennzahlenwerte für die wenigstens eine Meßsystem-Kennzahl MK1 zu berechnen, derart, daß nämliche Meßsystem-Kennzahl MK1 von einem oder mehreren der (System-)Parameter einer der vorbezeichneten, zwischen wenigstens einer der zweiten Nutz-Stromkomponenten eN12, eN22 der Treibersignale e1, e2 und wenigstens einer der zweiten Nutz-Signalkomponenten sN12, sN22, sN32, sN42 der Schwingungssignale s1, s2, s3, s4 vermittelnden Systemfunktionen des Meßsystems abhängig ist, beispielsweise auch einer der vorbezeichneten (modale) Dämpfungen der Rohre 111, 112 für die jeweiligen dritten bzw. vierten Nutzschwingungen und/oder einem Verhältnis einer der (modalen) Dämpfungen der Rohre 111, 112 für die jeweiligen dritten bzw. vierten Nutzschwingungen und einer (modalen) Dämpfung der Rohre 11, 12 für die jeweiligen ersten und/oder zweiten Nutzschwingungen der Rohre 111, 112 entsprechen. Die Meßsystem-Kennzahl MK1 kann beispielsweise von einem (System-)Amplitudenverhältnis zwischen einer Abweichung Δe einer Amplitude der Nutz-Stromkomponente eN22 des Treibersignals e2 von einer Amplitude der Nutz-Stromkomponenten eN12 des Treibersignals e1 und einer Abweichung Δs13 einer Amplitude der Nutz-Signalkomponente sN13 des Schwingungssignals s3 von einer Amplitude der Nutz-Signalkomponente s12 des Schwingungssignals s1 und/oder einer Abweichung Δs24 einer Amplitude der Nutz-Signalkomponente sN42 des Schwingungssignals s4 von einer Amplitude der Nutz-Signalkomponente sN22 des Schwingungssignals s2, beispielsweise auch einer Summe Δs13+Δs24 der nämlicher Abweichungen, abhängig sein bzw. eines der vorbezeichneten (System-)Amplitudenverhältnisse Δs13/Δe, Δs24/Δe, Δs13/Δe+Δs24/Δe quantifizieren. Die vorbezeichneten Abweichung können absolute Abweichung oder auch relative Abweichungen sein. Alternativ oder in Ergänzung kann die Meßsystem-Kennzahl K1 auch so gebildet sein, von einer (System-)Phasendifferenz zwischen der zweiten Nutz-Signalkomponente sN12, sN22 wenigstens eines der Schwingungmeßsignale s1, s2, beispielsweise auch einer Summe sN12+sN22 der Nutz-Signalkomponente sN12, sN22 der Schwingungssignale s1, s2, und der zweiten Nutz-Signalkomponente sN32, sN42 wenigstens eines der Schwingungmeßsignale s3, s4, beispielsweise einer Summe sN32+sN42 der zweiten Nutz-Signalkomponente sN32, sN42 der Schwingungssignale s3, s4, abhängig ist, beispielsweise nämlich eine der vorbezeichneten (System-)Phasendifferenzen quantifiziert. Bei den vorbezeichneten Bezugswerten für die Meßsystem-Kennzahl MK1 kann es sich beispielsweise um eine (auf eine der vorbezeichneten Störungen zurückzuführende) verminderte Funktionstüchtigkeit des Meßaufnehmers bzw. eine (auf eine der vorbezeichneten Störungen zurückzuführende) Fehlfunktion des Meßaufnehmers repräsentierende Bezugswerte handeln. Nämliche Bezugswerte können beispielsweise vorab, beispielsweise nämlich vom Hersteller des Meßsystems bzw. bei einer während der Herstellung des Meßsystems vollzogenen (Werks-)Kalibrierung und/oder während der Inbetriebnahme vor Ort, und/oder im Betrieb des Meßsystems ermittelt werden; dies beispielsweise, derart, daß zunächst die jeweilige Meßsystem-Kennzahl MK1 für das fertiggestellte, mithin intakte Meßsystem ermittelt und mit einem einer noch tolerierbaren Beeinflussung entsprechenden Toleranzwert entsprechend in den Bezugswert BK1₁ umgerechnet und im Datenspeicher EEPROM abgespeichert wird. Die Ermittlung der Kennzahlenwerte MK1 bzw. das Ermitteln des Vorliegens einer Störung des Meßsystems kann, wie bereits angedeutet, auch automatisiert, beispielsweise nämlich zeitgesteuert und/oder auch in Abhängigkeit von Änderungen von anderen Diagnosewerten, initiiert bzw. wieder ausgesetzt werden. Alternativ oder in Ergänzung kann die Ermittlung der Kennzahlenwerte aber auch von extern des Meßsystems initiiert und/oder ausgesetzt werden, beispielsweise nämlich ausgehend von vorbezeichnetem elektronischen Datenverarbeitungssystem über die vorbezeichnete Sende- und Empfangsschaltung COM und/oder ausgehend von Bedienpersonal vor Ort über die vorbezeichnete Anzeige- und Bedienelement HMI. Dementsprechend ist die Meßsystem-Elektronik 20 nach einer weiteren eingerichtet ist, einen zumindest die Ermittlung der Kennzahlenwerte für zumindest die Kennzahl K1, ggf. nämlich auch deren vorbezeichnete Auswertung initiierenden Start-Befehl zu empfangen und auszuwerten, nämlich einen Eingang des Start-Befehls zu detektieren und daraufhin eine Ermittlung der Kennzahlenwerte für die erste Meßsystem-Kennzahl MK1 in Gang zu setzen und/oder ist die Meßsystem-Elektronik eingerichtet, einen die Ermittlung der Kennzahlenwerte für die Meßsystem-Kennzahl MK1 zumindest vorübergehend unterbindenden Stop-Befehl zu empfangen und auszuwerten, nämlich einen Eingang des Stop-Befehls zu detektieren und daraufhin eine Ermittlung der Kennzahlenwerte für die Meßsystem-Kennzahl MK1 zumindest vorübergehend anzuhalten.

## Patentansprüche

1. Vibronisches Meßsystem, insb. Coriolis-Massedurchfluß-Meßgerät oder Coriolis-Massedurchfluß-/Dichte-Meßgerät, zum Messen und/oder Überwachen wenigstens eines, insb. zeitlich veränderlichen, Strömungsparameters, insb. eines Massenstroms, eines Volumenstroms und/oder einer Strömungsgeschwindigkeit, und/oder zum Messen und/oder Überwachen wenigstens eines, insb. zeitlich veränderlichen, Stoffparameters, insb. einer Dichte und/oder einer Viskosität, eines strömenden Meßstoffs, insb. eines Gases, einer Flüssigkeit oder einer Dispersion, welches Meßsystem, insb. als In-Line-Meßgerät und/oder Meßgerät in Kompaktbauweise ausgebildete, Meßsystem umfaßt:
- einen Meßwandler (10)
-- mit einer Rohranordnung zum Führen des strömenden Meßstoffs,
-- mit einer Erregeranordnung zum Wandeln elektrischer Leistung in dem Anregen und Aufrechterhalten erzwungener mechanischer Schwingungen der Rohranordnung dienliche mechanische Leistung
-- und mit einer Sensoranordnung zum Erfassen von mechanischen Schwingungen der Rohranordnung und zum Bereitstellen von jeweils Schwingungsbewegungen der Rohranordnung repräsentierenden Schwingungssignalen;
- sowie eine mit dem Meßwandler (10), nämlich sowohl mit dessen Erregeranordnung als auch mit dessen Sensoranordnung, insb. mittels elektrischer Verbindungsleitungen, elektrisch gekoppelte, insb. mittels wenigstens eines Mikroprozessors gebildete und/oder in Elektronik-Schutzgehäuse angeordnete, Meßsystem-Elektronik (20) zum Ansteuern des Meßwandlers und zum Auswerten von vom Meßwandler gelieferten Schwingungssignalen;
- wobei die Rohranordnung
-- ein, insb. zumindest abschnittsweise gekrümmtes und/oder zumindest abschnittsweise gerades, erstes Rohr (111) und wenigstens ein, insb. zumindest abschnittsweise gekrümmtes und/oder zumindest abschnittsweise gerades und/oder zum ersten Rohr baugleiches und/oder zum ersten Rohr zumindest abschnittsweise paralleles, zweites Rohr (112) aufweist,
-- wobei jedes der ersten und zweiten Rohre der Rohranordnung sich jeweils von einem jeweiligen ersten Ende des jeweiligen Rohrs bis zu einem jeweiligen zweiten Ende nämlichen Rohrs mit einer jeweiligen Rohrlänge erstreckt und jeweils ein von einer, insb. metallischen, Rohrwandung umschlossenes, sich jeweils vom jeweiligen ersten Ende des jeweiligen Rohrs bis zum jeweiligen zweiten Ende nämlichen Rohrs erstreckenden Lumen aufweist,
--- und wobei jedes der ersten und zweiten Rohre der Rohranordnung jeweils eingerichtet ist, von Meßstoff durchströmt und währenddessen vibrieren gelassen zu werden;
- wobei die Erregeranordnung zwei, insb. elektrodynamische und/oder baugleiche, Schwingungserreger (31, 32) aufweist, von denen
-- ein erster Schwingungserreger (31) mechanisch mit dem ersten Rohr verbunden, insb. mittig am ersten Rohr positioniert,
-- und ein zweiter Schwingungserreger (32) mechanisch mit dem zweiten Rohr verbunden, insb. mittig am zweiten Rohr positioniert, ist,
- wobei jeder der ersten und zweiten Schwingungserreger jeweils eingerichtet ist, elektrische Leistung mit einem zeitlich veränderlichen elektrischen Strom in mechanische Leistung zu wandeln, insb. derart, daß an einem jeweiligen, mittels des jeweiligen Schwingungserregers am damit jeweils mechanisch verbundenen Rohr gebildeten Angriffspunkt eine zeitlich veränderliche Antriebskraft auf das erste bzw. zweite Rohr wirkt;
- wobei die Sensoranordnung wenigstens vier, insb. elektrodynamische und/oder baugleiche und/oder voneinander beabstandete, Schwingungssensoren aufweist, von denen
-- ein erster Schwingungssensor (41) und ein zweiter Schwingungssensor (42) voneinander beabstandet, insb. symmetrisch zum ersten Schwingungserreger (31), am ersten Rohr positioniert, insb. nämlich zumindest anteilig mit dem ersten Rohr mechanisch verbunden,
-- und ein dritter Schwingungssensor (43) und ein vierter Schwingungssensor (44) voneinander beabstandet, insb. symmetrisch zum zweiten Schwingungserreger (32), am zweiten Rohr positioniert, insb. nämlich zumindest anteilig mit dem zweiten Rohr mechanisch verbunden, sind;
- wobei jeder der ersten und zweiten Schwingungssensoren jeweils eingerichtet ist, Schwingungsbewegungen des ersten Rohrs zu erfassen und in ein nämliche Schwingungsbewegungen repräsentierendes, insb. elektrisches oder optisches, erstes bzw. zweites Schwingungssignal zu wandeln, insb. derart, daß jedes der ersten und zweiten Schwingungssignale jeweils eine oder mehrere sinusförmige Signalkomponenten mit jeweils einer einer Schwingungsfrequenz von Schwingungsbewegungen des ersten Rohrs entsprechenden Frequenz enthält;
- wobei jeder der dritten und vierten Schwingungssensoren jeweils eingerichtet ist, Schwingungsbewegungen des zweiten Rohrs zu erfassen und in ein nämliche Schwingungsbewegungen repräsentierendes, insb. elektrisches oder optisches, drittes bzw. viertes Schwingungssignal zu wandeln, insb. derart, daß jedes der dritten und vierten Schwingungssignale jeweils eine oder mehrere sinusförmige Signalkomponenten mit jeweils einer einer Schwingungsfrequenz von Schwingungsbewegungen des zweiten Rohrs entsprechenden Frequenz enthält;
- wobei die Meßsystem-Elektronik (20) eingerichtet ist,
-- den ersten Schwingungserreger (31) zu bestromen, nämlich ein elektrisches erstes Treibersignal (e1) in den ersten Schwingungserreger (31) einzuspeisen, wodurch das erste Rohr erzwungene mechanische Schwingungen, insb. Biegeschwingungen, mit einer oder mehreren durch das erste Treibersignal (e1) vorgegebenen Schwingungsfrequenzen ausführt,
-- sowie den zweiten Schwingungserreger (32) zu bestromen, nämlich simultan zum ersten Treibersignal (e1) ein elektrisches zweites Treibersignal (e2) in den zweiten Schwingungserreger (32) einzuspeisen, wodurch das zweite Rohr erzwungene mechanische Schwingungen, insb. Biegeschwingungen, mit einer oder mehreren durch das zweite Treibersignals (e2) vorgegebenen Schwingungsfrequenzen ausführt;
- wobei die Meßsystem-Elektronik eingerichtet ist:
-- in einem ersten Betriebsmodus
-- sowohl das erste Treibersignal (e1) mit wenigstens einer ersten Nutz-Stromkomponente (eN11), nämlich einer hinsichtlich einer Stromstärke dominierenden oder einzigen sinusförmigen Stromkomponente mit einer (Wechselstrom-)Frequenz und einem Phasenwinkel zu erzeugen und in den ersten Schwingungserreger einzuspeisen,
-- als auch das zweite Treibersignal (e2) mit wenigstens einer ersten Nutz-Stromkomponente (eN21), nämlich einer hinsichtlich einer Stromstärke dominierenden oder einzigen sinusförmigen Stromkomponente mit einer der (Wechselstrom-)Frequenz der ersten Nutz-Stromkomponenten (eN11) des ersten Treibersignals (e1) entsprechenden (Wechselstrom-)Frequenz und einem vom Phasenwinkel der ersten Nutz-Stromkomponenten (eN11) des ersten Treibersignals (e1), insb. um 180°, abweichenden Phasenwinkel zu erzeugen und in den zweiten Schwingungserreger einzuspeisen, derart,
-- daß die ersten und zweiten Treibersignale eine erste Antriebs-Phasendifferenz (Δe1), nämlich eine, insb. 180° betragende, Differenz zwischen den Phasenwinkeln von deren ersten Nutz-Stromkomponenten aufweisen,
--- daß das erste Rohr zumindest anteilig, insb. überwiegend, erste Nutzschwingungen, nämlich durch den (bestromten) ersten Schwingungserreger erzwungene mechanische Schwingungen mit wenigstens einer ersten Nutzfrequenz, nämlich einer der (Wechselstrom-)Frequenz der ersten Nutz-Stromkomponente des ersten Treibersignals entsprechenden Schwingungsfrequenz und mit einer ersten Nutzphase, nämlich einer, insb. zumindest am Ort des ersten Schwingungserregers, dem Phasenwinkel der ersten Nutz-Stromkomponente des ersten Treibersignals entsprechenden Schwingungsphase, und das zweite Rohr zumindest anteilig, insb. überwiegend, zweite Nutzschwingungen, nämlich durch den (bestromten) zweiten Schwingungserreger erzwungene mechanische Schwingungen mit der ersten Nutzfrequenz und mit einer zweiten Nutzphase, nämlich einer, insb. zumindest am Ort des zweiten Schwingungserregers, dem Phasenwinkel der ersten Nutz-Stromkomponenten des zweiten Treibersignals entsprechenden Schwingungsphase ausführt, insb. derart, daß die zweiten Nutzschwingungen gegenphasig bzw. gegengleich zu den ersten Nutzschwingungen sind und/oder daß die ersten und zweiten Nutzschwingungen geeignet sind, im strömenden Meßstoff vom Massestrom abhängige Corioliskräfte zu bewirken,
--- und daß jedes der ersten, zweiten, dritten und vierten Schwingungssignale, jeweils eine erste Nutz-Signalkomponente (sN11; sN21; sN31; sN41), nämlich eine jeweilige sinusförmige Signalkomponente mit einer der ersten Nutzfrequenz entsprechenden Frequenz aufweist,
- und in einem, insb. dem ersten Betriebsmodus zeitlich vorausgehend und/oder zeitlich nachfolgend aktivierten und/oder mehr als 10 ms andauernden und/oder zeitlich begrenzten und/oder wiederkehrend aufgestarteten, zweiten Betriebsmodus
-- sowohl das erste Treibersignal (e1) mit einer zweiten Nutz-Stromkomponente (eN12), nämlich einer hinsichtlich einer Stromstärke dominierenden oder einzigen sinusförmigen Stromkomponente mit einer (Wechselstrom-)Frequenz und einem Phasenwinkel zu erzeugen und in den ersten Schwingungserreger einzuspeisen,
-- als auch das zweite Treibersignal (e2) mit wenigstens einer zweiten Nutz-Stromkomponente (eN22), nämlich einer hinsichtlich einer Stromstärke dominierenden oder einzigen sinusförmigen Stromkomponente mit einer der (Wechselstrom-)Frequenz der zweiten Nutz-Stromkomponenten (eN12) des ersten Treibersignals (e1) entsprechenden (Wechselstrom-)Frequenz und einem vom Phasenwinkel der zweiten Nutz-Stromkomponenten (eN12) des ersten Treibersignals (e1) um weniger als 180° abweichenden, insb. dem Phasenwinkel der zweiten Nutz-Stromkomponenten (eN12) des ersten Treibersignals (e1) entsprechenden, Phasenwinkel zu erzeugen und in den zweiten Schwingungserreger einzuspeisen, derart,
--- daß die ersten und zweiten Treibersignale eine von der ersten Antriebs-Phasendifferenz, insb. um 180°, abweichende, insb. 0° betragende, zweite Antriebs-Phasendifferenz, nämlich eine Differenz zwischen den Phasenwinkeln von deren zweiten Nutz-Stromkomponenten aufweisen,
--- daß das erste Rohr zumindest anteilig, insb. überwiegend, dritte Nutzschwingungen, nämlich durch den (bestromten) ersten Schwingungserreger erzwungene mechanische Schwingungen mit wenigstens einer zweiten Nutzfrequenz, nämlich einer der (Wechselstrom-)Frequenz der zweiten Nutz-Stromkomponente des ersten Treibersignals entsprechenden Schwingungsfrequenz und mit einer dritten Nutzphase, nämlich einer, insb. zumindest am Ort des ersten Schwingungserregers, dem Phasenwinkel der zweiten Nutz-Stromkomponente des ersten Treibersignals entsprechenden Schwingungsphase, und das zweite Rohr zumindest anteilig, insb. überwiegend, vierte Nutzschwingungen, nämlich durch den (bestromten) zweiten Schwingungserreger erzwungene mechanische Schwingungen mit der zweiten Nutzfrequenz und mit einer vierten Nutzphase, nämlich einer, insb. zumindest am Ort des zweiten Schwingungserregers, dem Phasenwinkel der zweiten Nutz-Stromkomponenten des zweiten Treibersignals entsprechenden Schwingungsphase ausführt, insb. derart, daß die vierten Nutzschwingungen phasengleich zu den dritten Nutzschwingungen sind,
--- und daß jedes der ersten, zweiten, dritten und vierten Schwingungssignale, jeweils eine zweite Nutz-Signalkomponente (sN12; sN22; sN32; sN42), nämlich eine jeweilige sinusförmige Signalkomponente mit einer der zweiten Nutzfrequenz entsprechenden Frequenz aufweist,
- und wobei die Meßsystem-Elektronik eingerichtet ist:
-- im ersten Betriebsmodus die ersten, zweiten, dritten und vierten Schwingungssignale zu empfangen und auszuwerten, nämlich anhand der Schwingungssignale, insb. nämlich zumindest anhand jeweils einer der Nutz-Signalkomponenten, die wenigstens ein physikalische Meßgröße (zeitlich aufeinanderfolgend) quantifizierende Meßwerte zu ermitteln,
-- sowie im zweiten Betriebsmodus die ersten, zweiten, dritten und vierten Schwingungssignale zu empfangen und auszuwerten, nämlich anhand der im zweiten Betriebsmodus empfangenen ersten und dritten und/oder zweiten und vierten Schwingungssignale, insb. nämlich anhand einer jeweiligen Amplitude der zweiten Nutz-Signalkomponente (sN12, sN32) der ersten und dritten Schwingungssignale und/oder einer jeweiligen Amplitude der zweiten Nutz-Signalkomponente (sN22, sN42) der zweiten und vierten Schwingungssignale und/oder anhand eines jeweiligen Phasenwinkels der zweiten Nutz-Signalkomponenten (sN12, sN32) der ersten und dritten Schwingungssignale und/oder eines jeweiligen Phasenwinkels der zweiten Nutz-Signalkomponenten (sN22, sN42) der zweiten und vierten Schwingungssignale, das Meßsystem zu kalibrieren und/oder das Meßsystem zu überprüfen bzw. zu detektieren, ob eine, insb. eine Funktionstüchtigkeit des Meßsystems vermindernde und/oder eine Fehlfunktion des Meßsystems bewirkende und/oder eine Integrität zumindest eines der ersten, zweiten, dritten und vierten Schwingungssignale bzw. daraus gewonnener Meßwerte herabsetzende und/oder einen Meßfehler von aus wenigstens einem der ersten, zweiten, dritten und vierten Schwingungssignale gewonnenen Meßwerten provozierende, Störung des Meßsystems, insb. aufgrund eines Belags auf einer Innenseite der Rohrwandung eines oder mehrerer der Rohre und/oder aufgrund einer Reduzierung einer Wandstärke der Rohrwandung eines oder mehrerer der Rohre und/oder aufgrund einer Alterung eines oder mehrerer der Schwingungssensoren und/oder Schwingungserreger und/oder eines fehlerhaften Zusammen- und/oder Einbau des Meßwandlers, vorliegt.

2. Meßsystem nach einem der vorherigen Ansprüche, wobei die Meßsystem-Elektronik (20) eingerichtet ist, die ersten und/oder zweiten Nutz-Stromkomponente der ersten und zweiten Treibersignale mit einer (Wechselstrom-)Frequenz bereitzustellen, die von einer Resonanzfrequenz, fr1, des ersten Rohrs und/oder einer Resonanzfrequenz, fr2, des zweiten Rohrs um weniger als 1% nämlicher Resonanzfrequenz, fr1, und/oder um weniger als 1 Hz abweicht.

3. Meßsystem nach einem der vorherigen Ansprüche, wobei die ersten und zweiten Rohre wenigstens eine gemeinsame Resonanzfrequenz, fr12, aufweisen, und wobei die Meßsystem-Elektronik eingerichtet ist, im ersten Betriebsmodus die ersten Nutz-Stromkomponente der ersten und zweiten Treibersignals jeweils mit einer (Wechselstrom-)Frequenz bereitzustellen, die von nämlicher gemeinsamen Resonanzfrequenz, fr12, der ersten und zweiten Rohre um weniger als 1% nämlicher Resonanzfrequenz, fr12, und/oder um weniger als 1 Hz abweicht.

4. Meßsystem nach einem der vorherigen Ansprüche,
- wobei dem Meßwandler ein erster natürlicher Biegeschwingungsmode innewohnt, in dem die ersten und zweiten Rohre gegenphasige bzw. gegengleiche mechanische Schwingungen ausführen können bzw. ausführen (Anti-Parallel-Mode), und wobei die Meßsystem-Elektronik eingerichtet ist, im ersten Betriebsmodus nämliche gegenphasigen mechanischen Schwingungen erzwingende erste und zweite Treibersignale in die ersten bzw. zweiten Schwingungserreger einzuspeisen, insb. nämlich die ersten Nutz-Stromkomponenten der ersten und zweiten Treibersignale mit einer (Wechselstrom-)Frequenz, die von einer Resonanzfrequenz, fr12, des ersten natürlichen Biegeschwingungsmodes um weniger als 1% nämlicher Resonanzfrequenz und/oder um weniger als 1 Hz abweicht, und/oder mit eine erste Antriebs-Phasendifferenz von 180° bewirkenden Phasenwinkeln bereitzustellen;
- und wobei dem Meßwandler ein zweiter natürlicher Biegeschwingungsmode, insb. ein Biegeschwingungsgrundmode, innewohnt, in dem die ersten und zweiten Rohre gleichphasige mechanische Schwingungen ausführen können bzw. ausführen (Parallel-Mode), und wobei die Meßsystem-Elektronik eingerichtet ist, im zweiten Betriebsmodus nämliche gegenphasigen mechanischen Schwingungen erzwingende erste und zweite Treibersignale in die ersten bzw. zweiten Schwingungserreger einzuspeisen, insb. nämlich die ersten Nutz-Stromkomponenten der ersten und zweiten Treibersignale mit einer (Wechselstrom-)Frequenz, die von einer Resonanzfrequenz, fr22, des zweiten natürlichen Biegeschwingungsmodes um weniger als 1% nämlicher Resonanzfrequenz und/oder um weniger als 1 Hz abweicht, und/oder mit eine zweite Antriebs-Phasendifferenz von 0° bewirkenden Phasenwinkeln bereitzustellen.

5. Meßsystem nach einem der vorherigen Ansprüche, wobei die Meßsystem-Elektronik eingerichtet ist, anhand zumindest eines der im zweiten Betriebsmodus empfangenen, ersten, zweiten, dritten und vierten Schwingungssignale, insb. nämlich deren jeweiliger zweiter Nutz-Signalkomponente, zu detektieren, ob eine, insb. eine Funktionstüchtigkeit des Meßsystems vermindernde und/oder eine Fehlfunktion des Meßsystems bewirkende und/oder eine Integrität zumindest eines der ersten, zweiten, dritten und vierten Schwingungssignale bzw. daraus gewonner Meßwerte herabsetzende und/oder einen Meßfehler daraus gewonnener Meßwerte provozierende, Störung des Meßsystems, insb. aufgrund eines Belags auf einer Innenseite der Rohrwandung eines oder mehrerer der Rohre und/oder aufgrund einer Reduzierung einer Wandstärke der Rohrwandung eines oder mehrerer der Rohre und/oder aufgrund einer Alterung eines oder mehrerer der Schwingungssensoren und/oder Schwingungserreger, vorliegt.

6. Meßsystem nach einem der vorherigen Ansprüche, wobei jede der ersten Nutz-Signalkomponenten der ersten, zweiten, dritten und vierten Schwingungssignale jeweils einen von einem Massestrom eines durch die Rohranordnung bzw. den damit gebildeten Meßwandler strömenden Meßstoffs abhängigen Phasenwinkel aufweist.

7. Meßsystem nach dem vorherigen Anspruch, wobei die Meßsystem-Elektronik (20) eingerichtet ist, zumindest im ersten Betriebsmodus anhand einer ersten (Meß-)Phasendifferenz, nämlich einer Differenz zwischen dem Phasenwinkel der ersten Nutz-Signalkomponente des ersten Schwingungssignals und dem Phasenwinkel der ersten Nutzkomponente des zweiten Schwingungssignals und/oder anhand einer zweiten (Meß-)Phasendifferenz, nämlich einer Differenz zwischen dem Phasenwinkel der ersten Nutz-Signalkomponente des dritten Schwingungssignals und dem Phasenwinkel der ersten Nutz-Signalkomponente des vierten Schwingungssignals Massestrom-Meßwerte, nämlich den Massestrom des strömenden Meßstoffs repräsentierende Meßwerte zu ermitteln, insb. nämlich zu berechnen.

8. Meßsystem nach Anspruch 5 und 7, wobei die Störung des Meßsystems eine, insb. irreversible, Veränderung eines (Skalen-)Nullpunkts des Meßsystems, der einer bei ruhendem Meßstoff gemessenen ersten und/oder zweiten Phasendifferenz entspricht, und/oder einer (Meß-)Empfindlichkeit des Meßsystems, die eine auf eine Änderung des Massenstroms bezogene Änderung der ersten und/oder zweiten (Meß-)Phasendifferenz entspricht, umfaßt.

9. Meßsystem nach dem vorherigen Anspruch,
- wobei die Störung des Meßsystems eine, insb. irreversible, Veränderung einer oder mehrerer Schwingungseigenschaften der Rohranordnung, insb. aufgrund einer Reduzierung einer Wandstärke der Rohrwandung eines oder mehrerer der Rohre und/oder aufgrund einer plastischen Verformung eines oder mehrerer der Rohre und/oder aufgrund eines Belags auf einer Innenseite der Rohrwandung eines oder mehrerer der Rohre und/oder aufgrund eines Risses in der Rohrwandung eines oder mehrerer der Rohre, umfaßt;
- und/oder wobei die Störung des Meßsystems eine, insb. irreversible, Veränderung einer oder mehrerer Strömungseigenschaften der Rohranordnung, insb. aufgrund einer Reduzierung eines Strömungsquerschnitts der Rohranordnung, insb. infolge einer Verstopfung eines oder mehrerer der Rohre und/oder infolge eines Belags auf einer Innenseite der Rohrwandung eines oder mehrerer der Rohre, umfaßt;
- und/oder wobei die Störung des Meßsystems eine, insb. irreversible, Veränderung einer oder mehrerer elektro-mechanischer Wandlereigenschaften, insb. aufgrund einer Alterung eines oder mehrerer der Schwingungssensoren und/oder Schwingungserreger und/oder aufgrund einer Änderung einer jeweiligen mechanischer Verbindung zwischen einem oder mehreren Schwingungssensoren bzw. einem oder mehreren Schwingungserregern und dem jeweiligen Rohr, umfaßt;
- und/oder wobei die Störung des Meßsystems einen fehlerhaften Ein- und/oder Zusammenbau des Meßwandlers bzw. des damit gebildeten Meßsystems umfaßt.

10. Meßsystem nach einem der vorherigen Ansprüche,
- wobei die Meßsystem-Elektronik eingerichtet ist, von jedem der im ersten Betriebsmodus empfangenen ersten, zweiten, dritten und vierten Schwingungssignalen die jeweilige erste Nutz-Signalkomponente, insb. nämlich eine jeweilige Amplitude und/oder einen jeweiligen Phasenwinkel, zu gewinnen bzw. zu ermitteln; und/oder.
- wobei die Meßsystem-Elektronik eingerichtet ist, von jedem der im zweiten Betriebsmodus empfangenen ersten, zweiten, dritten und vierten Schwingungssignalen die jeweilige zweite Nutz-Signalkomponente, insb. nämlich eine jeweilige Amplitude und/oder einen jeweiligen Phasenwinkel, zu gewinnen bzw. zu ermitteln; und/oder
- wobei die Meßsystem-Elektronik eingerichtet ist, anhand der im zweiten Betriebsmodus empfangenen ersten und dritten Schwingungssignale eine erste (Prüf-)Amplitudendifferenz, nämlich ein Differenz zwischen einer Amplitude der zweiten Nutz-Signalkomponenten der ersten und dritten Schwingungssignale zu ermitteln, insb. nämlich mit wenigstens einem eine verminderte Funktionstüchtigkeit bzw. einen Defekt des Meßwandlers repräsentierenden Bezugswert zu vergleichen bzw. bei einer zu großen, nämlich einen dafür vorgegebenen Bezugswert überschreitenden Abweichung eine, insb. als (Störungs-)Alarm deklarierte, Meldung auszugeben; und/oder
- wobei die Meßsystem-Elektronik eingerichtet ist, anhand der im zweiten Betriebsmodus empfangenen ersten und dritten Schwingungssignale eine erste (Prüf-)Phasendifferenz, nämlich eine Differenz zwischen einem Phasenwinkel der zweiten Nutz-Signalkomponenten der ersten und dritten Schwingungssignale zu ermitteln, insb. nämlich mit wenigstens einem eine verminderte Funktionstüchtigkeit bzw. einen Defekt des Meßwandlers repräsentierenden Bezugswert zu vergleichen bzw. bei einer zu großen, nämlich einen dafür vorgegebenen Bezugswert überschreitenden Abweichung eine, insb. als (Störungs-)Alarm deklarierte, Meldung auszugeben; und/oder
- wobei die Meßsystem-Elektronik eingerichtet ist, anhand der im zweiten Betriebsmodus empfangenen zweiten und vierten Schwingungssignale eine zweite (Prüf-)Amplitudendifferenz, nämlich ein Differenz zwischen einer Amplitude der zweiten Nutz-Signalkomponenten der zweiten und vierten Schwingungssignale zu ermitteln, insb. nämlich mit wenigstens einem eine verminderte Funktionstüchtigkeit bzw. einen Defekt des Meßwandlers repräsentierenden Bezugswert zu vergleichen bzw. bei einer zu großen, nämlich einen dafür vorgegebenen Bezugswert überschreitenden Abweichung eine, insb. als (Störungs-)Alarm deklarierte, Meldung auszugeben; und/oder
- wobei die Meßsystem-Elektronik eingerichtet ist, anhand der im zweiten Betriebsmodus empfangenen zweiten und vierten Schwingungssignale eine zweite (Prüf-)Phasendifferenz, nämlich eine Differenz zwischen einem Phasenwinkel der zweiten Nutz-Signalkomponenten der zweiten und vierten Schwingungssignale zu ermitteln, insb. nämlich mit wenigstens einem eine verminderte Funktionstüchtigkeit bzw. einen Defekt des Meßwandlers repräsentierenden Bezugswert zu vergleichen bzw. bei einer zu großen, nämlich einen dafür vorgegebenen Bezugswert überschreitenden Abweichung eine, insb. als (Störungs-)Alarm deklarierte, Meldung auszugeben; und/oder
- wobei die Meßsystem-Elektronik eingerichtet ist, im ersten Betriebsmodus die ersten und zweiten Treibersignale mit einer, insb. vorgebbaren und/oder veränderlichen, ersten Antriebs-Amplitudendifferenz, nämlich einer, insb. Null betragenden, Differenz zwischen einer Amplitude der ersten Nutz-Stromkomponenten (eN11) des ersten Treibersignals und einer Amplitude der ersten Nutz-Stromkomponenten (eN21) des zweiten Treibersignals zu erzeugen und in den ersten bzw. zweiten Schwingungserreger einzuspeisen; und/oder
- wobei die Meßsystem-Elektronik eingerichtet ist, im zweiten Betriebsmodus die ersten und zweiten Treibersignale mit einer, insb. der ersten Antriebs-Amplitudendifferenz entsprechenden und/oder vorgebbaren und/oder veränderlichen, zweiten Antriebs-Amplitudendifferenz, nämlich einer, insb. Null betragenden, Differenz zwischen einer Amplitude der zweiten Nutz-Stromkomponenten (eN12) des ersten Treibersignals und einer Amplitude der zweiten Nutz-Stromkomponenten (eN22) des zweiten Treibersignals zu erzeugen und in den in den ersten bzw. zweiten Schwingungserreger einzuspeisen; und/oder
- wobei die Meßsystem-Elektronik eingerichtet ist, anhand der im zweiten Betriebsmodus eingespeisten ersten und zweiten Treibersignale, insb. nämlich anhand der zweiten Nutz-Stromkomponenten (eN12, eN2) der ersten und zweiten Treibersignale (e2, e2), sowie anhand der ersten und dritten Schwingungssignale, insb. nämlich anhand, der zweiten Nutz-Signalkomponenten der ersten und dritten Schwingungssignale, und/oder der zweiten und vierten Schwingungssignale, insb. nämlich anhand, der zweiten Nutz-Signalkomponenten der zweiten und vierten Schwingungssignale, eine (modale) Dämpfung der ersten und zweiten Rohre für zweiten Nutzschwingungen zu ermitteln, insb. nämlich mit wenigstens einem eine verminderte Funktionstüchtigkeit bzw. einen Defekt des Meßwandlers repräsentierenden Bezugswert zu vergleichen bzw. bei einer zu großen, nämlich einen dafür vorgegebenen Bezugswert überschreitenden Abweichung eine, insb. als (Störungs-)Alarm deklarierte, Meldung auszugeben.

11. Meßsystem nach einem der vorherigen Ansprüche, wobei die Meßsystem-Elektronik eingerichtet ist, anhand eines oder mehrerer der im zweiten Betriebsmodus empfangenen ersten, zweiten dritten und vierten Schwingungssignale einen oder mehrere Kennzahlenwerte für wenigstens eine Meßsystem-Kennzahl (MK1) zu berechnen, die einen, insb. eine dem Meßsystem innewohnende, eine oder mehrere funktionelle Abhängigkeiten eines oder mehrerer der Schwingungssignale von einem oder mehreren der Treibersignale bestimmende Systemfunktion (Übertragungsfunktion) bzw. eine Funktionstüchtigkeit des Meßsystems bestimmenden, Betriebszustand charakterisiert, insb. derart, daß nämliche Meßsystem-Kennzahl von einem oder mehreren Parametern einer zwischen wenigstens der zweiten Nutz-Stromkomponenten der ersten und zweiten Treibersignale und wenigstens einer der zweiten Nutz-Signalkomponenten der ersten, zweiten, dritten und vierten Schwingungssignale vermittelnden Systemfunktion des Meßsystems abhängig ist.

12. Meßsystem nach Anspruch 11, wobei die Meßsystem-Kennzahl (MK1) von einem (System-)Amplitudenverhältnis zwischen einer, insb. absoluten oder relativen, Abweichung (Δe) einer Amplitude der zweiten Nutz-Stromkomponente des zweiten Treibersignals (e2) von einer Amplitude der zweiten Nutz-Stromkomponenten des ersten Treibersignals (e1) und einer, insb. absoluten bzw. relativen, Abweichung (Δs13) einer Amplitude der zweiten Nutz-Signalkomponente des dritten Schwingungssignals von einer Amplitude der zweiten Nutz-Signalkomponente des ersten Schwingungssignals und/oder einer, insb. absoluten bzw. relativen, Abweichung (Δs24) einer Amplitude der zweiten Nutz-Signalkomponente des vierten Schwingungssignals von einer Amplitude der zweiten Nutz-Signalkomponente des zweiten Schwingungssignals, insb. einer Summe (Δs13+Δs24) der Abweichungen der zweiten Nutz-Signalkomponenten, abhängig ist, insb. nämliches (System-)Amplitudenverhältnis (Δs13/Δe; Δs24/Δe; Δs13/Δe+Δs24/Δe) quantifiziert.

13. Meßsystem nach Anspruch 11, wobei die Meßsystem-Kennzahl (K1) von einer (System-)Phasendifferenz zwischen der zweiten Nutz-Signalkomponente (sN12; sN22) wenigstens eines der ersten und zweiten Schwingungsmeßsignale, insb. einer Summe (sN12+sN22) der zweiten Nutz-Signalkomponente (sN 12, sN22) der ersten und zweiten Schwingungssignale, und der zweiten Nutz-Signalkomponente (sN32; sN42) wenigstens eines der dritten und vierten Schwingungmeßsignale, insb. einer Summe (sN32+sN42) der zweiten Nutz-Signalkomponente der dritten und vierten Schwingungssignale, abhängig ist, insb. nämliche (System-)Phasendifferenz quantifiziert.

14. Meßsystem nach einem der Ansprüche 11 bis 13, wobei die Meßsystem-Elektronik (20) eingerichtet ist, einen oder mehrere Kennzahlenwerte für die Meßsystem-Kennzahl jeweils mit einem oder mehreren für die Meßsystem-Kennzahl, insb. vom Hersteller des Meßsystems und/oder bei der Herstellung und/oder einer Inbetriebnahme des Meßsystems, ermittelten Bezugswerten, insb. einem oder mehreren eine verminderte Funktionstüchtigkeit des Meßwandlers repräsentierenden Bezugswerten und/oder einem oder mehreren eine Fehlfunktion des Meßwandlers repräsentierenden Bezugswerten und/oder einem oder mehreren einen defekten Meßwandler repräsentierenden Bezugswerten, zu vergleichen, insb. eine Abweichung eines oder mehrere der Kennzahlenwerte von einem oder mehreren der Bezugswerte zu bewerten und/oder zu quantifizieren.

15. Meßsystem nach dem vorherigen Anspruch, wobei die Meßsystem-Elektronik (20) eingerichtet ist, zu ermitteln, ob eine oder mehrere Kennzahlenwerte für die Meßsystem-Kennzahl (MK1) größer als der wenigstens eine Bezugswert für die Meßsystem-Kennzahl ist, insb. nämlich falls ein oder mehrere Kennzahlenwerte für die Meßsystem-Kennzahl größer als ein oder mehrere eine verminderte Funktionstüchtigkeit des Meßwandlers repräsentierende Bezugswerte und/oder größer als ein oder mehrere eine Fehlfunktion des Meßwandlers repräsentierende Bezugswerte ist und/oder größer als ein oder mehrere ein nicht mehr intakten Meßwandler repräsentierenden Bezugswerten ist, eine dies signalisierende, insb. als (Störungs-)Alarm deklarierte, Meldung auszugeben.

16. Meßsystem nach einem der vorherigen Ansprüche, wobei die Meßsystem-Elektronik (20) einen nichtflüchtigen elektronischen Datenspeicher (EEPROM) aufweist, der dafür eingerichtet ist, digitale Daten, insb. auch ohne eine angelegte Betriebsspannung, vorzuhalten, insb. nämlich einen oder mehrere vorab ermittelte Bezugswerte für eine Meßsystem-Kennzahl zu speichern.

17. Meßsystem nach einem der Ansprüche 14 bis 15, jeweils in Verbindung mit Anspruch 16, wobei im elektronischen Datenspeicher ein oder mehrere, insb. vom Hersteller des Meßsystems und/oder bei der Herstellung des Meßsystems und/oder im Betrieb des Meßsystems vorab ermittelte, Bezugswerte für die Meßsystem-Kennzahl, insb. nämlich ein oder mehrere eine verminderte Funktionstüchtigkeit des Meßwandlers repräsentierende Bezugswerte und/oder nämlich ein oder mehrere eine Fehlfunktion des Meßwandlers repräsentierende Bezugswerte, gespeichert sind.

18. Meßsystem nach dem vorherigen Anspruch, wobei die Meßsystem-Elektronik (20) eingerichtet ist, einen oder mehrere Kennzahlenwerte für die Meßsystem-Kennzahl jeweils mit einem oder mehreren im Datenspeicher gespeicherten Bezugswerten für die Meßsystem-Kennzahl zu vergleichen.

19. Meßsystem nach dem vorherigen Anspruch,
- wobei die ersten und zweiten Schwingungserreger (31) mechanisch mit dem Trägergerüst verbunden sind; und/oder
- wobei die ersten, zweiten, dritten und vierten Schwingungssensoren mechanisch mit dem Trägergerüst verbunden sind.

20. Meßsystem nach einem der vorherigen Ansprüche,
- wobei der erste Schwingungserreger eingerichtet ist, elektrische Leistung mit einem zeitlich veränderlichen elektrischen Strom derart in mechanische Leistung zu wandeln, daß an einem mittels des ersten Schwingungserregers am damit mechanisch verbundenen ersten Rohr gebildeten Angriffspunkt eine zeitlich veränderliche Antriebskraft auf das erste Rohr wirkt; und/oder
- wobei der zweite Schwingungserreger eingerichtet ist, elektrische Leistung mit einem zeitlich veränderlichen elektrischen Strom derart in mechanische Leistung zu wandeln, daß an einem mittels des zweiten Schwingungserregers am damit mechanisch verbundenen zweiten Rohr gebildeten Angriffspunkt eine zeitlich veränderliche Antriebskraft auf das zweite Rohr wirkt; und/oder
- wobei der erste Schwingungserreger (31) nicht mit dem zweiten Rohr mechanisch verbunden ist bzw. keine mit dem zweiten Rohr mechanisch verbundene Komponente aufweist; und/oder
- wobei der zweite Schwingungserreger (31) nicht mit dem ersten Rohr mechanisch verbunden ist bzw. keine mit dem ersten Rohr mechanisch verbundene Komponente aufweist; und/oder
- wobei die Erregeranordnung außer dem ersten Schwingungserreger keinen weiteren mechanisch mit dem ersten Rohr verbundenen Schwingungserreger aufweist; und/oder
- wobei die Erregeranordnung außer dem zweiten Schwingungserreger keinen weiteren mechanisch mit dem zweiten Rohr verbundenen Schwingungserreger aufweist.

## Claims

1. A vibronic measuring system, in particular a Coriolis mass flow meter or Coriolis mass flow/density meter, for measuring and/or monitoring at least one, in particular time-variable, flow parameter, in particular a mass flow, a volume flow and/or a flow velocity, and/or for measuring and/or monitoring at least one, in particular time-variable, substance parameter, in particular a density and/or a viscosity, of a flowing measured substance, in particular a gas, a liquid or a dispersion, said measuring system, in particular a measuring system configured as an in-line measuring device and/or measuring device with a compact design, comprising:
• a measuring transducer (10)
∘ with a tube arrangement for conveying the flowing measured substance,
∘ with an exciter arrangement for converting electrical power into mechanical power serving to excite and maintain forced mechanical oscillations of the tube arrangement,
∘ and with a sensor arrangement for registering mechanical oscillations of the tube arrangement and for providing oscillation signals each representing oscillatory movements of the tube arrangement;
• and measuring system electronics (20) electrically coupled to the measuring transducer (10), that is to say both to its exciter arrangement and to its sensor arrangement, in particular by means of electrical connecting cables, and formed, in particular, by means of at least one microprocessor and/or arranged in an electronics protective housing, for operating the measuring transducer and for evaluating oscillation signals delivered from the measuring transducer;
• wherein the tube arrangement has
∘ a first tube (111), in particular at least sectionally bent and/or at least sectionally straight, and at least a second tube (112), in particular at least sectionally bent and/or at least sectionally straight and/or of identical structure to the first tube and/or at least sectionally parallel to the first tube,
∘ wherein each of the first and second tubes of the tube arrangement extends in each case from a respective first end of the respective tube to a respective second end of said tube with a respective tube length and has in each case a lumen surrounded by an, in particular metal, tube wall and extending in each case from the respective first end of the respective tube to the respective second end of said tube,
∘ and wherein each of the first and second tubes of the tube arrangement in each case is adapted to be flowed through by the measured substance and during that to be caused to vibrate;
• wherein the exciter arrangement has two, in particular electrodynamic and/or structurally identical, oscillation exciters (31, 32) of which
∘ a first oscillation exciter (31) is mechanically connected to the first tube, in particular positioned centrally on the first tube,
∘ and a second oscillation exciter (32) is mechanically connected to the second tube, in particular positioned centrally on the second tube,
• wherein each of the first and second oscillation exciters is in each case adapted to convert electrical power of a time-variable electrical current into mechanical power, in particular such that at a respective point of engagement formed by means of the respective oscillation exciter on the tube mechanically connected to it in each case, a time-variable driving force acts on the first or second tube;
• wherein the sensor arrangement has at least four, in particular electrodynamic and/or structurally identical and/or spaced apart from one another, oscillation sensors, of which
∘ a first oscillation sensor (41) and a second oscillation sensor (42) are positioned spaced apart from one another, in particular symmetrically to the first oscillation exciter (31), on the first tube, that is to say, in particular, at least partially mechanically connected to the first tube,
∘ and a third oscillation sensor (43) and a fourth oscillation sensor (44) are positioned spaced apart from one another, in particular symmetrically to the second oscillation exciter (32), on the second tube, that is to say, in particular, at least partially mechanically connected to the second tube;
• wherein each of the first and second oscillation sensors is in each case adapted to register oscillatory movements of the first tube and to convert them into an, in particular electrical or optical, first or second oscillation signal representing said oscillatory movements, in particular such that each of the first and second oscillation signals in each case contains one or more sinusoidal signal components with in each case a frequency corresponding to an oscillation frequency of oscillatory movements of the first tube;
• wherein each of the third and fourth oscillation sensors is in each case adapted to register oscillatory movements of the second tube and to convert them into an, in particular electrical or optical, third or fourth oscillation signal representing said oscillatory movements, in particular such that each of the third and fourth oscillation signals in each case contains one or more sinusoidal signal components with in each case a frequency corresponding to an oscillation frequency of oscillatory movements of the second tube;
• wherein the measuring system electronics (20) are adapted
∘ to supply electrical current to the first oscillation exciter (31), that is to say to supply an electrical first driver signal (e1) to the first oscillation exciter (31), whereby the first tube executes forced mechanical oscillations, in particular bending oscillations, with one or more oscillation frequencies predetermined by the first driver signal (e1),
∘ and to supply electrical current to the second oscillation exciter (32), that is to say to supply an electrical second driver signal (e2) to the second oscillation exciter (32) at the same time as the first driver signal (e1), whereby the second tube executes forced mechanical oscillations, in particular bending oscillations, with one or more oscillation frequencies predetermined by the second driver signal (e2),
• wherein the measuring system electronics are adapted:
∘ in a first operating mode
∘ to produce both the first driver signal (e1) with at least a first useful current component (eN11), that is to say a current component that is dominating as regards a current strength or a single sinusoidal current component, with an (alternating current) frequency and a phase angle, and to supply this to the first oscillation exciter,
∘ and to produce the second driver signal (e2) with at least a first useful current component (eN21), that is to say a current component that is dominating as regards a current strength or a single sinusoidal current component, with an (alternating current) frequency corresponding to the (alternating current) frequency of the first useful current components (eN11) of the first driver signal (e1) and a phase angle that differs from the phase angle of the first useful current components (eN11) of the first driver signal (e1), in particular by 180°, and to supply this to the second oscillation exciter such
∘ that the first and second driver signals have a first drive phase difference (L1e1), that is to say a difference, in particular equal to 180°, between the phase angles of their first useful current components,
∘ that the first tube executes at least partially, in particular predominantly, first useful oscillations, that is to say mechanical oscillations forced by the first oscillation exciter (supplied with current) and with at least a first useful frequency, that is to say an oscillation frequency corresponding to the (alternating current) frequency of the first useful current component of the first driver signal, and with a first useful phase, that is to say an oscillation phase corresponding to the phase angle of the first useful current component of the first driver signal, in particular at least at the location of the first oscillation exciter, and that the second tube executes at least partially, in particular predominantly, second useful oscillations, that is to say mechanical oscillations forced by the second oscillation exciter (supplied with current) and with the first useful frequency and with a second useful phase, that is to say an oscillation phase corresponding to the phase angle of the first useful current components of the second driver signal, in particular at least at the location of the second oscillation exciter, in particular such that the second useful oscillations are opposite phase or mirror-inverted to the first useful oscillations and/or that the first and second useful oscillations are suitable for effecting Coriolis forces dependent on the mass flow in the flowing measured substance,
∘ and that each of the first, second, third and fourth oscillation signals has in each case a first useful signal component (sN11; sN21; sN31; sN41), that is to say a respective sinusoidal signal component with a frequency corresponding to the first useful frequency;
• and in a second operating mode, in particular activated before and/or after the first operating mode and/or lasting for more than 10 ms and/or temporarily and/or restarted repeatedly,
∘ to produce both the first driver signal (e1) with a second useful current component (eN12), that is to say a current component that is dominating as regards a current strength or a single sinusoidal current component, with an (alternating current) frequency and a phase angle, and to supply this to the first oscillation exciter,
∘ and to produce the second driver signal (e2) with at least a second useful current component (eN22), that is to say a current component that is dominating as regards a current strength or a single sinusoidal current component, with an (alternating current) frequency corresponding to the (alternating current) frequency of the second useful current components (eN12) of the first driver signal (e1) and a phase angle that differs from the phase angle of the second useful current components (eN12) of the first driver signal (e1) by less than 180°, in particular a phase angle corresponding to the phase angle of the second useful current components (eN12) of the first driver signal (e1), and to supply this to the second oscillation exciter such
∘ that the first and second driver signals have a second drive phase difference, in particular equal to 0°, that differs, in particular by 180°, from the first drive phase difference, that is to say a difference between the phase angles of their second useful current components,
∘ that the first tube executes at least partially, in particular predominantly, third useful oscillations, that is to say mechanical oscillations forced by the first oscillation exciter (supplied with current) and with at least a second useful frequency, that is to say an oscillation frequency corresponding to the (alternating current) frequency of the second useful current component of the first driver signal and with a third useful phase, that is to say an oscillation phase corresponding to the phase angle of the second useful current component of the first driver signal, in particular at least at the location of the first oscillation exciter, and that the second tube executes at least partially, in particular predominantly, fourth useful oscillations, that is to say mechanical oscillations forced by the second oscillation exciter (supplied with current) and with the second useful frequency and with a fourth useful phase, that is to say an oscillation phase corresponding to the phase angle of the second useful current components of the second driver signal, in particular at least at the location of the second oscillation exciter, in particular such that the fourth useful oscillations are in phase with the third useful oscillations,
∘ and that each of the first, second, third and fourth oscillation signals has in each case a second useful signal component (sN12; sN22; sN32; sN42), that is to say a respective sinusoidal signal component with a frequency corresponding to the second useful frequency;
• and wherein the measuring system electronics are adapted:
∘ in the first operating mode to receive and to evaluate the first, second, third and fourth oscillation signals, that is to say by reference to the oscillation signals, that is to say, in particular, at least by reference to in each case one of the useful signal components, to ascertain measured values quantifying the at least one physical measured variable (sequentially in time),
∘ and in the second operating mode to receive and to evaluate the first, second, third and fourth oscillation signals, that is to say by reference to the first and third and/or second and fourth oscillation signals received in the second operating mode, that is to say, in particular, by reference to a respective amplitude of the second useful signal component (sN12, sN32) of the first and third oscillation signals and/or a respective amplitude of the second useful signal component (sN22, sN42) of the second and fourth oscillation signals and/or by reference to a respective phase angle of the second useful signal components (sN12, sN32) of the first and third oscillation signals and/or a respective phase angle of the second useful signal components (sN22, sN42) of the second and fourth oscillation signals, to calibrate the measuring system and/or to check the measuring system or to detect whether there is a disturbance of the measuring system, in particular a disturbance lessening an ability of the measuring system to function and/or bringing about a malfunctioning of the measuring system and/or reducing an integrity of at least one of the first, second, third and fourth oscillation signals, or measured values obtained therefrom and/or provoking a measurement error of measured values obtained from at least one of the first, second, third and fourth oscillation signals, in particular a disturbance due to a deposit on an inside of the tube wall of one or more of the tubes and/or due to a reduced thickness of the tube wall of one or more of the tubes and/or due to an aging of one or more of the oscillation sensors and/or oscillation exciters and/or an incorrect installation and/or assembly of the measuring transducer.

2. The measuring system as claimed in one of the preceding claims, wherein the measuring system electronics (20) are adapted to provide the first and/or second useful current component of the first and second driver signals with an (alternating current) frequency that differs from a resonant frequency, fr1, of the first tube and/or a resonant frequency, fr2, of the second tube by less than 1% of said resonant frequency, fr1, and/or by less than 1 Hz.

3. The measuring system as claimed in one of the preceding claims, wherein the first and second tubes have at least one common resonant frequency, fr12, and wherein the measuring system electronics are adapted in the first operating mode to provide the first useful current component of the first and second driver signals in each case with an (alternating current) frequency that differs from said common resonant frequency, fr12, of the first and second tubes by less than 1% of said resonant frequency, fr12, and/or by less than 1 Hz.

4. The measuring system as claimed in one of the preceding claims,
• wherein the measuring transducer has a first natural bending oscillation mode, in which the first and second tubes can execute or execute opposite phase or mirror-inverted mechanical oscillations (anti-parallel mode), and wherein the measuring system electronics are adapted in the first operating mode to supply first and second driver signals forcing said opposite phase mechanical oscillations to the first and second oscillation exciters, that is to say, in particular, to provide the first useful current components of the first and second driver signals with an (alternating current) frequency that differs from a resonant frequency, fr12, of the first natural bending oscillation mode by less than 1% of said resonant frequency and/or by less than 1 Hz, and/or with phase angles effecting a first drive phase difference of 180°;
• and wherein the measuring transducer has a second natural bending oscillation mode, in particular a bending oscillation basic mode, in which the first and second tubes can execute or execute opposite phase mechanical oscillations (parallel mode), and wherein the measuring system electronics are adapted in the second operating mode to supply first and second driver signals forcing said opposite phase mechanical oscillations to the first and second oscillation exciters, that is to say, in particular, to provide the first useful current components of the first and second driver signals with an (alternating current) frequency that differs from a resonant frequency, fr22, of the second natural bending oscillation mode by less than 1% of said resonant frequency and/or by less than 1 Hz, and/or with phase angles effecting a second drive phase difference of 0°.

5. The measuring system as claimed in one of the preceding claims, wherein the measuring system electronics are adapted, by reference to at least one of the first, second, third and fourth oscillation signals received in the second operating mode, that is to say, in particular, their respective second useful signal component, to detect whether there is a disturbance of the measuring system, in particular a disturbance lessening an ability of the measuring system to function and/or bringing about a malfunctioning of the measuring system and/or reducing an integrity of at least one of the first, second, third and fourth oscillation signals, or measured values obtained therefrom and/or provoking a measurement error of measured values obtained therefrom, in particular a disturbance due to a deposit on an inside of the tube wall of one or more of the tubes and/or due to a reduced thickness of the tube wall of one or more of the tubes and/or due to an aging of one or more of the oscillation sensors and/or oscillation exciters.

6. The measuring system as claimed in one of the preceding claims, wherein each of the first useful signal components of the first, second, third and fourth oscillation signals has in each case a phase angle dependent on a mass flow of a measured substance flowing through the tube arrangement and the measuring transducer of which it forms part.

7. The measuring system as claimed in the preceding claim, wherein the measuring system electronics (20) are adapted, at least in the first operating mode, by reference to a first (measuring) phase difference, that is to say a difference between the phase angle of the first useful signal component of the first oscillation signal and the phase angle of the first useful component of the second oscillation signal and/or by reference to a second (measuring) phase difference, that is to say a difference between the phase angle of the first useful signal component of the third oscillation signal and the phase angle of the first useful signal component of the fourth oscillation signal, to ascertain, that is to say, in particular, to calculate, mass flow measured values, that is to say measured values representing the mass flow of the flowing measured substance.

8. The measuring system as claimed in claims 5 and 7, wherein the disturbance of the measuring system comprises an, in particular irreversible, change of a (scale) zero point of the measuring system corresponding to a first and/or second phase difference measured while the measured substance was stationary, and/or a (measuring) sensitivity of the measuring system corresponding to a change of the first and/or second (measuring) phase difference by reference to a change of the mass flow.

9. The measuring system as claimed in the preceding claim,
• wherein the disturbance of the measuring system comprises an, in particular irreversible, change of one or more oscillation characteristics of the tube arrangement, in particular due to a reduced thickness of the tube wall of one or more of the tubes and/or due to a plastic deformation of one or more of the tubes and/or due to a deposit on an inside of the tube wall of one or more of the tubes and/or due to a crack in the tube wall of one or more of the tubes;
• and/or wherein the disturbance of the measuring system comprises an, in particular irreversible, change of one or more flow characteristics of the tube arrangement, in particular due to a reduced flow cross-section of the tube arrangement, in particular as a result of a blockage of one or more of the tubes and/or as a result of a deposit on an inside of the tube wall of one or more of the tubes;
• and/or wherein the disturbance of the measuring system comprises an, in particular irreversible, change of one or more electromechanical transducer properties, in particular due to an aging of one or more of the oscillation sensors and/or oscillation exciters and/or due to a change of a respective mechanical connection between one or more oscillation sensors or one or more oscillation exciters and the respective tube;
• and/or wherein the disturbance of the measuring system comprises an incorrect installation and/or assembly of the measuring transducer or the measuring system of which it forms part.

10. The measuring system as claimed in one of the preceding claims,
• wherein the measuring system electronics are adapted to obtain or to ascertain the respective first useful signal component, that is to say, in particular, a respective amplitude and/or a respective phase angle, from each of the first, second, third and fourth oscillation signals received in the first operating mode; and/or
• wherein the measuring system electronics are adapted to obtain or to ascertain the respective second useful signal component, that is to say, in particular, a respective amplitude and/or a respective phase angle, from each of the first, second, third and fourth oscillation signals received in the second operating mode; and/or
• wherein the measuring system electronics are adapted, by reference to the first and third oscillation signals received in the second operating mode, to ascertain a first (test) amplitude difference, that is to say a difference between an amplitude of the second useful signal components of the first and third oscillation signals, that is to say, in particular, to compare this with at least one reference value representing a lessened functionality or a defect of the measuring transducer or, in the case of too large a difference, that is to say a difference exceeding a reference value predetermined therefor, to output a notification, in particular declared as a (disturbance) alarm; and/or
• wherein the measuring system electronics are adapted, by reference to the first and third oscillation signals received in the second operating mode, to ascertain a first (test) phase difference, that is to say a difference between a phase angle of the second useful signal components of the first and third oscillation signals, that is to say, in particular, to compare this with at least one reference value representing a lessened functionality or a defect of the measuring transducer or, in the case of too large a difference, that is to say a difference exceeding a reference value predetermined therefor, to output a notification, in particular declared as a (disturbance) alarm; and/or
• wherein the measuring system electronics are adapted, by reference to the second and fourth oscillation signals received in the second operating mode, to ascertain a second (test) amplitude difference, that is to say a difference between an amplitude of the second useful signal components of the second and fourth oscillation signals, that is to say, in particular, to compare this with at least one reference value representing a lessened functionality or a defect of the measuring transducer or, in the case of too large a difference, that is to say a difference exceeding a reference value predetermined therefor, to output a notification, in particular declared as a (disturbance) alarm; and/or
• wherein the measuring system electronics are adapted, by reference to the second and fourth oscillation signals received in the second operating mode, to ascertain a second (test) phase difference, that is to say a difference between a phase angle of the second useful signal components of the second and fourth oscillation signals, that is to say, in particular, to compare this with at least one reference value representing a lessened functionality or a defect of the measuring transducer or, in the case of too large a difference, that is to say a difference exceeding a reference value predetermined therefor, to output a notification, in particular declared as a (disturbance) alarm; and/or
• wherein the measuring system electronics are adapted in the first operating mode to provide the first and second driver signals with an, in particular predefinable and/or adjustable, first drive amplitude difference, that is to say with a difference, in particular one equal to zero, between an amplitude of the first useful current components (eN11) of the first driver signal and an amplitude of the first useful current components (eN21) of the second driver signal and to supply this to the first or second oscillation exciter; and/or
• wherein the measuring system electronics are adapted in the second operating mode to provide the first and second driver signals with a second drive amplitude difference, in particular one that corresponds to the first drive amplitude difference and/or is predefinable and/or adjustable, namely a difference, in particular equal to zero, between an amplitude of the second useful current components (eN12) of the first driver signal and an amplitude of the second useful current components (eN22) of the second driver signal, and to supply this to the first or second oscillation exciter; and/or
• wherein the measuring system electronics are adapted, by reference to the first and second driver signals supplied in the second operating mode, that is to say, in particular, by reference to the second useful current components (eN12, eN2) of the first and second driver signals (e2, e2), and by reference to the first and third oscillation signals, that is to say, in particular, by reference to the second useful signal components of the first and third oscillation signals, and/or the second and fourth oscillation signals, that is to say, in particular, by reference to the second useful signal components of the second and fourth oscillation signals, to ascertain a (modal) damping of the first and second tubes for second useful oscillations, that is to say, in particular, to compare this with at least one reference value representing a lessened functionality or a defect of the measuring transducer or, in the case of too large a difference, that is to say a difference exceeding a reference value predetermined therefor, to output a notification, in particular declared as a (disturbance) alarm.

11. The measuring system as claimed in one of the preceding claims, wherein the measuring system electronics are adapted, by reference to one or more of the first, second, third and fourth oscillation signals received in the second operating mode, to calculate one or more values for at least one measuring system characterizing number (MK1) that characterizes an operating state, in particular a system function (transfer function) inherent in the measuring system and determining one or more functional dependencies of one or more of the oscillation signals of one or more of the driver signals, or determining a functionality of the measuring system, in particular such that said measuring system characterizing number is dependent on one or more parameters of a system function of the measuring system mediating between at least the second useful current components of the first and second driver signals and at least one of the second useful signal components of the first, second, third and fourth oscillation signals.

12. The measuring system as claimed in claim 11, wherein the measuring system characterizing number (MK1) depends on a system amplitude ratio between an, in particular absolute or relative, deviation (Δe) of an amplitude of the second useful current component of the second driver signal (e2) from an amplitude of the second useful current components of the first driver signal (e1) and an, in particular absolute or relative, deviation (Δs13) of an amplitude of the second useful signal component of the third oscillation signal from an amplitude of the second useful signal component of the first oscillation signal and/or an, in particular absolute or relative, deviation (Δs24) of an amplitude of the second useful signal component of the fourth oscillation signal from an amplitude of the second useful signal component of the second oscillation signal, in particular a total (Δs13+Δs24) of the deviations of the second useful signal components, that is to say, in particular, quantifies said (system) amplitude ratio (Δs13/Δe; Δs24/Δe; Δs13/Δe+Δs24/Δe).

13. The measuring system as claimed in claim 11, wherein the measuring system characterizing number (K1) is dependent on a (system) phase difference between the second useful signal component (sN12; sN22) of at least one of the first and second oscillation measurement signals, in particular a total (sN12+sN22) of the second useful signal component (sN12, sN22) of the first and second oscillation signals, and the second useful signal component (sN32; sN42) of at least one of the third and fourth oscillation measurement signals, in particular a total (sN32+sN42) of the second useful signal component of the third and fourth oscillation signals, in particular quantifies said (system) phase difference.

14. The measuring system as claimed in one of claims 11 to 13, wherein the measuring system electronics (20) are adapted to compare one or more values for the measuring system characterizing number in each case with one or more reference values ascertained for the measuring system characterizing number, in particular by the manufacturer of the measuring system and/or during manufacture and/or a start-up of the measuring system, in particular one or more reference values representing a lessened functionality of the measuring transducer and/or one or more reference values representing a malfunctioning of the measuring transducer and/or one or more reference values representing a defective measuring transducer, in particular to evaluate and/or to quantify a deviation of one or more of the characterizing number values from one or more of the reference values.

15. The measuring system as claimed in the preceding claim, wherein the measuring system electronics (20) are adapted to ascertain whether one or more values for the measuring system characterizing number (MK1) is greater than the at least one reference value for the measuring system characterizing number, that is to say, in particular, if one or more values for the measuring system characterizing number is greater than one or more reference values representing a lessened functionality of the measuring transducer and/or greater than one or more reference values representing a malfunctioning of the measuring transducer and/or greater than one or more reference values representing a no longer intact measuring transducer, to output a notification signaling this, in particular declared as a (disturbance) alarm.

16. The measuring system as claimed in one of the preceding claims, wherein the measuring system electronics (20) have a non-volatile memory (EEPROM) that is adapted to provide digital data, in particular even in the absence of operating voltage, that is to say, in particular, to store one or more previously ascertained reference values for a measuring system characterizing number.

17. The measuring system as claimed in one of claims 14 and 15, each in conjunction with claim 16, wherein there are stored in the electronic memory one or more reference values for the measuring system characterizing number, in particular previously ascertained by the manufacturer of the measuring system and/or during manufacture of the measuring system and/or during operation of the measuring system, that is to say, in particular, one or more reference values representing a lessened functionality of the measuring transducer and/or that is to say one or more reference values representing a malfunctioning of the measuring transducer.

18. The measuring system as claimed in the preceding claim, wherein the measuring system electronics (20) are adapted to compare one or more values for the measuring system characterizing number in each case with one or more reference values for the measuring system characterizing number stored in the memory.

19. The measuring system as claimed in the preceding claim,
• wherein the first and second oscillation exciters (31) are mechanically connected to the support structure; and/or
• wherein the first, second, third and fourth oscillation sensors are mechanically connected to the support structure.

20. The measuring system as claimed in one of the preceding claims,
• wherein the first oscillation exciter is adapted to convert electrical power of a time-variable electrical current into mechanical power such that, at a point of engagement formed by means of the first oscillation exciter on the first tube mechanically connected to it, a time-variable driving force acts on the first tube; and/or
• wherein the second oscillation exciter is adapted to convert electrical power of a time-variable electrical current into mechanical power such that, at a point of engagement formed by means of the second oscillation exciter on the second tube mechanically connected to it, a time-variable driving force acts on the second tube; and/or
• wherein the first oscillation exciter (31) is not mechanically connected to the second tube or does not have any components that are mechanically connected to the second tube; and/or
• wherein the second oscillation exciter (31) is not mechanically connected to the first tube or does not have any components that are mechanically connected to the first tube; and/or
• wherein the exciter arrangement, with the exception of the first oscillation exciter, does not have any other oscillation exciters that are mechanically connected to the first tube; and/or
• wherein the exciter arrangement, with the exception of the second oscillation exciter, does not have any other oscillation exciters that are mechanically connected to the second tube.

## Revendications

1. Système de mesure vibronique, notamment un débitmètre massique Coriolis ou un débitmètre massique/densimètre Coriolis, lequel système est destiné à la mesure et/ou à la surveillance d'au moins un paramètre d'écoulement, notamment variable dans le temps, notamment un débit massique, un débit volumique et/ou une vitesse d'écoulement, et/ou à la mesure et/ou à la surveillance d'au moins un paramètre, notamment variable dans le temps, notamment une densité et/ou une viscosité, d'un produit en écoulement, notamment un gaz, un liquide ou une dispersion, lequel système de mesure est réalisé notamment en tant qu'appareil de mesure en ligne et/ou en tant qu'appareil de mesure de construction compacte, lequel système de mesure comprend :
- un transducteur (10)
-- avec un arrangement de tubes destiné à guider le produit en écoulement,
-- avec un circuit d'excitation destiné à convertir la puissance électrique en puissance mécanique servant à exciter et à maintenir des vibrations mécaniques forcées de l'arrangement de tubes
-- et avec un arrangement de capteurs destiné à mesurer les vibrations mécaniques de l'arrangement de tubes et à fournir des signaux de vibration représentant respectivement les mouvements de vibration de l'arrangement de tubes ;
- ainsi qu'une électronique de système de mesure (20) couplée électriquement au transducteur (10), à savoir aussi bien à son circuit d'excitation qu'à son arrangement de capteurs, notamment au moyen de lignes de liaison électriques, laquelle électronique est notamment formée au moyen d'au moins un microprocesseur et/ou disposée dans un boîtier de protection électronique, laquelle électronique est destinée à commander le transducteur et à évaluer les signaux de vibration fournis par le transducteur ;
- l'arrangement de tubes présentant
-- un premier tube (111), notamment courbé au moins par tronçons et/ou droit au moins par tronçons, et au moins un deuxième tube (112), notamment courbé au moins par tronçons et/ou droit au moins par tronçons et/ou de construction identique au premier tube et/ou parallèle au premier tube au moins par tronçons,
-- chacun des premier et deuxième tubes de l'arrangement de tubes s'étendant respectivement d'une première extrémité respective du tube respectif jusqu'à une deuxième extrémité respective du même tube avec une longueur de tube respective et présentant respectivement un canal intérieur entouré par une paroi de tube, notamment métallique, lequel canal s'étend respectivement de la première extrémité respective du tube respectif jusqu'à la deuxième extrémité respective du même tube,
--- et chacun des premier et deuxième tubes de l'arrangement de tubes étant conçu pour être traversé par un produit et pour être mis en vibration pendant ce temps ;
- le circuit d'excitation présentant deux excitateurs de vibrations (31, 32), notamment électrodynamiques et/ou de construction identique, dont
-- un premier excitateur de vibrations (31) est relié mécaniquement au premier tube, notamment positionné au centre du premier tube,
-- et un deuxième excitateur de vibrations (32) est relié mécaniquement au deuxième tube, notamment positionné au centre du deuxième tube,
- chacun des premier et deuxième excitateurs de vibrations étant respectivement conçu pour convertir une puissance électrique avec un courant électrique variable dans le temps en une puissance mécanique, notamment de telle sorte qu'une force d'entraînement variable dans le temps agit sur le premier ou le deuxième tube en un point d'attaque respectif formé au moyen de l'excitateur de vibrations respectif sur le tube qui lui est respectivement relié mécaniquement ;
- l'arrangement de capteurs présentant au moins quatre capteurs de vibrations, notamment électrodynamiques et/ou de construction identique et/ou espacés les uns des autres, dont
-- un premier capteur de vibrations (41) et un deuxième capteur de vibrations (42) sont positionnés sur le premier tube à distance l'un de l'autre, notamment symétriquement par rapport au premier excitateur de vibrations (31), notamment reliés mécaniquement au moins partiellement au premier tube,
-- et un troisième capteur de vibrations (43) et un quatrième capteur de vibrations (44) sont positionnés sur le deuxième tube à distance l'un de l'autre, notamment symétriquement par rapport au deuxième excitateur de vibrations (32), notamment reliés mécaniquement au moins partiellement au deuxième tube ;
- chacun des premier et deuxième capteurs de vibrations étant respectivement conçu pour détecter les mouvements de vibration du premier tube et pour les convertir en un premier ou un deuxième signal de vibration, notamment électrique ou optique, représentant des mouvements de vibration identiques, notamment de telle sorte que chacun des premier et deuxième signaux de vibration contienne respectivement une ou plusieurs composantes de signal sinusoïdales ayant respectivement une fréquence correspondant à une fréquence des mouvements de vibration du premier tube ;
- chacun des troisième et quatrième capteurs de vibrations étant respectivement conçu pour détecter les mouvements de vibration du deuxième tube et pour les convertir en un troisième ou un quatrième signal de vibration représentant des mouvements de vibration identiques, notamment électrique ou optique, notamment de telle sorte que chacun des troisième et quatrième signaux de vibration contienne respectivement une ou plusieurs composantes de signal sinusoïdales ayant respectivement une fréquence correspondant à une fréquence des mouvements de vibration du deuxième tube ;
- l'électronique de système de mesure (20) étant conçue pour,
-- alimenter le premier excitateur de vibrations (31), à savoir injecter un premier signal d'attaque électrique (e1) dans le premier excitateur de vibrations (31), ce par quoi le premier tube exécute des vibrations mécaniques forcées, notamment des vibrations de flexion, avec une ou plusieurs fréquences de vibration prédéfinies par le premier signal d'attaque (e1), ainsi que
-- alimenter le deuxième excitateur de vibrations (32), à savoir injecter simultanément au premier signal d'attaque (e1) un deuxième signal d'attaque électrique (e2) dans le deuxième excitateur de vibrations (32), ce par quoi le deuxième tube exécute des vibrations mécaniques forcées, notamment des vibrations de flexion, avec une ou plusieurs fréquences de vibration prédéfinies par le deuxième signal d'attaque (e2) ;
- l'électronique de système de mesure étant conçue :
-- dans un premier mode de fonctionnement, pour générer et injecter dans le premier excitateur de vibrations
-- aussi bien le premier signal d'attaque (e1) avec au moins une première composante de courant utile (eN11), à savoir une composante de courant sinusoïdale dominante ou unique en ce qui concerne une intensité de courant avec une fréquence (de courant alternatif) et un angle de phase
-- que le deuxième signal d'attaque (e2) avec au moins une première composante de courant utile (eN21), à savoir une composante de courant sinusoïdale dominante ou unique en ce qui concerne une intensité de courant avec une fréquence (de courant alternatif) correspondant à la fréquence (de courant alternatif) des premières composantes de courant utiles (eN11) du premier signal d'attaque (e1) et un angle de phase s'écartant de l'angle de phase des premières composantes de courant utiles (eN11) du premier signal d'attaque (e1), notamment de 180°, et pour l'injecter dans le deuxième excitateur de vibrations, de telle sorte,
-- que les premiers et deuxièmes signaux d'attaque présentent une première différence de phase d'entraînement (Δe1), à savoir une différence, notamment de 180°, entre les angles de phase de leurs premières composantes de courant utiles,
--- que le premier tube exécute au moins partiellement, notamment principalement, des premières vibrations utiles, à savoir des vibrations mécaniques forcées par le premier excitateur de vibrations (alimenté) avec au moins une première fréquence utile, à savoir une fréquence de vibration correspondant à la fréquence (de courant alternatif) de la première composante de courant utile du premier signal d'attaque et avec une première phase utile, à savoir une phase de vibration correspondant, notamment au moins à l'endroit du premier excitateur de vibrations, à l'angle de phase de la première composante de courant utile du premier signal d'attaque, et le deuxième tube exécute au moins partiellement, notamment principalement, des deuxièmes vibrations utiles, à savoir des vibrations mécaniques forcées par le deuxième excitateur de vibrations (alimenté) avec la première fréquence utile et avec une deuxième phase utile, à savoir une phase de vibration correspondant, notamment au moins à l'endroit du deuxième excitateur de vibrations, à l'angle de phase des premières composantes de courant utiles du deuxième signal d'attaque, notamment de telle sorte que les deuxièmes vibrations utiles soient en opposition de phase ou identiques aux premières vibrations utiles et/ou que les premières et deuxièmes vibrations utiles soient aptes à provoquer dans le produit en écoulement des forces de Coriolis dépendant du débit massique,
--- et que chacun des premiers, deuxièmes, troisièmes et quatrièmes signaux de vibration présente respectivement une première composante de signal utile (sN11 ; sN21 ; sN31 ; sN41), à savoir une composante de signal sinusoïdale respective avec une fréquence correspondant à la première fréquence utile,
- et, dans un deuxième mode de fonctionnement, activé notamment avant et/ou après le premier mode de fonctionnement et/ou durant plus de 10 ms et/ou limité dans le temps et/ou démarré de manière répétée, pour générer et injecter dans le premier excitateur de vibrations
-- aussi bien le premier signal d'attaque (e1) avec une deuxième composante de courant utile (eN12), à savoir une composante de courant sinusoïdale dominante ou unique en ce qui concerne une intensité de courant avec une fréquence (de courant alternatif) et un angle de phase,
-- que le deuxième signal d'attaque (e2) avec au moins une deuxième composante de courant utile (eN22), à savoir une composante de courant sinusoïdale dominante ou unique en ce qui concerne une intensité de courant avec une fréquence (de courant alternatif) correspondant à la fréquence (de courant alternatif) des deuxièmes composantes de courant utiles (eN12) du premier signal d'attaque (e1) et un angle de phase s'écartant de l'angle de phase des deuxièmes composantes de courant utiles (eN12) du premier signal d'attaque (e1) de moins de 180°, notamment correspondant à l'angle de phase des deuxièmes composantes de courant utiles (eN12) du premier signal d'attaque (e1), et à l'injecter dans le deuxième excitateur de vibrations, de telle sorte
--- que les premiers et deuxièmes signaux d'attaque présentent une deuxième différence de phase d'entraînement, à savoir une différence entre les angles de phase de leurs deuxièmes composantes de courant utiles, laquelle deuxième différence s'écarte de la première différence de phase d'entraînement, notamment de 180°, et qui est notamment de 0°,
--- que le premier tube présente au moins partiellement, notamment principalement, des troisièmes vibrations utiles, à savoir des vibrations mécaniques forcées par le premier excitateur de vibrations (alimenté) avec au moins une deuxième fréquence utile, à savoir une fréquence de vibration correspondant à la fréquence (de courant alternatif) de la deuxième composante de courant utile du premier signal d'attaque et avec une troisième phase utile, à savoir une phase de vibration correspondant, notamment au moins à l'endroit du premier excitateur de vibrations, à l'angle de phase de la deuxième composante de courant utile du premier signal d'attaque, et le deuxième tube exécute au moins partiellement, notamment principalement, des quatrièmes vibrations utiles, à savoir des vibrations mécaniques forcées par le deuxième excitateur de vibrations (alimenté) avec la deuxième fréquence utile et avec une quatrième phase utile, à savoir une phase de vibration correspondant, notamment au moins à l'endroit du deuxième excitateur de vibrations, à l'angle de phase des deuxièmes composantes de courant utiles du deuxième signal d'attaque, notamment de telle sorte que les quatrièmes vibrations utiles sont en phase avec les troisièmes vibrations utiles,
--- et que chacun des premiers, deuxièmes, troisièmes et quatrièmes signaux de vibration présente respectivement une deuxième composante de signal utile (sN12 ; sN22 ; sN32 ; sN42), à savoir une composante de signal sinusoïdale respective avec une fréquence correspondant à la deuxième fréquence utile,
- et l'électronique de système de mesure étant conçue :
-- dans le premier mode de fonctionnement, pour recevoir et évaluer les premiers, deuxièmes, troisièmes et quatrièmes signaux de vibration, à savoir pour déterminer des valeurs mesurées quantifiant (successivement dans le temps) l'au moins une grandeur physique de mesure à l'aide des signaux de vibration, notamment à l'aide d'au moins respectivement l'une des composantes de signal utiles,
-- ainsi que, dans le deuxième mode de fonctionnement, pour recevoir et évaluer les premiers, deuxièmes, troisièmes et quatrièmes signaux de vibration, à savoir à l'aide des premiers et troisièmes et/ou deuxièmes et quatrièmes signaux de vibration reçus dans le deuxième mode de fonctionnement, notamment à l'aide d'une amplitude respective de la deuxième composante de signal utile (sN12, sN32) des premiers et troisièmes signaux de vibration et/ou d'une amplitude respective de la deuxième composante de signal utile (sN22, sN42) des deuxièmes et quatrièmes signaux de vibration et/ou d'un angle de phase respectif des deuxièmes composantes de signal utile (sN12, sN32) des premiers et troisièmes signaux de vibration et/ou d'un angle de phase respectif des deuxièmes composantes de signal utile (sN22, sN42) des deuxièmes et quatrièmes signaux de vibration, pour étalonner le système de mesure et/ou pour vérifier le système de mesure ou détecter la présence d'un défaut du système de mesure, notamment réduisant une capacité de fonctionnement du système de mesure et/ou provoquant un dysfonctionnement du système de mesure et/ou réduisant une intégrité d'au moins un des premiers, deuxièmes, troisièmes et quatrièmes signaux de vibration ou de valeurs mesurées obtenues à partir desdits signaux et/ou provoquant une erreur de mesure de valeurs mesurées obtenues à partir d'au moins un des premiers, deuxièmes, troisièmes et quatrièmes signaux de vibration, notamment en raison d'un dépôt sur une face intérieure de la paroi d'un ou de plusieurs des tubes et/ou en raison d'une réduction de l'épaisseur de la paroi d'un ou de plusieurs des tubes et/ou en raison d'un vieillissement d'un ou de plusieurs des capteurs de vibrations et/ou des excitateurs de vibrations et/ou d'un assemblage et/ou d'un montage défectueux du transducteur.

2. Système de mesure selon l'une des revendications précédentes, pour lequel l'électronique (20) du système de mesure est conçue pour fournir les premières et/ou deuxièmes composantes de courant utiles des premiers et deuxièmes signaux d'attaque avec une fréquence (de courant alternatif) qui s'écarte d'une fréquence de résonance, fr1, du premier tube et/ou d'une fréquence de résonance, fr2, du deuxième tube de moins de 1 % de la même fréquence de résonance, fr1, et/ou de moins de 1 Hz.

3. Système de mesure selon l'une des revendications précédentes, pour lequel les premiers et deuxièmes tubes présentent au moins une fréquence de résonance commune, fr12, et l'électronique du système de mesure étant conçue pour fournir, dans le premier mode de fonctionnement, les premières composantes de courant utiles des premiers et deuxièmes signaux d'attaque respectivement à une fréquence (de courant alternatif) qui s'écarte de la même fréquence de résonance commune, fr12, des premiers et deuxièmes tubes de moins de 1 % de la même fréquence de résonance, fr12, et/ou de moins de 1 Hz.

4. Système de mesure selon l'une des revendications précédentes,
- pour lequel le transducteur possède un premier mode naturel de vibration de flexion dans lequel les premiers et deuxièmes tubes peuvent effectuer des vibrations mécaniques en opposition de phase (mode antiparallèle), et l'électronique du système de mesure étant conçue pour injecter, dans le premier mode de fonctionnement, des premiers et deuxièmes signaux d'attaque imposant des vibrations mécaniques en opposition de phase dans les premiers et deuxièmes excitateurs de vibrations, notamment pour fournir les premières composantes de courant utiles des premiers et deuxièmes signaux d'attaque à une fréquence (de courant alternatif) qui s'écarte d'une fréquence de résonance, fr12, du premier mode naturel de vibration de flexion de moins de 1 % de la fréquence de résonance et/ou de moins de 1 Hz, et/ou avec des angles de phase provoquant une première différence de phase d'entraînement de 180° ;
- et pour lequel le transducteur possède un deuxième mode naturel de vibration de flexion, notamment un mode fondamental de vibration de flexion, dans lequel les premiers et deuxièmes tubes peuvent exécuter des vibrations mécaniques en phase ou exécutent des vibrations mécaniques en phase (mode parallèle), et l'électronique du système de mesure étant conçue pour injecter, dans le deuxième mode de fonctionnement, des premiers et deuxièmes signaux d'excitation imposant des vibrations mécaniques en opposition de phase dans les premiers et deuxièmes excitateurs de vibrations, notamment pour fournir les premières composantes de courant utiles des premiers et deuxièmes signaux d'attaque à une fréquence (de courant alternatif) qui s'écarte d'une fréquence de résonance, fr22, du deuxième mode naturel de vibration de flexion de moins de 1 % de la fréquence de résonance et/ou de moins de 1 Hz, et/ou avec des angles de phase provoquant une deuxième différence de phase d'entraînement de 0°.

5. Système de mesure selon l'une des revendications précédentes, pour lequel l'électronique de système de mesure est conçue pour détecter - à l'aide d'au moins l'un des premiers, deuxièmes, troisièmes et quatrièmes signaux de vibration reçus dans le deuxième mode de fonctionnement, notamment à savoir leur deuxième composante de signal utile respective - la présence d'un défaut, notamment réduisant une capacité de fonctionnement du système de mesure et/ou provoquant un dysfonctionnement du système de mesure et/ou réduisant une intégrité d'au moins un des premiers, deuxièmes, troisièmes et quatrièmes signaux de vibration ou de valeurs mesurées obtenues à partir desdits signaux et/ou provoquant une erreur de mesure de valeurs mesurées obtenues à partir desdits signaux, notamment en raison d'un dépôt sur une face intérieure de la paroi d'un ou de plusieurs des tubes et/ou en raison d'une réduction de l'épaisseur de la paroi d'un ou de plusieurs des tubes et/ou en raison d'un vieillissement d'un ou de plusieurs des capteurs de vibrations et/ou des excitateurs de vibrations.

6. Système de mesure selon l'une des revendications précédentes, pour lequel chacune des premières composantes de signal utiles des premiers, deuxièmes, troisièmes et quatrièmes signaux de vibration présente respectivement un angle de phase dépendant d'un débit massique d'un produit s'écoulant à travers l'arrangement de tubes ou le transducteur formé dudit arrangement.

7. Système de mesure selon la revendication précédente, pour lequel l'électronique de système de mesure (20) est conçue pour déterminer, notamment pour calculer, au moins dans le premier mode de fonctionnement, à l'aide d'une première différence de phase (de mesure), à savoir une différence entre l'angle de phase de la première composante de signal utile du premier signal de vibration et l'angle de phase de la première composante utile du deuxième signal de vibration et/ou à l'aide d'une deuxième différence de phase (de mesure), à savoir une différence entre l'angle de phase de la première composante de signal utile du troisième signal de vibration et l'angle de phase de la première composante de signal utile du quatrième signal de vibration, des valeurs mesurées de débit massique, à savoir des valeurs mesurées représentant le débit massique du produit à mesurer qui s'écoule.

8. Système de mesure selon les revendications 5 et 7, pour lequel le défaut du système de mesure comprend une modification, notamment irréversible, d'un point zéro (d'échelle) du système de mesure, lequel point zéro correspond à une première et/ou une deuxième différence de phase mesurée lorsque le produit est au repos, et/ou une sensibilité (de mesure) du système de mesure, laquelle sensibilité correspond à une modification de la première et/ou de la deuxième différence de phase (de mesure) rapportée à une modification du débit massique.

9. Système de mesure selon la revendication précédente,
- pour lequel le défaut du système de mesure comprend une modification, notamment irréversible, d'une ou de plusieurs propriétés de vibration de l'arrangement de tubes, notamment en raison d'une réduction d'une épaisseur de la paroi d'un ou de plusieurs des tubes et/ou en raison d'une déformation plastique d'un ou de plusieurs des tubes et/ou en raison d'un dépôt sur une face intérieure de la paroi d'un ou de plusieurs des tubes et/ou en raison d'une fissure dans la paroi d'un ou de plusieurs des tubes ; et/ou
- pour lequel le défaut du système de mesure comprend une modification, notamment irréversible, d'une ou de plusieurs propriétés d'écoulement de l'arrangement de tubes, notamment en raison d'une réduction d'une section d'écoulement de l'arrangement de tubes, notamment suite à une obstruction d'un ou de plusieurs des tubes et/ou suite à un dépôt sur une face intérieure de la paroi d'un ou de plusieurs des tubes ; et/ou
- pour lequel le défaut du système de mesure comprend une modification, notamment irréversible, d'une ou de plusieurs propriétés de transducteur électromécanique, notamment en raison d'un vieillissement d'un ou de plusieurs des capteurs de vibrations et/ou des excitateurs de vibrations et/ou en raison d'une modification d'une liaison mécanique respective entre un ou plusieurs capteurs de vibrations ou un ou plusieurs excitateurs de vibrations et le tube respectif ; et/ou
- pour lequel le défaut du système de mesure comprend un montage et/ou un assemblage défectueux du transducteur ou du système de mesure formé dudit transmetteur.

10. Système de mesure selon l'une des revendications précédentes,
- pour lequel l'électronique de système de mesure est conçue pour obtenir ou déterminer, à partir de chacun des premiers, deuxièmes, troisièmes et quatrièmes signaux de vibration reçus dans le premier mode de fonctionnement, la première composante de signal utile respective, notamment à savoir une amplitude respective et/ou un angle de phase respectif ; et/ou
- pour lequel l'électronique du système de mesure est conçue pour obtenir ou déterminer, à partir de chacun des premiers, deuxièmes, troisièmes et quatrièmes signaux de vibration reçus dans le deuxième mode de fonctionnement, la deuxième composante de signal utile respective, notamment à savoir une amplitude respective et/ou un angle de phase respectif ; et/ou
- pour lequel l'électronique de système de mesure est conçue pour déterminer, à l'aide des premiers et troisièmes signaux de vibration reçus dans le deuxième mode de fonctionnement, une première différence d'amplitude (de contrôle), à savoir une différence entre une amplitude des deuxièmes composantes de signal utiles des premiers et troisièmes signaux de vibration, notamment pour la comparer à au moins une valeur de référence représentant une capacité de fonctionnement réduite ou un défaut du transducteur, ou pour émettre un message, notamment déclaré comme alarme (de défaut), en cas d'écart trop important, à savoir dépassant une valeur de référence prédéfinie à cet effet ; et/ou
- pour lequel l'électronique de système de mesure est conçue pour déterminer, à l'aide des premiers et troisièmes signaux de vibration reçus dans le deuxième mode de fonctionnement, une première différence de phase (de contrôle), à savoir une différence entre un angle de phase des deuxièmes composantes de signal utiles des premiers et troisièmes signaux de vibration, notamment pour la comparer à au moins une valeur de référence représentant une capacité de fonctionnement réduite ou un défaut du transducteur ou pour émettre un message, notamment déclaré comme alarme (de défaut), en cas d'écart trop important, à savoir dépassant une valeur de référence prédéfinie à cet effet ; et/ou
- pour lequel l'électronique de système de mesure est conçue pour déterminer, à l'aide des deuxièmes et quatrièmes signaux de vibration reçus dans le deuxième mode de fonctionnement, une deuxième différence d'amplitude (de contrôle), à savoir une différence entre une amplitude des deuxièmes composantes de signal utiles des deuxièmes et quatrièmes signaux de vibration, notamment pour la comparer à au moins une valeur de référence représentant une capacité de fonctionnement réduite ou un défaut du transducteur ou pour émettre un message, notamment déclaré comme alarme (de défaut), en cas d'écart trop important, à savoir dépassant une valeur de référence prédéfinie à cet effet ; et/ou
- pour lequel l'électronique de système de mesure est conçue pour déterminer, à l'aide des deuxièmes et quatrièmes signaux de vibration reçus dans le deuxième mode de fonctionnement, une deuxième différence de phase (de contrôle), à savoir une différence entre un angle de phase des deuxièmes composantes de signal utiles des deuxièmes et quatrièmes signaux de vibration, notamment pour la comparer à au moins une valeur de référence représentant une capacité de fonctionnement réduite ou un défaut du transducteur ou pour émettre un message, notamment déclaré comme alarme (de défaut), en cas d'écart trop important, à savoir dépassant une valeur de référence prédéfinie à cet effet ; et/ou
- pour lequel l'électronique de système de mesure est conçue pour générer, dans le premier mode de fonctionnement, les premiers et deuxièmes signaux d'attaque avec une première différence d'amplitude d'entraînement, notamment prédéfinissable et/ou variable, à savoir une différence, notamment nulle, entre une amplitude des premières composantes de courant utiles (eN11) du premier signal d'attaque et une amplitude des premières composantes de courant utiles (eN21) du deuxième signal d'attaque, et pour les injecter dans le premier ou le deuxième excitateur de vibrations ; et/ou
- pour lequel l'électronique de système de mesure est conçue pour générer, dans le deuxième mode de fonctionnement, les premiers et deuxièmes signaux d'attaque avec une deuxième différence d'amplitude d'entraînement correspondant notamment à la première différence d'amplitude d'entraînement et/ou prédéfinissable et/ou variable, à savoir une différence, notamment égale à zéro, entre une amplitude des deuxièmes composantes de courant utiles (eN12) du premier signal d'attaque et une amplitude des deuxièmes composantes de courant utiles (eN22) du deuxième signal d'attaque, et pour les injecter dans le premier ou le deuxième excitateur de vibrations ; et/ou
- pour lequel l'électronique de système de mesure est conçue - à l'aide des premiers et deuxièmes signaux d'excitation injectés dans le deuxième mode de fonctionnement, notamment à l'aide des deuxièmes composantes de courant utiles (eN12, eN2) des premiers et deuxièmes signaux d'excitation (e1, e2), ainsi qu'à l'aide des premiers et troisièmes signaux de vibration, notamment à l'aide des deuxièmes composantes de signal utiles des premiers et troisièmes signaux de vibration, et/ou des deuxièmes et quatrièmes signaux de vibration, notamment à l'aide des deuxièmes composantes de signal utiles des deuxièmes et quatrièmes signaux de vibration - pour déterminer une atténuation (modale) des premiers et deuxièmes tubes pour les deuxièmes vibrations utiles, notamment pour comparer avec au moins une valeur de référence représentant une capacité de fonctionnement réduite ou un défaut du transducteur ou pour émettre un message, notamment déclaré comme alarme (de défaut), en cas d'écart trop important, à savoir dépassant une valeur de référence prédéfinie à cet effet.

11. Système de mesure selon l'une des revendications précédentes, pour lequel l'électronique de système de mesure est conçue pour calculer, à l'aide d'un ou de plusieurs des premiers, deuxièmes, troisièmes et quatrièmes signaux de vibration reçus dans le deuxième mode de fonctionnement, une ou plusieurs valeurs caractéristiques pour au moins un indice (MK1) du système de mesure, lequel indice caractérise un état de fonctionnement, notamment une fonction système (fonction de transmission) inhérente au système de mesure, déterminant une ou plusieurs dépendances fonctionnelles d'un ou de plusieurs des signaux de vibration par rapport à un ou plusieurs des signaux d'attaque, ou déterminant une capacité de fonctionnement du système de mesure, notamment de telle sorte que l'indice du système de mesure dépend d'un ou de plusieurs paramètres d'une fonction du système de mesure faisant la liaison entre au moins les deuxièmes composantes de courant utiles des premiers et deuxièmes signaux d'attaque et au moins l'une des deuxièmes composantes de signal utiles des premiers, deuxièmes, troisièmes et quatrièmes signaux de vibration.

12. Système de mesure selon la revendication 11, pour lequel l'indice (MK1) du système de mesure dépend d'un rapport d'amplitude (du système) entre un écart (Δe), notamment absolu ou relatif, d'une amplitude de la deuxième composante de courant utile du deuxième signal d'attaque (e2) par rapport à une amplitude des deuxièmes composantes de courant utiles du premier signal d'attaque (e1) et un écart (Δs13), notamment absolu ou relatif, d'une amplitude de la deuxième composante de signal utile du troisième signal de vibration par rapport à une amplitude de la deuxième composante de signal utile du premier signal de vibration et/ou d'un écart (Δs24), notamment absolu ou relatif, d'une amplitude de la deuxième composante de signal utile du quatrième signal de vibration par rapport à une amplitude de la deuxième composante de signal utile du deuxième signal de vibration, notamment d'une somme (Δs13+Δs24) des écarts des deuxièmes composantes de signal utiles, notamment quantifie le rapport d'amplitude (du système) (Δs13/Δe ; Δs24/Δe ; Δs13/Δe+Δs24/Δe).

13. Système de mesure selon la revendication 11, pour lequel l'indice (K1) du système de mesure dépend d'une différence de phase (du système) entre la deuxième composante de signal utile (sN12 ; sN22) d'au moins l'un des premiers et deuxièmes signaux de mesure de vibration, notamment d'une somme (sN12+sN22) de la deuxième composante de signal utile (sN12, sN22) des premiers et deuxièmes signaux de vibration, et la deuxième composante de signal utile (sN32 ; sN42) d'au moins l'un des troisièmes et quatrièmes signaux de mesure de vibration, notamment d'une somme (sN32+sN42) de la deuxième composante de signal utile des troisièmes et quatrièmes signaux de vibration, quantifie notamment la différence de phase (du système).

14. Système de mesure selon l'une des revendications 11 à 13, pour lequel l'électronique de système de mesure (20) est conçue pour comparer une ou plusieurs valeurs caractéristiques pour l'indice du système de mesure respectivement avec une ou plusieurs valeurs de référence déterminées pour l'indice du système de mesure, notamment par le fabricant du système de mesure et/ou lors de la fabrication et/ou d'une mise en service du système de mesure, notamment une ou plusieurs valeurs de référence représentant une capacité de fonctionnement réduite du transducteur et/ou une ou plusieurs valeurs de référence représentant un dysfonctionnement du transducteur et/ou une ou plusieurs valeurs de référence représentant un transducteur défectueux, notamment pour évaluer et/ou quantifier un écart d'une ou plusieurs des valeurs caractéristiques par rapport à une ou plusieurs des valeurs de référence.

15. Système de mesure selon la revendication précédente, pour lequel l'électronique de système de mesure (20) est conçue pour déterminer si une ou plusieurs valeurs caractéristiques pour l'indice du système de mesure (MK1) sont supérieures à l'au moins une valeur de référence pour l'indice du système de mesure, notamment si une ou plusieurs valeurs caractéristiques pour l'indice du système de mesure sont supérieures à une ou plusieurs valeurs de référence représentant une capacité de fonctionnement réduite du transducteur et/ou sont supérieures à une ou plusieurs valeurs de référence représentant un dysfonctionnement du transducteur et/ou sont supérieures à une ou plusieurs valeurs de référence représentant un transducteur qui n'est plus intact, pour émettre un message le signalant, lequel message est notamment déclaré comme alarme (de dysfonctionnement).

16. Système de mesure selon l'une des revendications précédentes, pour lequel l'électronique de système de mesure (20) comporte une mémoire de données électronique non volatile (EEPROM), laquelle est conçue pour conserver des données numériques, notamment même en l'absence d'une tension de service appliquée, notamment à savoir pour mémoriser une ou plusieurs valeurs de référence déterminées au préalable pour un indice du système de mesure.

17. Système de mesure selon l'une des revendications 14 à 15, respectivement en liaison avec la revendication 16, pour lequel une ou plusieurs valeurs de référence pour l'indice du système de mesure, déterminées notamment par le fabricant du système de mesure et/ou lors de la fabrication du système de mesure et/ou pendant le fonctionnement du système de mesure, notamment à savoir une ou plusieurs valeurs de référence représentant une capacité de fonctionnement réduite du transducteur et/ou à savoir une ou plusieurs valeurs de référence représentant un dysfonctionnement du transducteur, sont mémorisées dans la mémoire de données électronique

18. Système de mesure selon la revendication précédente, pour lequel l'électronique de système de mesure (20) est conçue pour comparer une ou plusieurs valeurs caractéristiques pour l'indice du système de mesure respectivement avec une ou plusieurs valeurs de référence pour l'indice du système de mesure, lesquelles valeurs sont mémorisées dans la mémoire de données.

19. Système de mesure selon la revendication précédente,
- pour lequel le premier et le deuxième excitateur de vibrations (31) sont reliés mécaniquement à la structure de support ; et/ou
- pour lequel le premier, le deuxième, le troisième et le quatrième capteur de vibrations sont reliés mécaniquement à la structure de support.

20. Système de mesure selon l'une des revendications précédentes,
- pour lequel le premier excitateur de vibrations est conçu pour convertir une puissance électrique avec un courant électrique variable dans le temps en une puissance mécanique de telle sorte qu'une force d'entraînement variable dans le temps agit sur le premier tube en un point d'attaque formé au moyen du premier excitateur de vibrations sur le premier tube relié mécaniquement audit excitateur ; et/ou
- pour lequel le deuxième excitateur de vibrations est conçu pour convertir une puissance électrique avec un courant électrique variable dans le temps en une puissance mécanique de telle sorte qu'une force d'entraînement variable dans le temps agit sur le deuxième tube en un point d'attaque formé au moyen du deuxième excitateur de vibrations sur le deuxième tube relié mécaniquement audit excitateur ; et/ou
- pour lequel le premier excitateur de vibrations (31) n'est pas relié mécaniquement au deuxième tube ou ne présente pas de composant relié mécaniquement au deuxième tube ; et/ou
- pour lequel le deuxième excitateur de vibrations (31) n'est pas relié mécaniquement au premier tube ou ne présente aucun composant relié mécaniquement au premier tube ; et/ou
- pour lequel le circuit d'excitation ne comporte pas d'autre excitateur de vibrations relié mécaniquement au premier tube que le premier excitateur de vibrations ; et/ou
- pour lequel le circuit d'excitation ne comporte pas d'autre excitateur de vibrations relié mécaniquement au deuxième tube que le deuxième excitateur de vibrations.
